(19) Europäisches Patentamt
European Patent Office
Office européen des brevets

(11) EP 1 447 785 A1

(12) **EUROPEAN PATENT APPLICATION**
published in accordance with Art. 158(3) EPC

(43) Date of publication:
**18.08.2004 Bulletin 2004/34**

(21) Application number: **02788594.6**

(22) Date of filing: **30.10.2002**

(51) Int Cl.[7]: **G09F 9/00**, G09F 9/30, F21V 8/00, G02F 1/1335, G02B 5/20, G02B 5/22, G02B 5/30, G02B 1/11, G02B 5/02, G02B 3/00

(86) International application number:
**PCT/JP2002/011323**

(87) International publication number:
**WO 2003/038787 (08.05.2003 Gazette 2003/19)**

(84) Designated Contracting States:
**AT BE BG CH CY CZ DE DK EE ES FI FR GB GR IE IT LI LU MC NL PT SE SK TR**

(30) Priority:
**31.10.2001 JP 2001335170**
**18.12.2001 JP 2001384989**
**25.12.2001 JP 2001392363**
**23.04.2002 JP 2002121235**
**10.07.2002 JP 2002201606**
**30.08.2002 JP 2002253103**
**24.09.2002 JP 2002277803**

(71) Applicant: **Mitsubishi Chemical Corporation**
**Tokyo 108-0014 (JP)**

(72) Inventors:
- **SUGA, Yoshinori,**
  **Mitsubishi Chemical Corporation**
  **Yokkaichi-shi, Mie 510-0848 (JP)**
- **OZAWA, Tetsuo,**
  **c/o Mitsubishi Chemical Corporation**
  **Yokkaichi-shi, Mie 510-0848 (JP)**
- **FUJIWARA, Eisuke,**
  **Mitsubishi Chemical Corporation**
  **Kitakyushu--shi, Fukuoka 806-0004 (JP)**

(74) Representative: **Grünecker, Kinkeldey,**
**Stockmair & Schwanhäusser Anwaltssozietät**
**Maximilianstrasse 58**
**80538 München (DE)**

(54) **DISPLAY APPARATUS**

(57) In a display device having a color filter, a color material dispersed layer having the function of absorbing light of specific wavelengths in the visible light beam region is provided on the optical path so that the light absorption peak of this color material dispersed layer in the visible light beam region is located in the range of ±30 nm from the overlap point in the spectral transmission properties of each color of the color filter. Further, the color material dispersed layer is provided on a filter as a constituent part of the back light of the display. This filter has, as its substrate, a thermoplastic resin having a thickness of 30 - 350 micrometers and has a transmission in the maximum absorption wavelength in the color material dispersed layer of not more than 75%. The back light has, as its light source, a fluorescent lamp comprising a three band tube, and its emission color is subjected to color correction by an auxiliary filter having an organic color material dispersed layer provided on the illuminating light path.

Fig.35

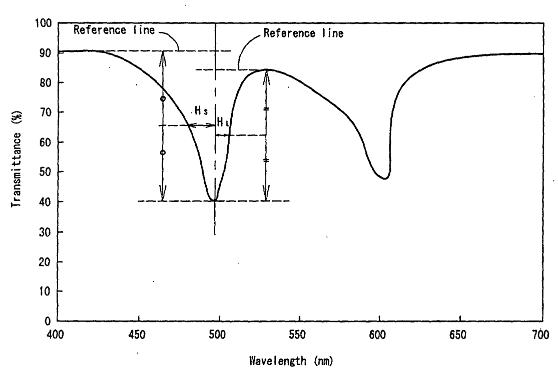


EP 1 447 785 A1

## Description

Display Device

Technical Field to which the Present Invention Belongs

This invention relates to a novel liquid crystal display device that makes brilliant display possible, and particularly a liquid crystal display device that is extremely superior in color reproducibility and can be used for applications where cathode-ray tubes have been mainly used such as applications for TV broadcasting display.
Also, the present invention relates to a film for a filter, a light condensing film and a polarized light film for improving the image properties of a liquid crystal display device, and a surface light source device using these films, and more specifically to a technique for providing a new illuminating optical system which increases color reproducibility of images in a liquid crystal display device.

Background of the Invention

In recent years, as display devices such as monitors for personal computers and thin type TV's, many transmission type active matrix drive liquid crystal display devices are used. Also, as applications for cell phones and Personal Digital Assistants (PDA), which are used outdoors, semi-transmission type active matrix drive liquid crystal displays are often used.
Further, as novel thin display devices, displays using electroluminescence (organic and inorganic) are being proposed. In particular, active matrix drive organic electroluminescence displays consume less power and can be easily made thin, so that they are expected to spread rapidly.
With display devices represented by them, in order to provide full color representation, color filters are often used. In particular, recently, full color display devices having color filters obtained by a coloring matter dispersing method are becoming the mainstream in view of durability in a high-temperature process and light resistance. Since they are extremely low in power consumption and are lightweight and thin, they are spreading rapidly as standard display devices that replace conventional cathode ray tubes.
But if liquid crystal display devices are used for applications in which cathode-ray tubes have been mainly used, such as TV broadcasting, it has been pointed out that vividness of images is insufficient compared with cathode-ray tubes. In particular, they are decisively inferior in vividness of colors, which is one of the most important properties as color display devices, compared with cathode-ray tubes. This prevents spreading of liquid crystal displays.
As a suspected cause thereof, it can be pointed out that because color images are obtained by cutting specific spectra of the display light source with color filters, color purity is influenced by the characteristics of the light source and filters, as well as those of a polarizing plate and oriented film, so that it is inherently difficult to obtain high color purity compared with cathode-ray tubes and plasma displays in which light emission is obtained by simply exciting phosphor of each color of RGB (red/blue/green) by plasma discharge.
Moreover, since color filters are generally provided in a liquid crystal panel, polarization displacement in the filter portion has to be considered. Due to such circumstances peculiar to liquid crystal panels, there was naturally a limit in the method in which color reproducibility is improved by a color filter having sharp spectral properties.
Also, since the color purity of display devices having a color filter is inherently determined by a color filter, it is apparent that it is desirable to achieve high color reproducibility using color filters having sharp spectral transmission characteristics. But because problems concerning endurance performance in the manufacturing steps and light resistance limit the color materials usable to coloring matters which are inferior in color reproducibility. Thus, practically, it is extremely difficult to use color filters having sharp light transmitting properties.
On the other hand, in such liquid crystal display devices, normally, a surface light source device, that is, backlight is arranged behind a liquid crystal element. This surface light source device is for converting a linear light source such as a cold cathode fluorescent lamp to surface light.
Specifically, typical methods include one in which a light source is arranged right under a liquid crystal element (right under method), and one in which a light source is provided on side, and the light is converted to a surface light using a transparent light guide body such as an acrylic board to provide a surface light source (side-light method). Over the light outgoing surface of the surface light source device, a prism array is arranged to obtain desired optical properties.
Particularly, as a surface light source device which is thin and excellent in uniformity of brightness distribution, the side light type is preferable and often put to practical use.
As shown in Fig. 14, a typical side-light type surface light source device has a linear light source 2 arranged so as to extend along one side end of a base board comprising a transparent flat board, i.e. a light guide pipe 1, and a reflector 3 mounted so as to cover the linear light source 2 so that the direct light from the linear light source 2 and

the light reflected by the reflector 3 enter the light guide pipe 1 through one side end face as a light incoming surface 1a. One surface of the light guide pipe 1 serves as a light outgoing surface 1b. On the light outgoing surface 1b, a prism film 5 having a substantially triangular prism-like array (condensing elements) 4 formed on the surface is provided with its apexes facing observers. On the other hand, on the surface 1c, opposite to the light outgoing surface 1b of the light guide pipe 1, a light take-out mechanism 6 is provided in which numerous dots 6a are formed with light dispersing ink in a predetermined pattern. Further, on the surface 1c, on which is formed the light take-out mechanism 6 is formed and which is opposite the light outgoing surface 1b of the light guide pipe 1, a light reflecting sheet 7 is arranged adjacent the surface 1c.

Further, as another typical example of side-light type surface light source devices, there is one as shown in Fig. 15. In this device, the condensing film 5 having condensing elements 4 comprising a substantially triangular prism-like prism array formed on its surface is provided over the light outgoing surface 1b with the apexes facing the light outgoing surface 1b. And on the light outgoing surface 1b of the light guide body 1 or the surface 1c, which is opposite to the surface 1b, a light take-out mechanism 6 is provided. As the light take-out mechanism 6, an arrangement formed by numerous rough surface patterns in which the respective surfaces are formed into rough surfaces or by printed patterns 6b of white ink is typical.

Since these side-light type surface light source devices can effectively take out features of liquid crystal display devices that they are lightweight and thin, they are extremely frequently used as surface light source devices (backlights) for liquid crystal display devices such as portable personal computers, liquid crystal TVs, etc.

In liquid crystal display devices, as described above, the problem is that the ability to reproduce brilliant colors is still insufficient compared with Cathode-ray tubes. Thus, when images for which brilliant color reproducibility is required, such as landscape images, are displayed, they look poor.

One cause thereof is that as a light source for illuminating the liquid crystal panel from behind, illuminating light of which the light source is emission from a fluorescent member such as a cold cathode lamp or a hot cathode lamp is used. That is, since the emission spectrum distribution of a cold cathode lamp shows, as shown in Fig. 40, besides the wavelength range corresponding to RGB (red, green and blue), emission spectra near intermediate portions of the respective RGB wavelengths produced as sub-bands. This causes lowering of color reproducibility.

Such situations are phenomena that are often seen in display devices of which the light source is fluorescent emissions such as Cathode-ray tubes and plasma displays. If only improving phosphor is insufficient, a method is generally employed in which color purity is improved using a filter that cuts emissions of wavelengths positioned at intermediate points of these RGB colors.

But for liquid crystal display devices, since it is necessary to dispose such a filter function in a thin and lightweight back light source means, no method of simultaneously achieving uniformity of practical color purity, stability of yield and low cost has not yet been found.

Particularly in a side light type surface light source device, since only extremely thin space of not more than 5 mm in the total module thickness is available, in order to provide a filter function for cutting wavelengths positioned at intermediate points of the respective RGB colors in such extremely thin space, an extremely large number of problems arise. For example, as shown in Fig. 16, it is conceivable to arrange a filter portion 8 for cutting wavelengths positioned at intermediate points of the RGB colors near the light incoming surface 1a of the light guide body 1 to control the color purity. This method is apparently simple in structure. But since it is necessary to form the filter portion 8 on the light incoming surface 1a of the light guide body 1, which has a small thickness (e.g. about 2.0 mm), if small defects occur due to poor laminating positioning, bright lines or the like tend to be produced near the light source. This causes poor appearance frequently, thus lowering yield.

Further, for example, as shown in Fig. 12, a method is conceivable in which a filter portion 8 as described above is formed on the surface of the light guide pipe 1. This is relatively easy in production. But as shown in Fig. 12, in the case of the side light type, since illuminating light propagates in the light guide pipe 1, in the light outgoing area which is far from the light source 2, from a geometrical viewpoint, illuminating light that has passed the filter portion 8 many times goes out, so that differences in color tone and color purity are produced according to the distance from the light source 2. Especially if the size is large, it is seen as unevenness in color, and also, this markedly worsens optical efficiency (brightness).

As described above, if liquid crystal displays are used for displaying TV broadcasting or the like, for which cathode ray tubes have heretofore been mainly used, brilliance of images is insufficient compared with cathode ray tubes. In particular, they are decisively inferior to cathode ray tubes in brilliance of color representation, which is one of the most important properties as color display devices.

One cause thereof is that an extremely complicated process is passed in which optical units for obtaining full color display for a liquid crystal display convert illuminating light from a discharge lamp represented by e.g. a cold cathode lamp to a surface light source, and specific spectra of the illuminating light source are cut by a color filter to obtain color images. Properties of the light source, properties of the color filter, and properties of polarizing plates, oriented film, etc. get tangled in a complicated manner, thus influencing the color purity. Thus, compared to cathode

ray tubes and plasma displays, in which emissions are obtained simply by exciting phospher of the respective RGB (red, blue and green) colors by electron beams or plasma discharge, it is essentially difficult to obtain high color purity.

In particular, spectral characteristics of the color filter are important. Ideally, as shown in Fig. 44, it is apparent that it is desirable to achieve high color reproducibility using a color filter having sharp wavelength cutting properties. But in view of endurance performance in manufacturing steps and light resistance, it is extremely difficult to use dyes that are superior in wavelength cutting properties, as coloring materials particularly in an active matrix drive type panel. Also, while filters using physico-optical phenomena such as interference filters and hologram filters are also superior in wavelength cutting properties, manufacturing steps are extremely complicated, so that they are not practical from an economical viewpoint. After all, coloring materials usable are limited to the coloring matter family, which are inferior in wavelength cutting properties as shown in Fig. 43.

Further, cold cathode tubes, which are often used as light sources, are in the form in which phosphers are excited by ultraviolet radiation spectra emitted from e.g. mercury gas, and radiation spectra of RGB three wavelengths are mixed to obtain white light. But normally, the band structures of phosphers are extremely complicated. Thus it is not easy to design a phospher which emits only emission spectra corresponding purely to three colors, and frequently, as shown in Fig. 37, unintended emission spectra (sub-emissions) appear in wavelengths in intermediate portions of the respective wavelengths for three colors. This causes further worsening of color reproducibility.

In order to solve these problems, the present inventors repeatedly and ardently carried out studies, and as shown in Fig. 43, they found out that by designing an organic coloring matter having a narrow absorption peak in a wavelength band near the overlap point in a spectral transmission characteristic graph of the respective RGB colors of a coloring matter dispersion type color filter arranged in liquid crystal cells (point where the transmissions are identical) with the overlap point as a reference, and arranging an auxiliary filter in which is dispersed the organic coloring matter in the illuminating optical unit of the liquid crystal display device, spectral properties of the coloring matter dispersed type filter and those of the auxiliary filter by the dye overlap, so that the wavelength cutting properties improve and good effects are given to color reproducibility.

That is, by using an organic coloring matter dispersed layer, which is superior in the wavelength selecting performance, as the auxiliary filter, it is possible to expand the spectral property control range of the liquid crystal display device. But as a result of repeated studies concerning optical and practical properties of device properties, by merely providing an auxiliary filter having an organic coloring matter dispersed layer, the color reproducibility does improve, but brightness of the screen, which is another extremely important property as a display device, is markedly sacrificed. It became apparent that if trials are made to obtain practical brightness, the backlight light amount has to be markedly increased.

That is, if trials are made to obtain brightness equivalent to conventional, the electric power consumed by the backlight has to be markedly increased. As it stands, the favorable feature of a liquid crystal display device that the consumed electric power is low and loads given to the environment is small will be impaired, so that this does not lead to an improved commercial value of the product.

Object of the Invention

An object of the present invention is to solve such problems, and this invention relates to a display device having a color filter, in which color reproducibility is considered to be extremely important, and relates to a technique of providing a display device in which while maintaining high emission efficiency, the color reproducible range is increased, and even while the display is not illuminated, no uncomfortableness is felt on the display screen, and which is superior in design.

Another object of the present invention is to provide a condensing film that is high in color evenness in the display surface of the display device, easy to manufacture, and low-cost, and to provide a high-performance, easy-to-manufacture surface light source device for a liquid crystal display using the prism film.

Summary of the Invention

First, in order to provide a display device in which while maintaining high emission efficiency, uniformity is high in the display screen (low in unevenness of color), production is easy, the cost is low, and the color purity is high, a coloring matter dispersed layer having the function of absorbing light of specific wavelengths in the visible light beam band is provided in the optical path so that the light absorbing peak in the visible light beam band of the coloring matter dispersed layer will be positioned in the range of $\pm 30$ nm from the overlap point in the spectral transmission characteristics of the respective colors of the color filter, thereby making it possible to achieve not only improved front brightness but improved color reproducibility by improving the quality of the illuminating light beams with the coloring matter dispersed layer.

A light-absorbing layer having the function of absorbing light of specific wavelengths in the visible light beam

area on the optical path, as a constituent element for the back light of the display, may be provided on a film which is high -in uniformity in the display surface, easy to manufacture and low cost.

As this film, one may be used which comprises a thermoplastic resin having a thickness of 30 - 350 micrometers as a substrate, and having the function of absorbing specific wavelengths in the visible light beam band, in which the transmission in the maximum absorbing wavelengths of the coloring matter dispersed layer is not more than 75%.

In this invention, as coloring matters, it is possible to use organic dye.

Also, a typical example of the display device according to this invention is a liquid crystal display device.

In a liquid crystal display device, the dye dispersed layer can be provided on a film stuck on the surface of a glass base plate of a liquid crystal panel.

The film stuck on the surface of the glass base plate of the liquid crystal panel is a polarizing film and/or phase difference film and/or visibility angle expanding film. As the coloring matter dispersed layer provided in this film may be a dye dispersed resin coated on this film.

The film stuck on the surface of the glass base plate of the liquid crystal panel may be subjected to antiglare and/or anti-reflection treatment.

Contrast improving measures may be taken for the film stuck on the surface of the glass base plate of the liquid crystal panel by dyeing it substantially black.

The coloring matter dispersed layer may be provided in a film arranged in the backlight (surface light source device).

The coloring matter dispersed layer provided on the film arranged in the backlight may be formed by a dye dispersed resin coated on the film.

As for other features of the film of the present invention provided with the coloring matter dispersed layer, which has the function of absorbing light of specific wavelengths, if the film is arranged on the light emitting surface of the surface light source device with an air layer, protrusions and recesses are formed on the side of the film in contact with the light emitting surface, and the portion where such protrusions and recesses are formed is formed by a coating layer of substantially transparent beads.

Further, the film of the present invention is characterized in that it has such a light diffusing function as to have a haze in the range of 5%-90%, and that this light diffusing function is achieved by providing a coating layer of substantially transparent beads. Here, the above organic dye dispersed layer can be formed by dispersing an organic dye in the coating layer of transparent beads.

Further, for the film of the present invention, it is possible to form a substantially transparent coating layer of beads from a coating layer comprising a photo-setting resin or a thermosetting resin.

Such a coating layer of substantially transparent beads can be obtained by coating a solution in which a binder resin comprising a thermoplastic resin and an organic coloring matter are dispersed in a solvent, and vaporizing the solvent.

The dye dispersed layer is provided by dispersing an organic dye in the light guide body of the backlight.

This dye dispersed layer may be one in which dye dispersed in ink printed on the surface of the light guide body.

The light absorbing half band width of the light absorption peak in the visible light beam band is preferably not more than 60 nm.

The number of light absorption peaks in the visible light beam band comprising the dye dispersed layer is preferably not less than 1 and less than 3.

The dye dispersed layer preferably contains ultraviolet absorber and/or light stabilizer.

In order to prevent ultraviolet rays from reaching the dye dispersed layer, an ultraviolet absorbing layer may be provided on the light path.

As the color filter, a pigment dispersed type color filter may be used.

As the organic coloring matter, a squarylium-system and/or tetraazaporphyrin-system one may be used.

Further, in this invention, in order to provide a display device in which maintaining high light emitting efficiency, the color reproducibility range is expanded, no uncomfortableness is felt even when the display is not illuminated, and design is superior, in a display device having a color filter, a filter having a light absorption peak positioned in the range of ± 30 nm from the overlap point in the spectral transmission characteristics of the respective colors of the color filter is preferably provided in the transmission path of display light nearer to the light source than the color filter.

In a display device having a color filter provided with a polarizing plate on its front surface, a filter having a light absorption peak positioned in the range of ± 30 nm from the overlap point in the spectral transmission characteristics of each color of the color filter is preferably provided nearer to the light source than the polarizing plate at the surface on the transmission path of display light.

Further, in the present invention, by providing a condensing film on the light outgoing surface of the backlight (surface light source device), even in a liquid crystal panel having a color filter, high front brightness is obtained. Also, by the coloring matter dispersed layer in which an organic dye having suitably controlled transmission spectra is dispersed, the quality of illuminating light improves, so that it is possible to achieve not only improved front brightness but

improved color reproducibility.

The condensing film of the present invention is used for a liquid crystal display device having a color filter, is formed of a synthetic resin having condensing elements formed on the surface, and has a light absorption peak positioned in the range of ±30 nm from the overlap point in the spectral transmission characteristics of the respective colors of the color filter.

The light absorption peak can be formed by dispersing an organic dye in the synthetic resin having the condensing elements formed on the surface.

The condensing elements can be provided in the form of a prism array and/or a lenticular lens array and/or a corrugated array and/or a microlens array and/or a pyramic array.

The condensing elements may be formed by proving a coating of substantially spherical beads having a lens function.

Further, on the surface opposite to the surface where the condensing elements of the condensing film are provided, ruggedness for preventing adhesion may be formed.

The condensing film can be formed by biaxially stretched polyethylene terephthalate and/or biaxially stretched polypropylene.

In the present invention, the condensing film means a film provided on the light outgoing surface of the surface light source device and having the function of improving brightness in the normal direction of the surface light source device.

Further, in order to suppress phenomena by which color purity worsens, it is possible to use an organic dye having an extremely narrow light absorption half band width in a polarizing film to form an area where an organic dye that absorbs only light of specific wavelengths in the visible light beam band is dispersed, thereby imparting the function, so to speak, as a second color filter to achieve high color reproducibility.

In this case, it is designed such that the position of the light absorption peak due to the area in which the organic dye is dispersed is a position as near as possible to the point where the spectral transmission curves of the respective colors of the color filter overlap to efficiently suppress worsening of color purity resulting from mixing of illuminating light spectra at the shoulder portion of the color filter.

The polarizing film used for a transparent type or a semitransparent type display is characterized in that it has the function of absorbing light of specific wavelengths in the visible light beam band comprising the area in which the organic dye is dispersed, and the light absorbing half band width of the organic dye corresponding to each specific wavelength is not more than 60 nm.

A resin coating layer may be provided on the surface of the polarizing film and the organic dye may be dispersed in the resin coating layer.

The area in which the organic dye is dispersed may be one obtained by dispersing an organic dye in an adhesive provided in the polarizing film.

The polarizing film is preferably one having such a light diffusing function as to have a diffusion angle of 1° to 120°.

Next, in a backlight (surface light source device) which uses a fluorescent lamp comprising a three-band tube as a light source and which is used for a liquid crystal display device in which the balance between the color reproducibility and brightness is considered important, the three-band tube is relatively strong in the emission intensity of green, emission colors represented on the x-y chromaticity figure are in the range of x = 0.24 to 0.35 and y = 0.25 to 0.39, a filter having an organic dye dispersed layer is provided on the illuminating light path of the surface light source device, and the emission color of the backlight (surface light source device) turn white due to color correction by the filter, so that even though independency of the three primary colors is high, it is possible to obtain a surface light source device which is high in brilliance.

The light transmission spectra of the filter having the organic dye dispersed layer preferably have the absorption peak near the sub-emission peak of the fluorescent lamp.

Further, for one primary color or two primary colors of the three band tube, which relatively increases the intensity, color components that are relatively large in the emission intensity relative to the input power are selected.

Further, regarding emission colors of the three band tube, if color coordinates indicated on the x-y chromaticity figure are x and y, and regarding emission colors of the three band tube, if the emission colors on the x-y chromaticity figure as measured through the color-correcting filter are x' and y', the value of Δy in the formula:

$$\Delta y = y - y'$$

$$\Delta y > 0.01.$$

Further, in a liquid crystal display device having an organic dye dispersed layer in the illuminating optical unit, the organic dye dispersed layer has an absorption peak in wavelengths near an intermediate portion of the respective RGB colors, and by controlling the shape of the absorption peak such that the absorption rate decreases quickly on the long-wavelength side, and it decreases gradually on the short-wavelength side, it is possible to provide a liquid crystal display device in which the power consumption is kept small while widely maintaining the color reproducible range, manufacture is easy and the cost is low.

More specifically, in a liquid crystal display device having an organic dye dispersed layer in the illuminating optical unit, the organic dye dispersed layer has an absorption peak in wavelengths at an intermediate portion of the respective RGB colors, and concerning the absorption peak,

$$H_S > H_L$$

Wherein $H_S$ is the half band width on the short-wavelength side and $H_L$ is the half band width on the long-wavelength side.

For the illuminating light source of the liquid crystal display device, a fluorescent lamp comprising a three band tube may be used. The organic dye dispersed layer is preferably provided near to the illuminating light source than to the polarizing film on the foremost surface.

Concerning the emission colors indicated on the x-y chromaticity graph of the illuminating light source, let us assume that the measured values before passing the organic dye dispersed layer are x and y, and the measured values after passing the organic color material dispersed layer are x' and y',

$$\Delta y = |y-y'|$$

preferably $\Delta y > 0.01$.

Brief description of the drawings

Fig. 1 is a schematic exploded perspective view of the transmission type liquid crystal display device, which is one embodiment of the display device according to this invention. Fig. 2 is a schematic exploded perspective view of the reflecting type liquid crystal display device, which is one embodiment of the display device according to this invention. Fig. 3 is a schematic structural view of one embodiment of the liquid crystal display device having a color filter according to the present invention. Fig. 4 is a schematic structural view of another embodiment of the liquid crystal display device having a color filter of the present invention. Fig. 5 is a schematic structural view of another embodiment of the liquid crystal display device of the present invention. Fig. 6 is a schematic structural view of one embodiment of the liquid crystal display device of the present invention. Fig. 7 is a schematic structural view of one embodiment of the liquid crystal display device of the present invention. Fig. 8 is a perspective view schematically showing a main portion in a surface light source device for the liquid crystal display device of the present invention. Fig. 9 is a schematic sectional view showing one example of the surface light source device. Fig. 10 is a schematic exploded perspective view showing one example of the surface light source device. Fig. 11 is a schematic sectional view of one embodiment of the surface light source device of the present invention. Fig. 12 is a schematic sectional view showing an example of a surface light source device having a filter provided on the surface of the light guide body. Fig. 13 is a schematic sectional view showing a directly-under type surface light source device. Fig. 14 is a schematic sectional view showing one example of the surface light source device of the present invention. Fig. 15 is a schematic sectional view showing another example of the surface light source device of the present invention. Fig. 16 is a schematic sectional view showing a conventional surface light source device. Fig. 17 is a schematic partial sectional view of a surface light source device showing an example of use of the condensing film according to the present invention. Fig. 18 is a schematic sectional view showing another example of the surface light source device according to the present invention. Fig. 19 is a schematic sectional view showing one example of a film having a color material dispersed layer in the present invention. Fig. 20 is a schematic sectional view showing one example of a film having a color material dispersed layer in the present invention. Fig. 21 is a schematic sectional view showing one example of a film having a color material dispersed layer in the present invention. Fig. 22 is a schematic sectional view showing one example of a film having a color material dispersed layer in the present invention. Fig. 23 is a schematic sectional view showing one example of a film having a color material dispersed layer in the present invention. Fig. 24 is a partially enlarged schematic sectional view of an organic dye dispersed layer provided on the surface of a substrate film in the light adjusting film shown in Fig. 22. Fig. 25 is a schematic sectional view of one embodiment of the condensing film according to the present invention. Fig. 26 is a schematic sectional view of another embodiment of the condensing film according to

the present invention. Figs. 27 (a), (b) are schematic sectional views of the surface light source device showing the function of the condensing film. Figs. 28 (a)-(j) are schematic views showing respective examples of the light takeout mechanisms. Fig. 29 is a view schematically showing respective forms of light takeout mechanisms formed on the light guide pipe of the surface light source device on which the film according to the present invention is arranged. Fig. 30 is a view showing the arrangement of fine circular patterns comprising rough surfaces used in the surface light source devices described in the embodiments. Figs. 31 (a), (b), (c) are enlarged perspective views of the condensing elements formed on the condensing film. Figs. 32 (a), (b) are explanatory views of the diffusion angle. Fig. 33 is a characteristic view showing a spectral transmission curve by the film according to the present invention. Fig. 34 is a view showing characteristics of spectral transmission (absorption rate) of the organic coloring matter dispersed layer in the present invention. Fig. 35 is a characteristic view of transmission spectra of the organic coloring matter dispersed layer provided on the liquid crystal display of the present invention. Fig. 36 is a view showing transmission spectra of the organic coloring matter dispersed layer arranged on the surface light source device of the present invention. Fig. 37 is a characteristic view of transmission spectra of the organic coloring matter dispersed layer shown as Comparative Example 7, which has an asymmetrical distribution. Fig. 38 is a characteristic view of transmission spectra of an organic coloring matter dispersed layer preferable as the present invention, which has an asymmetrical distribution. Fig. 39 is a characteristic view of transmission spectra of the organic coloring matter dispersed layer shown as Comparative Example 6, which has an asymmetrical distribution. Fig. 40 is a view showing emission spectra of a general cold cathode tube. Fig. 41 is a view showing emission spectra of a cold cathode tube used in the surface light source device of the present invention and having spectra in which only the green component is selectively intensified. Fig. 42 is a view showing emission spectra in which emission spectra of a cold cathode tube in which the green component is intensified is combined with an organic coloring matter dispersed layer. Fig. 43 is a view showing a transmission curve of a general coloring matter dispersed type color filter. Fig. 44 is a spectral characteristic view of an ideal color filter.

Detailed Description of the Present Invention

Hereinbelow, the embodiments of the liquid crystal display device according to this invention will be described.

Fig. 1 is a schematic view showing a sectional structure of the transmission type display device according to one embodiment of this invention. Fig. 2 is a schematic view showing a section of the reflection type liquid crystal display device according to one embodiment of this invention.

The transmission type liquid crystal display device shown in Fig. 1 comprises a back light (surface light source device) 11, and a liquid crystal panel 10 mounted on the top surface of the back light 11.

The back light 10 comprises a light guide pipe 1 which emits light entering through a light-incident surface 1a in the form of surface light, a linear light source 2 such as a cold-cathode tube, provided at one side of the light-incident surface 1a of the light guide member 1, a reflector 3 provided on the back of the light source 2, a light-diffusing sheet 8 provided on a light-emitting surface 1b of the light guide member 1, and a condensing film 5 formed with condensing elements 4 such as prisms on the surface. On the side opposite to the light-emitting surface 1b of the light guide pipe 1, a light-reflecting film 7 is provided.

The liquid crystal panel 10 is provided on the top surface of the back light 11 and is provided, upwardly from the back light 11, with a polarizing film 24, glass substrate 23, oriented film 25, liquid crystal layer 22, oriented film 26, color filter 21, glass substrate 20, polarizing film 19, film 18 forming the filter according to this invention, and antireflection/ultraviolet absorbing layer 27.

The reflection type liquid crystal display device 30 shown in Fig. 2 is provided, from below, with a glass substrate 23, reflecting film 28, oriented film 25, liquid crystal layer 22, oriented film 26, color filter 21, glass substrate 20, polarizing film 19, film 18 forming the filter according to this invention, and antireflection/ultraviolet absorbing layer 27.

The liquid crystal display device in this invention refers to one that displays using liquid crystal cells, which are arrays of light shutters driven by changing the light beam transmission and reflectance by changing the orientation state of liquid crystals by applying voltage or energizing to given display units, using the electro-optical effect of liquid crystal molecules, i.e. optical anisotropy (refraction factor anisotropy), orientation properties or the like.

Specifically, liquid crystal display elements such as transmission type simple matrix-driven supertwisted nematic mode, transmission type of active matrix-driven twisted nematic mode, transmission type active matrix-driven inplane switching mode, transmission type active matrix-driven vertical aligned mode, semitransmission type simple matrix-driven super twisted nematic mode, semitransmission type active matrix-driven twisted nematic mode, reflection type simple matrix driven super-twisted nematic mode, or reflection type of active matrix-driven twisted nematic mode can be cited.

The display device of this invention has a color filter 21. In its general form, a color filter (reference sign 21) is arranged in the liquid crystal panel (reference sign 10) as shown in Fig. 1. As the type of the color filter 21, it is preferable to use a coloring matter-dispersed type, which is superior in durability against heating and light-resistance in view of productivity and quality.

As coloring matters usable in a coloring matter-dispersed type of color filter, for example, dianthraquinone or diketopyrrolopyrrole family for red color, copper halide phthalocyanine family for green color, and copper phthalocyanine for blue color are representative. Further, for toning, yellow coloring matters and violet coloring matters are used. An arrangement is representative in which a coloring matter-dispersed layer is formed by dispersing and photopolymerizing these coloring matters with acryl or epoxy acrylate as a base resin, and a color filter in which colors of RGB are arranged is obtained by repeating photolithography for each color.

The thus formed coloring matter-dispersed type color filter has practically preferable properties in that it is superior in light resistance and heat resistance, and will not deteriorate in a sintering process for a polyimide-family liquid crystal oriented film. But on the other hand, in the coloring matter-dispersed arrangement, since it is difficult to make coloring matters into ultrafine particles or ultrafine dispersing them is difficult, it is difficult to achieve sharp spectral transmittance properties itself, which is important in improving the color purity, and to perform display that is superior in color reproducibility. That is, as shown in Fig. 43, spectral transmittance characteristics of an ordinary color filter are not necessarily completely sharp peaks, but have mildly sloping shoulder portions, so that if a color filter is designed with brightness kept high, mixing of emission spectra inherently occurs in the shoulder portions. Also, in an ordinary cold-cathode tube as a light source, as shown in Fig. 40, since subspetrum components, which worsen the color reproducibility, are emitted, though small in amount, from phosphors, this will have a bad influence, so that color purity lowers.

Therefore, in this invention, in order to suppress a phenomenon in which color purity worsens due to these problems, using color materials having an extremely narrow light-absorbing half-band width, a color material-dispersed layer (reference sign 18 in Figs. 1 and 2) is formed which absorbs only specific wavelengths in the visible light region, and further, the color material-dispersed layer is formed in the liquid crystal display device with the light absorption peaks by the color material-dispersed layer arranged at positions as near to the points where the spectral transmittance curves of the respective colors of the color filter overlap (overlapping points) as possible, thereby the color reproducibility is improved by suppressing worsening of color purity due to mixing of illuminating light spectra in the shoulder portions of the color filter.

That is, if organic color materials are used as color materials for the color material-dispersed layer, by carrying out proper molecular designing, it is possible to extremely finely control the absorbed wavelengths, and also to design such that absorption peaks will not exist except at the target wavelengths. Thus, it is possible to selectively remove only illuminating light components near the shoulder portions, which is important in this invention. As a result, it is possible to improve only color purity without sacrificing brightness so much.

More specifically, as shown in Fig. 43, with the points where the transmittances of the respective colors are equal (overlapping points), which are determined from spectral transmittance characteristic of the respective colors of the color filter (reference sign 21 in Figs. 1 and 2) as a reference, molecular design of the organic color materials are made such that the absorption peaks by the color material-dispersed layer are as near to the overlapping points as possible. Still more specifically speaking, the absorption peak positions of the color material-dispersed layer are preferably positioned at ±30 nm and more preferably ±25 nm, further preferably ±20 nm from the overlapping points.

Also, as shown in Fig. 34, with the light beam absorbing rate at each light absorption peak in the color material-dispersed layer as a reference, if the width of the absorption spectrum when the light absorbing rate becomes half the value is determined as the light-absorbing half-bandwidth, the organic color materials and a binder resin are designed such that the light-absorbing half-bandwidth is preferably 60 nm or under, more preferably 55 nm or less, and further preferably 50 nm or less.

In addition, according to this invention, since organic color materials, which are superior in the ability to selectively cut only specific wavelengths, are used, compared with filters obtained e.g. by dispersing metallic ions, it no redundant absorption bands are produced. Making use of this characteristic, it is preferable to design such that the number of absorption peaks in the visible light area is as small as possible. That is, if the filter is formed of inorganic substances, besides main absorption peaks, slight unintended absorption peaks tend to appear, which worsen the tone. Thus no desired wavelength-cutting properties appear. According to this invention, in particular, since the color material-dispersed layer of organic color materials is used, it is possible to control absorbed wavelengths with high accuracy, so that it is possible to selectively absorb only specific wavelengths.

More specifically, the number of light absorption peaks in the visible light region is preferably 1 - 5, more preferably 1 - 3, particularly preferably 1 - 2. It is thus possible to cut only necessary wavelengths without cutting any redundant wavelengths. In this invention, the visible light band means a wavelength region of 360 nm - 800 nm.

In the present invention, it is possible to use a film having at least one or more layers in which an organic color material 32 is dispersed, i.e. organic color material dispersed layer 33, with a thermoplastic resin superior in moldability as a substrate 31 as a filter.

Also, as the substrate 31 comprising a thermoplastic resin, a material is suitable which maintains suitable rigidity while having high transparency and will never deflect when it is exposed to heat emitted from a discharge tube such as a cold-cathode tube.

As the substrate 31 comprising a thermoplastic resin, specifically, a film comprising polyethylene terephthalate, polyethylene naphthalate, polypropylene, polycarbonate, polyarylate, norbornane-family cyclic polyolefin or polymethyl methacrylate and having a thickness of 30 μm-350 μm, preferably 40 μm - 300 μm, more preferably 50 μm - 250 μm is suitable. Among them, biaxially stretched polyethylene terephthalate film or biaxially stretched polypropylene film is most suitable because it is high in rigidity and tough.

"Filter 18 in which the organic color material 32 is dispersed" includes not only an arrangement in which it is formed as an independent laminar member, but an arrangement in which, as shown in Fig. 19, the organic color material 32 is dispersed in the thermoplastic resin film forming the substrate 31. Further, as the filter 18 in which the organic color material 32 is dispersed, an arrangement as shown in Fig. 20 in which the organic color material 32 is dissolved in a photo curing resin or thermocuring resin 14, or an arrangement as shown in Fig. 21 in which a thin thermoplastic resin film 33 in which the organic color material 32 is dissolved is laminated on a film substrate 31 through an adhesive 35 can be cited.

Further, a method in which as shown in Fig. 22, after a binder resin 34 and the organic color material 32 have been dissolved in a solvent and the solution has been applied, the solvent is evaporated to leave only the binder resin 34, is typical. In particular, as a method with which dispersion is easy to control, and with which a filter 18 which is superior in productivity and transparency can be easily obtained, an arrangement in which the organic color material 32 is dissolved in a photocuring resin as a so-called binder resin, and an arrangement in which a dispersion solution of a binder resin comprising a thermoplastic resin and the organic color material 32 is coated and the solvent is evaporated are preferable.

Here, as photo-curing resins, monofunctional acrylate, monofunctional methacrylate, multifunctional acrylate, multifunctional methacrylate, etc. are typical. It is possible to obtain a color material-dispersed layer having desired light-absorbing properties by selecting a photopolymerizing monomer superior in dispersion properties for organic color material and irradiating it with ultraviolet light using a photopolymerization initiator such as an acetophenone type, a benzoine type, or a benzophenone type.

Preferable binder resins include, polyacrylate-family resins, polycarbonate-family resins, ethylene-vinyl alcohol-family copolymer resins, ethylene-vinyl acetate-family copolymer resins, AS resin, polyester-family resins, etc.

Further in the present invention, the filter 18 has the function of selectively removing light beam of specific wavelengths in the visible light beam band, and also as shown in the characteristic view of Fig. 33, its transmission in the maximum absorption wavelength in the visible light beam band is not more than 75%, preferably not more than 70%, more preferably not more than 65%, and it has the function of selectively cutting specific wavelengths of visible light beams. In particular, in order to suitably improve color reproducibility, not only the transmission in the maximum absorption wavelengths, but the peak position of the maximum absorption wavelengths have to be suitably set. For details thereof, description will be made later.

In the present invention, the film forming the filter having the ability to absorb specific wavelengths may be used by directly sticking on a liquid crystal panel. But the particularly preferable arrangement is one in which it is arranged by providing an air layer on the light emitting surface of the backlight (surface light source device). For effects thereof, if description is made with a side light type surface light source device as an example, as shown in Fig. 11, a diffusion film 8 as the filter is arranged on the light guide pipe 1 of the surface light source device 11. In this case, a very slight air layer a exists between the filter and the light guide pipe 1, so that due to the effect of the air layer a, phenomena in which illuminating light propagating in the light guide pipe 1 enters the filter are suppressed.

In Fig. 17, a condensing film 5 as the filter 18 is arranged on the light guide pipe 1 of the surface light source device 11, and in this case too, a very slight air layer a exists between the condensing film 5 and the light guide pipe 1, so that by the effect of the air layer a, it is possible to suppress a phenomenon in which illuminating light propagating in the light guide pipe 1 penetrates into the condensing film 5.

Thus, as has been described above with reference to the structure shown in Fig. 12, the wavelength properties of illuminating light will not differ between an area near the light source and an area far therefrom due to the fact that illuminating light, which propagates a long distance in the light guide pipe 1, repeatedly interacts with the filter having an organic color materials dispersed layer.

That is, since interaction of illuminating light emitted by the light takeout mechanism 6 such as a rough surface with the filter having the organic color material-dispersed layer is kept substantially constant, irrespective of places in the light-emitting area, even if the surface light source device 11 has been increased in size, no unevenness of color will occur in displayed images according to places. Thus it is possible to always obtain constant color reproducibility, while suitably controlling colors by the filter 18, which has the organic color material-dispersed layer. This is especially important in obtaining high color reproducibility in a side light type surface light source device, which is effective for increased size and thinning.

Here, as a method of arranging a filter having the organic color material dispersed layer on the light-emitting surface of the surface light source device 11 with an air layer, a method in which roughening working is applied to the side of the filter having the organic color material dispersed layer that contacts the light-emitting surface is preferable.

For example, as shown in Fig. 20, an arrangement in which a coating liquid comprising a light or heat thermocuring resin in which are dispersed substantially transparent beads 13 is applied and hardened for roughening working, as shown in Fig. 19, an arrangement in which mat treatment is applied for roughening working on the surface of the filter having the organic color material dispersed layer, and as shown in Fig. 22, a method in which a binder resin 34 and substantially transparent beads 12 are dispersed in a solvent, and after applying the solution, the solvent is evaporated to let the binder resin 34 left, etc. are typical.

As methods which are especially superior in productivity and can form a suitable air layer a, an arrangement in which a coating layer 14 comprising a photo-curing resin in which are dispersed substantially transparent beads, and an arrangement in which a dispersion solution of a binder resin comprising a thermoplastic resin and substantially transparent beads 13 is coated and the solvent is evaporated are preferable. Also, by dispersing the organic color materials 32 in the binder resin 34, it is possible to give the effect of the color material-dispersed layer to the beads coating layer.

As a suitable range of the thickness of the air layer a formed between the light-emitting surface of the surface light source device and the filter having the organic color material dispersed layer, which is formed due to the substantially transparent beads 13, the gap L measured as in Fig. 23 is 1 - 70 μm, more preferably 2 - 50 μm, further preferably 3 - 40 μm so that illuminating light beams transferred through the light guide pipe do not enter the organic color material-dispersed layer.

Also, in the present invention, in order to obtain illuminating light beams that is wide in the outgoing angle distribution while suppressing glare and showing of patterns, the filter having the organic color material dispersed layer preferably maintains light-diffusing function of suitably diffusing outgoing light from the light guide pipe. Specifically, haze based on ASTM D1003 is selected from the ranges of 5% - 90%, preferably 10% - 85%, more preferably 15 - 80%.

As a method of controlling haze, though not specifically limited, typically, as shown in Fig. 22, an arrangement in which substantially transparent beads 28 are dispersed in a lightcuring or thermocuring resin 34, the solution is applied to the surface of the substrate film 31, and hardened to obtain a light-diffusing layer, as shown in Fig. 20, an arrangement in which the surface of the film forming the filter is mat-treated to obtain a light-diffusing layer, etc. can be cited.

Further, as a typical method of controlling haze, an arrangement in which as shown in Fig. 21, a refractive index difference is produced by dispersing high-refractive fine powder 36 such as glass powder in the substrate film 31, or foaming the substrate film 31 itself to obtain a light-diffusing layer, or a method in which as shown in Fig. 22, a binder resin 34 and substantially transparent beads 12 are dispersed in a solvent, and after applying the solution, the solvent is evaporated to let only the binder resin 34 left.

In particular, the arrangement in which substantially transparent beads 12 are coated is preferable. As beads 12, by dispersing substantially spherical beads 12 such as silica, polyacrylate, polystyrene and silicone, and uniformly coating them on the substrate film 31 surface, as shown in Fig. 24, the spherical beads 28 perform a lense effect, not only are glare and showing of patterns suitably suppressed, it is also possible to increase the frontal brightness by condensing illuminating light on the front. Thus it is convenient as a light-adjusting sheet used for the back light.

Moreover, as shown in Fig. 22, by dispersing organic color materials 32 having the function of absorbing light in specific wavelengths in the visible light region in the coating material (sign 34) covering the beads 12, it is possible to maintain high dispersion properties. Also, since no special step for forming the filter 18 is needed, the manufacturing steps are simplified, so that it is extremely convenient in manufacturing the film forming the filter of the present invention.

In the film forming the filter of the present invention, in order to suitably control the spectral distribution of illuminated light in the visible light region, the layer in which organic color materials 32 is dispersed is provided as described before. But, while organic color materials are superior in control properties of absorption spectra, they tend to be deteriorated by light or heat. Thus, according to this invention, the dispersed layer of organic color materials 32 preferably contain so-called light stabilizers which have such functions as the ultraviolet absorbing function, free radical scavenging function and oxidization preventive function.

Here, as typical light stabilizers, organic ultraviolet-absorbing agents (benzophenone family, benzotriazole family, oxanilide family, formamidine family), inorganic ultraviolet-absorbing agents, hindered amine-family light stabilizers, arylester-family light stabilizers, phenol-family antioxidants, sulfur-family antioxidants, and phosphorus-family antioxidants can be cited. Preferably, they are added in such an amount that the optical properties are not sacrificed, to suppress deterioration of the organic color materials.

More specifically, as e.g. organic ultraviolet-absorbing agents, 2-(2'-hydroxy-5'-t-butylphenyl)benzotriazole, 2-(2'-hydroxy-3',5'-di-t-butylphenyl)benzotriazole, 2-hydroxy-4-methoxybenzophenone, 2-hydroxy-4-n-octyloxybenzophenone, phenylsalcilate, 4-t-butylphenylsalcilate, 2,5-di-t-butylphenyl-4-hydroxybenzoic acid n-hexadecyl ester, 2,4-di-t-butylphenyl-3',5'-di-t-butyl-4'-hydroxybenzoate, etc. can be cited.

Further, as inorganic ultraviolet absorbing agents, titanium oxide, zinc oxide, cerium oxide, iron oxide, barium sulfate, etc. can be cited. Here, as ultraviolet absorbing agents, the wavelength where the transmittance is 50% is preferably 350 - 420 nm, more preferably 360 - 400 nm. If it is shorter than 350 nm, the ultraviolet-absorbing ability is

weak. If it is longer than 420 nm, coloring becomes too strong, which is not preferable.

Besides the arrangement in which light stabilizers are added in a dispersed layer of organic color materials 32, as shown in Fig. 21, an arrangement is possible in which a layer 37 that absorbs ultraviolet rays, which have a grave influence on light deterioration, is separately provided to suppress deterioration of organic color materials 32. That is, as shown in Fig. 21, an arrangement is possible in which a dispersed layer of the organic color material 32 is sandwiched by ultraviolet-absorbing and/or reflective layer 37, or as shown in Fig. 22, an arrangement in which the organic color material 32 is dispersed in one photocuring resin coating layer, and an ultraviolet absorber is dispersed in the other photocuring resin coating layer 14 is possible.

The light adjusting film of the present invention may be used for a right-under type surface light source device 11 shown in Fig. 13. As a right-under type surface light source device 11, one is typical in which a plurality of curved reflectors 17 are arranged in parallel in the space surrounded by a frame 16 as shown in Fig. 13, a light source 2 comprising a cold cathode tube is arranged at a reflecting focal portion of each reflector 17, and over this space, a lighting curtain 15 is arranged.

Further, the filter forming the present invention can also be used for a side light type surface light source device 11 shown in Figs. 14 and 15. In particular, since the filter of the present invention makes it possible to suppress color unevenness in the image display surface even if there exists the light guide pipe 1, it can be used extremely suitably for a large side light type surface light source device.

If further statement is made about the optical efficiency of a side light type surface light source device, although it has an advantage that thinning and making unevenness of brightness uniform are facilitated due to the presence of the light guide pipe 1, it is not sufficient in use efficiency of outgoing light beams compared to a directly-under type back light. Here, in the present invention, a light takeout mechanism 6 provided in the light guide pipe 1 is preferably formed on the light-outgoing surface 1b of the light guide pipe 1 or the surface 1c facing the light-outgoing surface as rugged portion 6b as shown in Fig. 15.

This is because in the arrangement in which an ordinary light-scattering ink is screen-printed on the light guide pipe to form the light takeout mechanism (light takeout mechanism 6 shown in Fig. 14), multiple scattering by fine particles frequently occurs at the ink portion, so that loss of illuminating light often occurs. As the light takeout mechanism 6, which is formed on the surface 1c, which is opposite the light emitting surface 1b of the light guide pipe 1, various kinds of preferable arrangements are shown in Fig. 28.

That is, as a preferable arrangement of the light takeout mechanism 6, by forming it as recesses and protrusions such as a pattern comprising a rough surface 6b as shown in Fig. 28A, a pattern comprising protrusions 6c having a trapezoidal section and having their apexes formed into rough surfaces as shown in Fig. 28B, a pattern comprising recesses 6d having a trapezoidal section and having their deep wall surfaces formed into rough surfaces as shown in Fig. 28C, a pattern comprising protrusions 6e having a substantially square section as shown in Fig. 28D, a pattern comprising recesses 6f having a substantially square section as shown in Fig. 28E, a pattern comprising recesses 6g having a substantially V groove-shaped section as shown in Fig. 28F, a pattern comprising protrusions 6h having a substantially triangular section as shown in Fig. 28G, a pattern comprising recesses 6i having a right-angled triangular section and having a vertical wall surface as shown in Fig. 28H, a pattern comprising recesses 6j having an arcuate section as shown in Fig. 28I, or a pattern comprising protrusions 6k having an arcuate section as shown in Fig. 28G, not only will the optical efficiency improve, but advantages in manufacturing such as omittable printing steps are obtained.

As specific arrangements of such recesses and protrusions 6b - 6k, recesses and protrusions 6b - 6g are preferably used in which the ten-point average roughness is in the range of 0.5 - 500.0 μm, more preferably 1.0 - 300.0 μm, further preferably 2.0 - 200.0 μm when the surface roughness at the recesses-and-protrusions portions 6b - 6k is measured by a contact type or optical type surface roughness measuring device. The recesses-and-protrusions portions 6a - 6k are preferably arranged in a pattern. In order to prevent showing of the pattern, it is preferably a fine pattern to such an extent that it cannot be seen on the display screen. Specifically, the arranging pitch of the pattern is preferably 5.0 - 1000.0 μm, more preferably 30.0 - 500.0 μm, further preferably 50.0 - 300.0 μm.

Besides, in order to further increase optical efficiency, as shown in Fig. 1, a condensing element array 1d having ridgelines in a direction substantially perpendicular to the light incident surface 1a of the light guide pipe 1 is preferably provided on the light-outgoing surface 1b of the light guide pipe 1 and/or the surface 1c facing the light-outgoing surface 1b. More specifically, the condensing element array 1d should be selected according to the target optical properties from a triangular prism array as shown in Figs. 29A-29C, a corrugated plate-like array as shown in Fig. 29C, a lenticular lens array c as shown in Fig. 29E.

As an arrangement which is especially superior in light-condensing properties and easy to work, a triangular prism array is preferably used. As for the apex angle of the triangular prisms, the range of 70 - 160 degrees, more preferably 75 - 155 degrees, further preferably 80 - 150 degrees is suitably used. Also, like the pattern comprising the recesses and protrusions 6b to 6g, the arranging pitch of the light-condensing element array 15 is preferably made fine to such an extent that seeing on the display screen is difficult. Specifically, the arranging pitch P2 is suitably 5.0 -

500.0 μm, more preferably 10.0 - 200.0 μm, further preferably 15.0 μm - 150.0 μm.

Also, the shape of the triangular prism array a forming the condensing element array 1d is not limited to the arrangement in which the section is completely triangular. For example, as shown in Fig. 29A, an arrangement in which the apex portions have a curvature or as shown in Fig. 29B, the apexes are chamfered can be embodied. Further, the ridgelines of the prism array may be shaky as shown in Fig. 29C.

In the embodiment of Fig. 3, on the back of the polarizing plate 24 on the side of the light source, the filter 18 of this invention is provided. In the embodiment of Fig. 4, on the back of the light diffusing film 9 of the surface light source device 11, the filter 18 of this invention is provided.

Here, in a display device having the color filter 21 in which the structure of the present invention is applied, as described above, a color display is obtained in which flexibility of color design increases, and the color reproducible range is large while maintaining high emitting efficiency. But the structure as it is not necessarily flawless. Because a filter which contains e.g. an organic color material dispersed layer or the like is used to improve color reproducibility is used, attending various inconveniences are produced.

Among them, it is a big problem that when the display device is turned off, the organic color material dispersed layer releases brilliant colors, so that the appearance is not good. That is, if the structure of the present invention is used for television, which is placed e.g. in a living room, when light beams from the sun or a fluorescent lamp hit the display device, unpreferable colors such as pink or purple are released. Thus, feelings of high quality are not obtained, so that it cannot be used for commercial products whose designs are considered important.

Therefore, in order to obtain a display device that is superior in design, in the present invention, as shown in Figs. 3 and 4, the filter 18 is provided nearer to the light source than the color filter 21. In a display device in which the polarizing plate of a liquid crystal display device is arranged on the front side of the display, as shown in Fig. 5, it is possible to use an arrangement in which the filter 18 is provided nearer to the light source than the polarizing plate 19, which is provided on the front side.

With such an arrangement, coloring phenomena on the display screen due to external light is markedly relaxed, so that even if it is used for high-quality TVs to be placed in e.g. living rooms, an appearance that is passable as commercial products is obtained.

More specifically, for example, in a liquid crystal display device, an arrangement in which the filter 18 is provided as an organic color material layer on the surface of the light diffusing film 9 as represented by a polarizing plate 24 (polarizing film) laminated on a glass substrate 23 facing the back light of the liquid crystal panel 10 as shown in Fig. 3, or a polarizing separating plate (reflecting polarizing film) of the surface light source device 11 as shown in Fig. 4, or an arrangement in which the filter 18 is provided as an organic color material coating layer on the surface of a light adjusting film such as a light diffusing film, prism film 5, polarizing/separating film arranged on a surface light source device 11 (back light) to be described as embodiments in Fig. 25 and thereafter can be cited as preferable embodiments.

As described above, by the present invention, regarding display devices in which color reproducibility is considered important recently, it became possible to provide a display device in which the color reproducible range has been expanded while keeping high light emission efficiency, and still no uncomfortable feelings are felt even while the display is not on, and further it is superior in design. This promotes spreading liquid crystal television devices that are low in consumed power and extremely small in loads given to the earth environment.

Next, description is made about the embodiments in which the filter 18 is provided on the condensing film 5 of the surface light source device 11.

Fig. 25 is a schematic sectional view of one embodiment of the condensing film 5 according to this invention. Fig. 10 is an exploded perspective view showing one embodiment of a surface light source device using the condensing film 5 according to this invention.

In the condensing film 5 according to this invention, at least one layer of an organic color material dispersed layer 5b in which organic color materials having absorbing bands in specific wavelengths of the visible light region are dispersed is provided on a substrate film 5a of a thermoplastic resin that is superior in moldability as the filter 18.

Here, as the substrate film 5a comprising a thermoplastic resin, a material is preferable which, having high transparency, retains suitable rigidity, and will not deflect when exposed to heat emitted from the light source 2, i.e. a discharge tube such as a cold cathode tube. Specifically, a film having a thickness of 30 - 350 μm, preferably 40 - 300 μm, more preferably 50 - 250 μm, and comprising polyethylene terephthalate, polyethylene naphthalate, polypropylene, polycarbonate, polyarylate, norbornane-family cyclic polyolefin or polymethylmethacrylate is preferable. Among them, biaxially stretched polyethylene terephthalate film or biaxially stretched polypropylene film is high in rigidity and strong in stiffness, and thus is most preferable.

As shown in Fig. 25, for a condensing film, normally, in view of manufacturing steps or the like, it is recommended that it have a structure in which an organic color material dispersed layer 5b is laminated on the surface of the substrate film 5a. But it may have a structure in which color materials are dispersed (added) in the substrate film 5a itself.

Further, for color materials, organic color materials are preferably used in view of ease of handling and performance. But inorganic color materials may be used alone or may be used with organic color materials as their adjustors.

The following description is made with organic color materials as examples.

Further, in this invention, as shown in Fig. 27B, the condensing film 5 means a film provided on the light emitting surface 1b of the surface light source device, and having the function of improving the brightness in the normal direction of the light source device. That is, in a transmission type or semitransmission type liquid crystal display device having a color filter of RGB, since illuminating light emitted from the surface light source device (backlight) in the back passes through optical members that cause loss of illuminating light, such as color filter and polarizing films, it should have such properties that illuminating light is guided in the normal direction of the light emitting surface as efficiently as possible.

More specifically, as shown in Fig. 27A, when the brightness in the normal direction of the light emitting surface 1b is measured with a brightness measuring device 40 with nothing provided on the light emitting surface 1b of the surface light source device, compared to the brightness measured right over the light guide pipe 1, as shown in Fig. 27B, it preferably has such a condensing function that the brightness increase rate when the condensing film 5 is provided right over the light guide body 1 is preferably at least not less than 1.1 times, more preferably not less than 1.15 times, further preferably not less than 1.2 times. That is, by intensively converging emitted light beams from the surface light source in the forward direction by the condensing film 5, even if there are color filters or the like on the liquid crystal panel, it is possible to keep high brightness of display images.

As a specific structure of the condensing film 5, an arrangement in which as shown in Fig. 22, substantially spherical beads 12 having a lens effect (brightness improving effect) are formed on the surface layer of the substrate film 31 by coating with a binder resin, an arrangement in which as shown in Fig. 25, condensing elements 4 comprising an array of tiny triangular prisms are formed on the surface of the substrate film 5a, an arrangement in which as shown in Fig. 26, condensing elements 4 comprising an array of tiny corrugated plates are formed on the surface of the substrate film 5a, an arrangement in which as shown in Fig. 31B, condensing elements 4 comprising an array of tiny lenticular lenses are formed on the surface of the substrate film 5a, an arrangement in which as shown in Fig. 31A, condensing elements 4 comprising an array of tiny microlenses are formed on the surface of the substrate film 5a, an arrangement in which as shown in Fig. 31C, condensing elements 4 comprising an array of tiny pyramids and/or cones are formed on the surface of the substrate film 5a, etc. are typical. Particle diameter and distribution of beads, head apex angles of the prism array, etc. are suitably designed such that the brightness increase rate when provided on the light emitting surface 1b of the surface light source device will be at least not less than 1.1 times.

For example, in an arrangement in which as shown in Fig. 22, substantially spherical beads having a lens effect (brightness increasing effect) are formed on the surface layer of the substrate film 31 by coating with a binder resin, the particle diameters of the beads is normally 0.1 - 100 μm, preferably 0.5 - 70 μm, more preferably 1.0 - 50 μm, and further, as shown in Fig. 21, they are preferably arranged on a plane and coated so that they will not overlap as much as possible. Further, as shown in Fig. 25, in an arrangement in which condensing elements 4 comprising an array of tiny triangular prisms are formed on the surface of the substrate film 5a, the pitch of arrangement of the prism array is preferably 5 - 150 micrometers, more preferably 15 - 100 micrometers, further preferably 25 - 75 micrometers. If arranged with the apexes of the prisms facing up, apex angle of the prisms is preferably 65 - 150 degrees, more preferably 70 - 140 degrees, further preferably 75 - 130 degrees. If arranged with the apexes of the prisms facing down, it is preferably 50 - 80 degrees, more preferably 55 - 75 degrees, further preferably 60 - 70 degrees.

By arranging the condensing film 5 on the light emitting surface 1b of the surface light source device in this way, even with a liquid crystal panel having color filters, it is possible to obtain high front brightness. But in this invention, in order to further improve the quality of illuminating light beams, a layer 5b in which an organic color materials of which the transmission spectra are suitably controlled is dispersed is provided in the film structure to improve not only the front brightness but improve color reproducibility at the same time.

Details of the method of designing the condensing film 5 according to this invention will be described later. But while for the layer 5b in which these organic color materials are dispersed, an arrangement formed by dispersing organic color materials in a photocuring and/or thermocuring resin forming the condensing film 4 is typical as shown in Fig. 25 or Fig. 26, besides it, an arrangement in which a thin thermoplastic resin film in which organic color materials are dispersed is laminated on the substrate film 5, a method in which after a liquid in which a binder resin and the organic color materials are dispersed in a solvent is applied, the solvent is evaporated to leave only the binder resin, etc. are typical.

In particular, as a method by which an organic color material dispersed layer 5b in which dispersion can be easily controlled and productivity and transparency are superior can be easily obtained, an arrangement in which the layer is formed by dispersing organic color materials with a photocuring resin as a so-called binder resin, and an arrangement in which the layer is formed by coating a solution in which are dispersed a binder resin comprising a thermoplastic resin and organic color materials and evaporating the binder resin are preferable.

The transmission type liquid crystal display device shown in Fig. 9 comprises a back light source device provided with a light homogenizing means for converting light source light to a substantially uniform surface light source, i.e. the back light 11, and the liquid crystal panel 10 provided on the top of the back light 11.

The liquid crystal panel 10 is arranged on the top of the back light 11, and has such a structure that the polarizing film 24, glass base plate 23, oriented film 25, liquid crystal layer 22, color filter 21, glass base plate 20, polarizing film 19 are provided one on another from the back light 11 upward.

The polarizing film 24, which forms the filter of this invention, has a region where, as shown in Fig. 34, organic color materials having extremely sharp absorption peaks for cutting only specific wavelength ranges by extremely narrow widths are dispersed. Further, the number of such absorption peaks is, in the visible light beam region, preferably not less than 1 and less than 5, especially preferably not less than 1 and less than 3, and extremely preferably 2. Still further, absorption peaks are arranged at suitable positions. Due to this effect, while detailed description will be made later, it is possible to extremely flexibly control the color reproducible range of the liquid crystal display without providing any specific new structural member.

Here, the polarizing film of this invention means a film used for liquid crystal cells so as to function as a liquid crystal shutter and having the function of taking out only specific polarized light components. That is, typically, an arrangement comprising absorption type polarizing elements in which substances represented by iodine and dichroic color materials are oriented and arranged to take out polarized light by absorbing specific polarized light only, and an arrangement comprising reflecting type polarizing elements for taking out specific polarized components only by use of a laminated body comprising a cholesteric liquid crystal oriented layer or numerous dielectrics can be cited. Among them, polarizing films obtained by adsorbing iodine and dichroic absorbing color materials to polyvinyl alcohol-family resin films and monoaxially stretching them are used extremely frequently. In this invention too, these polarizing films may be preferably used.

To the polarizing film of this invention, it is possible to impart light diffusing functions. That is, in a optical unit of a back light source means (back light) used in a conventional type liquid crystal display, normally, light adjusting sheets (light diffusing sheets) having the function of diffusing light are arranged to prevent showing of patterns and improve the quality of the surface light source. But these light diffusing sheets are normally obtained by coating substantially transparent resin beads on a transparent film, and this process is extremely similar to the process of coating an organic color material dispersed layer on the polarizing film. Thus, in the present invention, there is no need whatsoever to carry out these processes separately. As shown in Fig. 9, to the coating liquid to be applied on the polarizing film 24, by mixing substantially transparent beads and organic color materials and coating, it is possible not only to omit steps but to reduce the light adjusting sheets. Also, there is an advantage of being able to reduce the thickness of the liquid crystal display.

As shown in Fig. 32A, a suitable range of light diffusion is expressed in terms of by a diffusion angle defined as the half band width of the emitting angle distribution of light beams that have transmitted the light diffusing layer as shown in Fig. 32B when collimate light such as laser beams 14 enters the polarizing film 19, which has light diffusion, as shown in Fig. 32A. The value of this diffusion angle is preferably 1 - 120 degrees, preferably 5 - 90 degrees, more preferably 10 - 60 degrees.

More specifically, by adding and dispersing substantially spherical beads represented by silica, polyacrylate, polystyrene, silicon to achieve the abovesaid diffusion angle and coating on the surface of the polarizing film, the spherical beads produces the effect of diffusing illuminating light from the back light 1 as shown in Fig. 9. Thus, glare feeling and showing of patterns are suitably suppressed. Moreover, adhesion of the polarizing film to the light guide pipe is also suppressed, which is extremely favorable.

Besides, as a method of imparting light diffusion property to the polarizing film of this invention, various arrangements can be cited. For example, an arrangement in which the surface of the polarizing film is mat-treated to provide a light diffusing layer, an arrangement in which high-refraction particulates such as glass powder are dispersed in the polarizing film, or the polarizing film itself is foamed to create a difference in refractive index, thereby providing a light diffusing layer, etc. can be cited.

In the surface light source device of the present invention, in order to provide a surface light source device which is suitable as a back light of a liquid crystal display device, high in purity of the three wavelength bands, low in the reduction of quality such color unevenness in the light emitting surface even if the size is increased, and large in the amount of light emission in the forward direction, a spectrum structure is used which is markedly different from conventional arrangements.

That is, while the fluorescent composition ratio of the respective colors is normally adjusted so that the light source such as a cold cathode tube is near to white in order to obtain white light, in the present invention, among the three bands, specific one primary color or two are relatively intensified, so that it is a light source which is colored e. g. green or bluish green, which is markedly offset from white.

In this way, naturally, illuminating light converted to the surface light source is also colored. But the present invention is structured such that an organic color material dispersed layer having the function of cutting light beam of

specific wavelengths is provided in the optical path of the surface light source device so that, as a whole, a surface light source colored white is obtained.

At this time, it is important that in the wavelengths for which emission intensity is intensified, green, which is a color that is high in the emission efficiency (efficiency relative to a unit input electric power), be intensified. Further, as shown in Fig. 36, the light absorbing spectra of the organic color material dispersed layer are preferably such that spectra provided at intermediate positions of the three primary colors are selectively cut (specifically, spectra positioned at the boundaries between R and G and between G and B).

It may appear inefficient to obtain a white surface light source through such complicated processes. But for example, even if sub-emissions that worsen color purity are observed in the original light source spectra as shown in Fig. 40, according to the surface light source device of the present invention, as shown in Fig. 41, sub-emission components are removed due to the effects of the cold cathode tube in which only the spectrum intensity of the green component is selectively intensified and the organic color material dispersed layer. And due to these effects, as shown in Fig. 42, sub-emissions are suppressed, and the color purity of the three bands increases. Further, since the light source itself is adjusted such that green color, which is superior in the emission efficiency, is selectively intensified, it is actually possible to keep high brightness of the surface light source device.

Thus, even though it looks the same white color, since the purity of the three primary colors is high, even in comparison in which it is passed through liquid crystal panels using identical color filters, it is possible to achieve relatively high color reproducibility, so that lowering of the emission efficiency due to the provision of the organic color material dispersed layer is kept small. Thus, it is also possible to keep high brightness of the liquid crystal display device.

Further detailed description will be made about this function. First, while for an ordinary backlight light source of a liquid crystal display device, a three-band cold cathode tube in which three colors RGB are mixed is used as a light source, it forms a spectrum curve as shown in Fig. 40. The reason why it looks white even though it forms such a complicated spectrum is because the fluorescent composition ratio of the respective RGB colors is adjusted in a good balance so that it looks white. In a conventional surface light source device, there is a limitation that it has to be colored near white, it was necessary to increase the rates of color components that are inferior in the emission efficiency in all the spectral components.

Further, for emission spectra which fluorescent bodies high in emission efficiency have, while the emission light amount for a unit electric power is indeed large, sub-emissions are often observed, so that bad influences were produced on independence of the three primary colors, which was a cause of lowering of color reproducibility. Thus, because if only improvement in the emission efficiency is pursued, lowering of color reproducibility accompanying sub-emissions will grow, in a conventional surface light source device, there was no other way but to take a balance with color reproducibility while sacrificing the emission efficiency.

In contrast, in the present invention, primary color components that are high in emission efficiency but tends to accompany sub-emissions are selectively intensified to intensify the emission efficiency of the light source itself. Thereafter, an organic color material dispersed layer for selectively cutting only spectral components which cause worsening of color reproducibility accompanying sub-emissions is provided as a color correction filter, so that due to the synergetic effect of both of them, both the improvement in the emission efficiency and improvement in the color reproducibility are achieved.

In particular, for use as a backlight light source of a liquid crystal display, a cold cathode tube is preferable. Since with a cold cathode tube, a green fluorescent body is most likely to accompany sub-emissions, further detailed description is made about the design in this case. First, the fluorescent composition of the cold cathode tube is adjusted to obtain, as shown in Fig. 41, a cold cathode tube which has far increased in greenishness compared with ordinary ones. For standard, a cold cathode tube is manufactured in which the color coordinate of the cold cathode tube expressed by x-y chromaticity figure is a value greater in the y direction by not less than 0.010, more preferably not less than 0.015, further preferably not less than 0.020 than normal.

Then, by using organic color materials that selectively absorb band regions accompanying sub-emissions, using a filter provided with the organic color materials dispersed layer, and providing the organic color material dispersed layer preferably on the emitting surface of the surface light source device, sub-emission components are removed from radiation spectra from the cold cathode tube to increase independency of the three primary colors, and the spectral intensity of the respective primary colors is adjusted so as to be near white to obtain a white surface light source.

In the present invention, white color means the color of illuminating light as observed through the liquid crystal panel.

As for the degree of preferable toning by the organic color material dispersed layer, regarding the emission color in which the cold cathode tube is measured with e.g. a radiation luminance meter, if the color coordinates expressed on the x-y chromaticity are x, y, and the emission colors after transmitting the organic color material dispersed layer are x', y',

$$\Delta y=y-y'$$

$$\Delta y > 0.01, \text{ preferably } \Delta y > 0.015,$$

further preferably $\Delta y > 0.02$

In measuring the values of x', y', care must be taken to measure chromaticity that has transmitted only the organic color material dispersed layer. (With the evaluation through the light guide pipe or the like, errors are too large for proper evaluation.)

Also, in the surface light source device of the present invention, the organic color materials used in the organic color material dispersed layer have to be ones in which they achieve the function of coloring near white by suitably adjusting the spectral intensity of emission light from the cold cathode tube, and further control of absorption peak position is easy so that it is possible to eliminate sub-emissions of the fluorescent body, which are not desirable in view of the color purity, and emission lines of sealed gas, and they have an absorption band in an extremely narrow range.

In particular, controllability of the absorption peak position is important. Specifically, it is necessary to use organic color materials with which the absorption peak of the organic color material dispersed layer is present preferably within 10 nm, more preferably within 8 nm, further preferably within 5 nm from the sub-emission peak of the fluorescent body.

In the liquid crystal display device of the present invention, in order to increase the color reproducible range of color display, as shown in Fig. 1, besides the color filter 21, which is a coloring matter dispersed type and is provided in liquid crystal cells, as shown in Fig. 1, a filter comprising an organic color material dispersed layer having narrow absorption peaks in wavelengths near intermediate portions of the respective RGB (red, green and blue) colors is provided.

As the back light source means of a liquid crystal display device, normally, a cold cathode tube is used in many cases. Due to the presence of the filter of this invention, sub-emission spectra that worsen the color purity as shown in Fig. 40 are removed, so that display images that are high in color reproducibility are obtained.

But simply by introducing organic color materials having relatively narrow absorption peaks, there are limits. As described above, if the absorption of the organic color material dispersed layer is increased, since the absorption peaks by the organic color material dispersed layer overlap with the peaks of the three primary colors, which are inherently not desired to be cut, while the color reproducibility increases, the brightness, i.e. brilliance of the display device, which is another important property, is sacrificed.

Therefore, the present inventors ardently conducted studies to solve this problem. As a result, it was found out that an illuminating light system in which an organic color material dispersed layer is simply provided and the absorption spectra of the organic color material dispersed layer is narrowed is insufficient, and that in order to obtain properties in which color reproducibility and brightness are balanced, the shape of the absorption spectral curve has to be asymmetrical, and further the asymmetrical shape should be such that it is wide on the short wavelength side and narrow on the long wavelength side.

The reason therefore will be explained. First, as for the boundary area between blue and green, as shown in Fig. 40, it is sub-emission peaks originating from the green phosphor that has a big bad influence. Thus, it is the most important to remove them. Further, unlike green and red, with the blue phosphor, peaks do not appear as narrow bright lines in specific wavelengths, but the emission spectra expand in a broad range. Thus, while spectra characteristic to blue seen near 440 nm have no problems, pulling tails from here, emissions expand to near 500 nm. Thus the emission components in this area are not necessarily effective in improving the color purity.

Thus, it is the most efficient to have an asymmetrical absorption peak in which at the boundary between blue and green, with a portion near 500 nm as an absorption peak, as shown in Fig. 35, a curve is drawn in which the transmission increases sharply so as not to prevent green main emissions on the long wavelength side from the peak position, and conversely, a curve is drawn in which the transmission increases relatively moderately compared to the long wavelength side to increase the color purity by gradually removing blue broad emissions on the short wavelength side from the peak position. Thus it is possible to increase the color purity.

Next, at the boundary area between green and red, it is sub-emission peaks originating from the green phosphor that has a large bad influence. Thus it is most important to remove this spectrum. What is problematic is, as shown in Fig. 35, that emissions are intensively done in specific wavelength areas as bright line emissions just like green for the red phosphor, and moreover, it is difficult to displace the bright line position to the long wavelength side. That is, if trials are made to remove green sub-emission components using ordinary organic color materials, end portions of the absorption spectra have influence on the red main emissions too, so that not only is the brightness sacrificed, but extremely heavy labor is needed to adjust white balance, which is important as a display device.

Naturally, trials are also being made to displace the main emission peaks of the red phosphor to the long

wavelength side to separate them from the sub-emissions of the green phosphor, thereby improving the color reproducibility. But from the viewpoint of keeping high brightness, which is considered most important among the optical properties of a liquid crystal display device, it is advantageous that the peak is at a position as near as possible to 550 nm, where the visual sensitivity is maximum, and main emission shifting toward the long wavelength side is inherently disadvantageous in view of high brightness.

With bright line emissions of two colors existing close to each other in the boundary area between green and red, it is required to remove sub-emissions of the green phosphor so as not to impair especially bright line emissions of red. From these viewpoints, it is important that in this area too, the shape of the absorption peak of the organic color material dispersed layer be an asymmetrical shape in which it forms such a curve that the transmission increases extremely sharply on the long wavelength side from the peak position. By using an organic color material dispersed layer that forms such an absorption curve as an auxiliary filter, it is possible to most efficiently keep the balance between color purity and the emission efficiency of the liquid crystal display device.

As described, in a liquid crystal display device in which a uniform organic color material dispersed layer is provided in the display screen and the color purity of the display device is improved by arranging the organic color material dispersed layer such that it has absorption peaks in the wavelengths at intermediate portions of the respective RGB colors, in order to keep the balance between color reproducibility and brightness, it is indispensable that the shape of the absorption peaks be such that the transmission moderately increases on the short wavelength side from the peak position, and on the long wavelength side, the transmission increases sharply, in achieving a liquid crystal display device which can keep the balance of color reproducibility and brilliance (brightness).

More specifically, regarding the absorption spectral curve obtained by measuring the transmission of the organic color material dispersed layer in the visible light beam region, if the half band width on the short wavelength side is $H_S$ and the half band width on the long wavelength side is $H_L$,

$$H_S > H_L$$

more preferably

$$H_S > 1.1 \times H_L$$

further preferably

$$H_S > 1.2 \times H_L$$

especially preferably

$$H_S > 1.3 \times H_L$$

extremely preferably

$$H_S > 1.4 \times H_L$$

The half band width in the present invention is, as shown in Fig. 35, defined as the wavelength width at the transmission position which bisects the difference between reference lines where the inclinations of tangent lines is zero and the absorption peak positions.

As embodiments of the film forming the filter of the present invention, they can be used in any of the following forms.

(1) An independent film in which color materials are dissolved in a binder resin is provided.
(2) It is provided by coating with a binder resin on the top or bottom surface of a structural element generally used in a liquid crystal display element such as a surface light source device, reflecting sheet, light diffusing sheet, condensing sheet, polarizing film, antireflection film, visual field expanding film, or retardation film.
(3) In forming a structural element generally used in a liquid crystal display element such as a light guide pipe for a surface light source device, light diffusing sheet, antireflection film and visual field expanding film, by mixing color

materials, these structural elements themselves are colored and used as filters.

As the binder resin in (1) or (2), as long as it is high in transparency and the color materials can exist in the form of molecules in the resin, any resin can be used. That is, as long as it is high in compatibility with the color materials, any resin can be used. For example, acrylic resin-family resins, polycarbonate-family resins, polyester-family resins, polyvinyl alcohol-family resins, polyolefin-family resins, polyimide-family resins, melamine resins, silicate resins, etc. can be cited.

As a method of forming a layer containing coloring matter, there is for example a method in which after dissolving the above resin and coloring matter in a common solvent, the solution is applied and dried, or a method in which a monomer which is a precursor of this resin and the coloring matter are applied and cured by heat or light can be cited.

In the case of (3), it can be obtained by kneading it with color materials, before molding a polarizing film, light diffusing sheet, visual field expanding film, antireflection film or retardation film into a film. The film itself is colored to a desired color. A light guide pipe, too, can be obtained by kneading with color materials before being worked into a plate by e.g. injection molding. Further, for a light diffusing sheet, in order to provide a coating layer comprising a photocuring resin in which substantially transparent beads are dispersed in typically a PET film, which is a substrate, color materials may be mixed beforehand in this coating liquid to color the coating layer.

Further, in the present invention, primary color components that is high in emission efficiency but tend to accompany sub-emissions are selectively made high in intensity to increase the emission efficiency of the light source itself. Thereafter, an organic color material dispersed layer that cuts only spectral components that cause worsening of color reproducibility accompanying sub-emissions is provided as a filter. Thus, it is possible to achieve both improvements in the emission efficiency and improvement in the color reproducibility by a synergetic effect.

In other words, it is preferable that the chromaticity which the light source light itself inherently has and the chromaticity after it has passed the organic color material dispersed layer are markedly different from each other, and the color of the light source light is adjusted to white by the organic color material dispersed layer. If the degree of color adjustment is described specifically, regarding emission color when the color of the cold cathode tube is measured with a radiation luminance meter, if the color coordinates expressed on the x-y chromaticity figure are x, y, and the emission colors after passing the organic color material dispersed layer are x', y',
the value of $\Delta y$, where

$$\Delta y = |y-y'|$$

is desirably $\Delta y > 0.010$, preferably $\Delta y > 0.015$, further preferably $\Delta y > 0.020$.

Organic color materials used in the organic color material dispersed layer in the present invention have to be ones which have a narrow absorption band, and permit control of the absorption peak position is easy, and allows to control bottom of the absorption peak by molecular design. For example, the absorption peak position is preferably controllable so that the absorption peak of the organic color material dispersed layer is positioned preferably within 10 nm, more preferably within 8 nm, further preferably within 5 nm from the sub-emission peak, which worsens color reproducibility of the phosphor. Further, the shape of the absorption peak should be such that the absorption rate quickly decreases on the long wavelength side and it relatively moderately decreases on the short wavelength side.

As organic color material suitably used for the color material-dispersed layer in this invention, organic color material compounds are preferable which are superior in controllability of absorbed wavelengths in the visible light region, and narrow in the half-band width of the absorbed spectrum, and have sharp absorption peaks. That is, if they are organic color materials in which the absorption peak positions and the light-absorbing half-band width satisfy the above requirements, it is possible to suitably use known color materials. More specifically, squarylium family (diphenylsquarylium compound, pyrazol squarylium compound), tetraazaporphyrin-family can be mentioned. For example, as a preferable diphenylsquarylium compound used at the overlapping points in color filter transmittance distribution curves of red and green, a compound of the general formula (I) shown as [Chemical formula 1] can be cited as a typical example.

[Chemical formula 1]

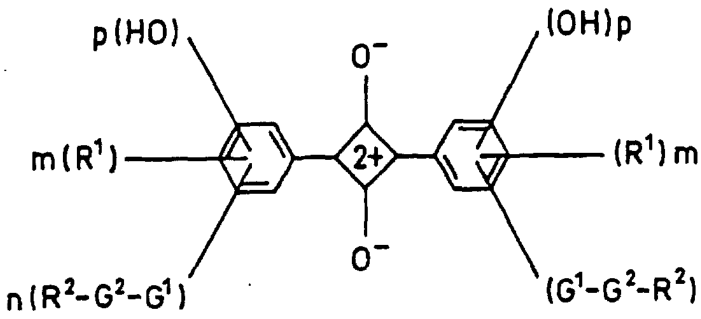

------(I)

[In the formula (I), $R^1$ shows an alkyl group which may have a substituent, an alkoxy group which may have a substituent, an aryl group which may have a substituent, an alioloxy group which may have a substituent, or a halogen atom. Here, adjacent $R^1$'s may get together to form an alkangiil group or an alkyldioxy group. $R^2$ is a hydrogen atom or a monovalent substituent, $G^1$ is a group expressed by $-NR_3-$ ($R^3$ is a hydrogen atom or an alkyl group), or an oxygen atom, and $G^2$ is a carbonyl group or a sulfonyl group (here, if $G^2$ is a sulfonyl group, $R^2$ is not a hydrogen atom.). m, n and p are integers equal to or greater than 0 and m+n+p is 5 or under. These substituents on the benzene rings may be different from other benzene rings. Or if m and n are 2 or greater, the groups expressed by $R^1$ and $G^1$-$G^2$-$R^2$ in one benzene ring may be different from other substituents in the same ring.

More specifically, compounds of general formulas (I-1) to (I-56) shown in [Chemical formula 2] to [Chemical formula 9] can be cited as typical examples.

[Chemical formula 2]

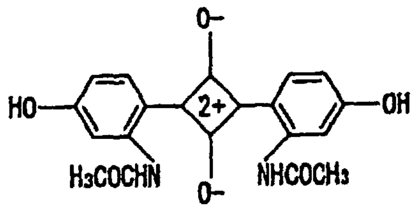

I -1

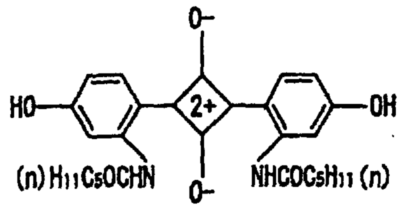

I -2

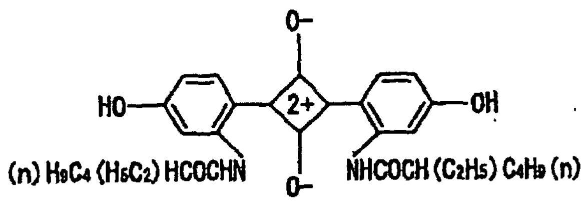

I -3

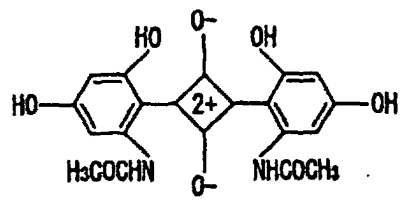

I -4

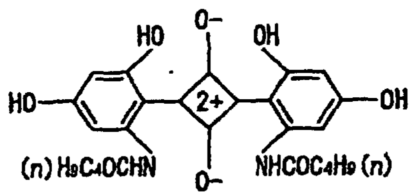

I -5

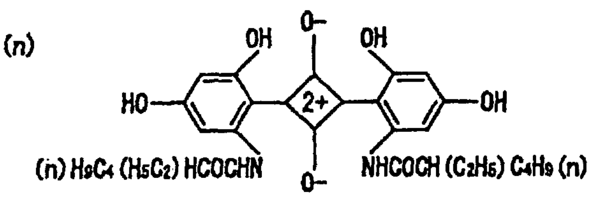

I -6

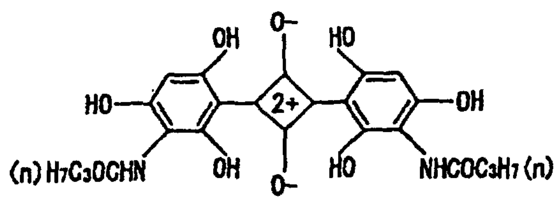

I -7

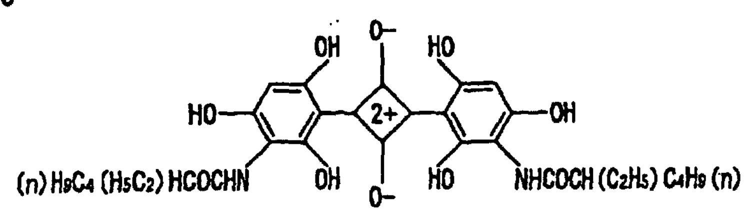

I -8

[Chemical formula 3]

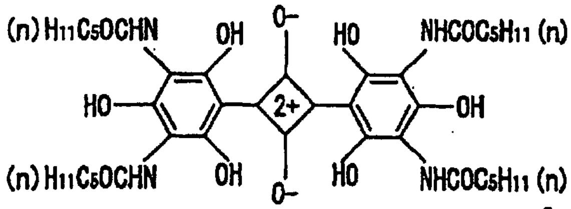

I -9

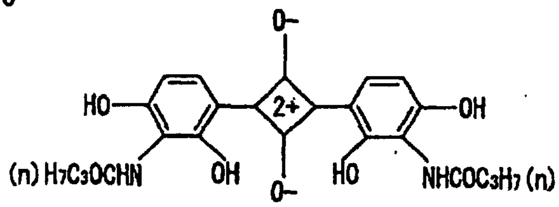

I -10

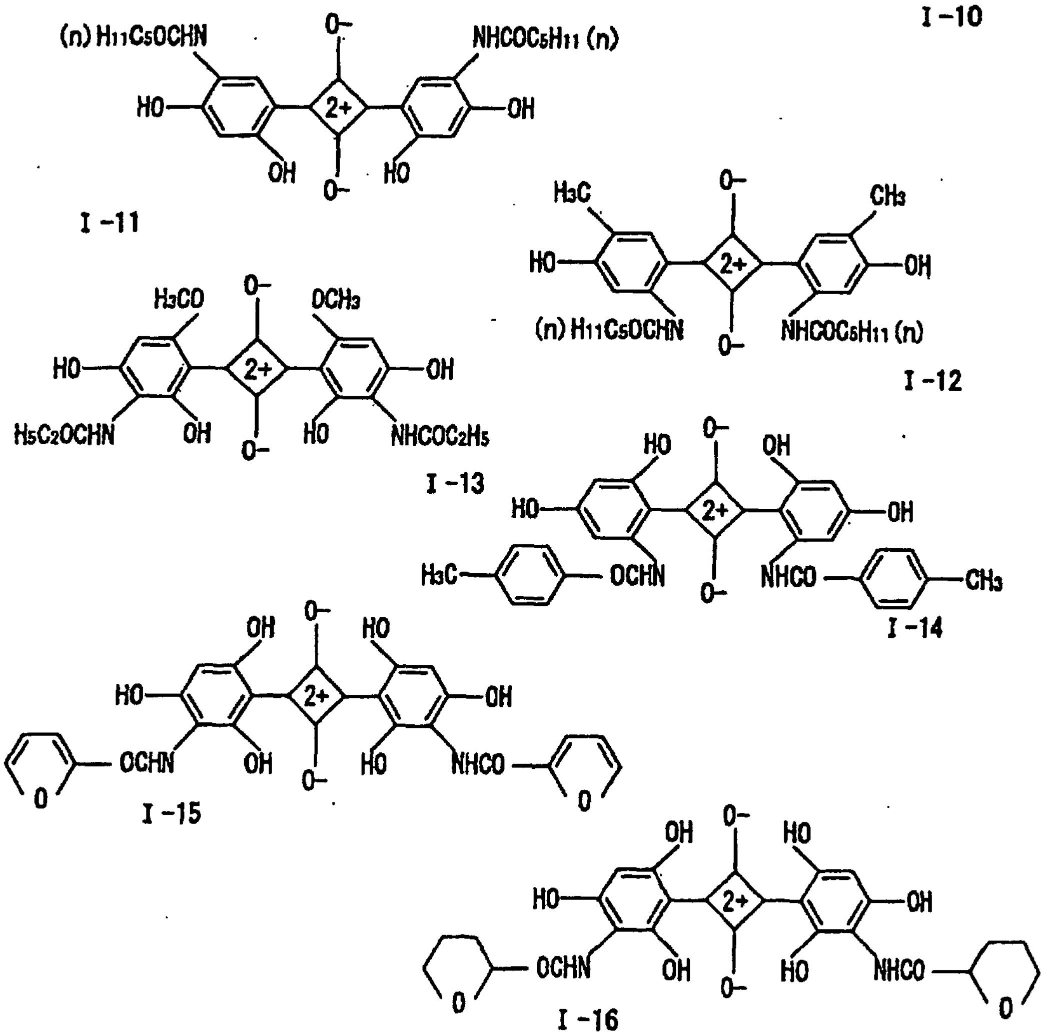

I -11

I -12

I -13

I -14

I -15

I -16

[Chemical formula 4]

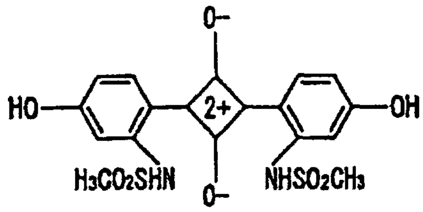

I -17

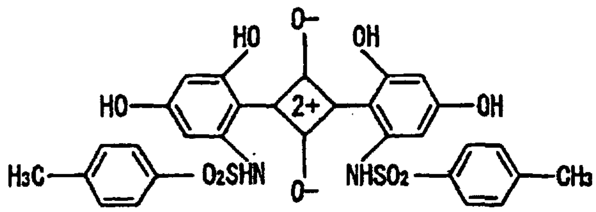

I -18

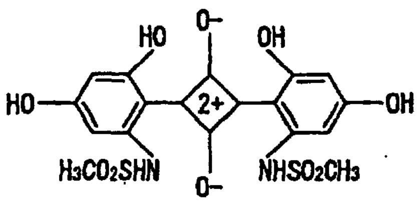

I -19

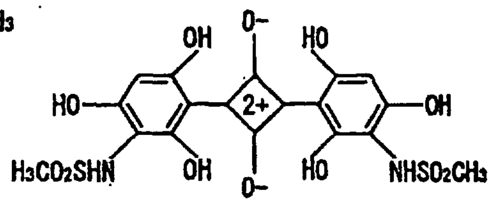

I -20

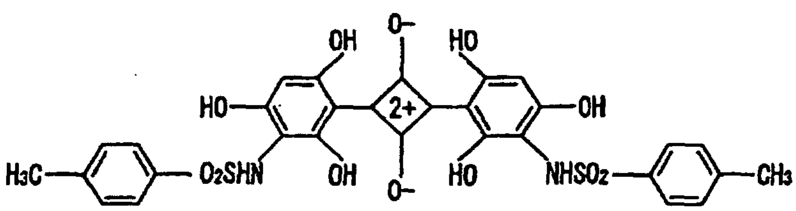

I -21

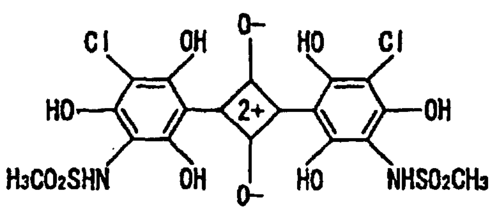

I -22

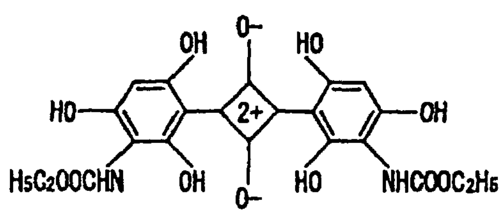

I -23

[Chemical formula 5]

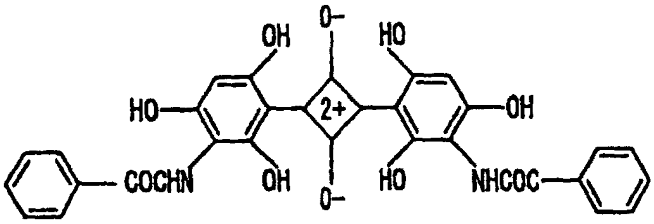

I -24

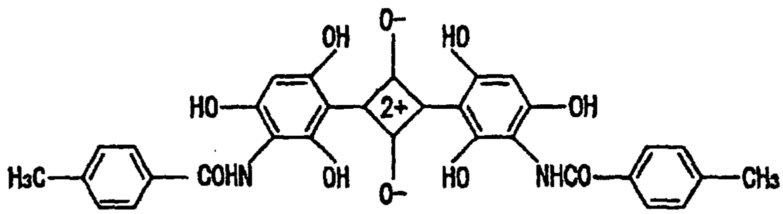

I -25

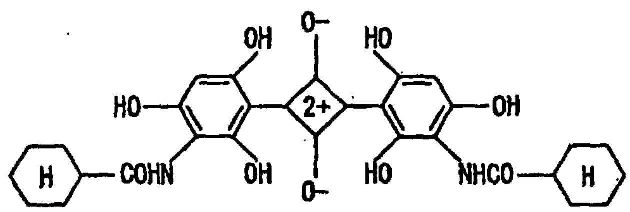

I -26

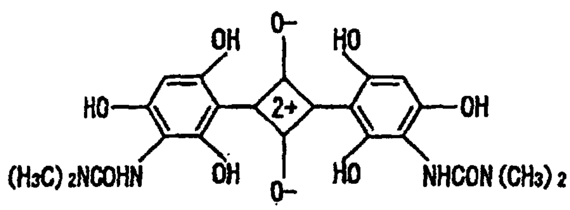

I -27

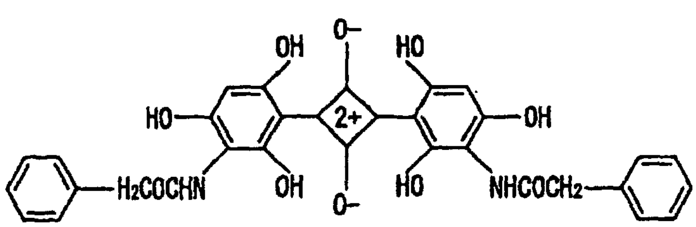

I -28

[Chemical formula 6]

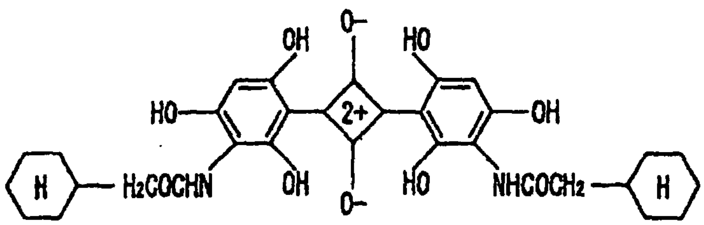

I-29

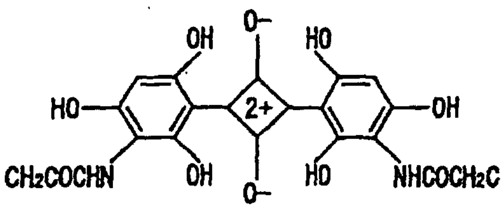

I-30

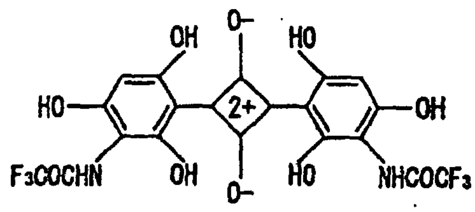

I-31

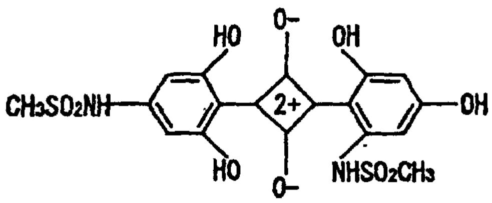

I-32

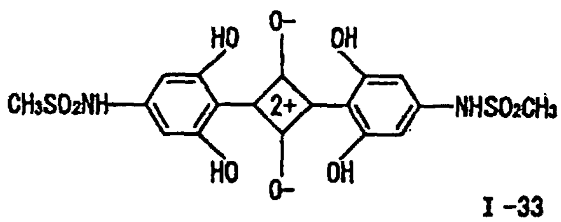

I-33

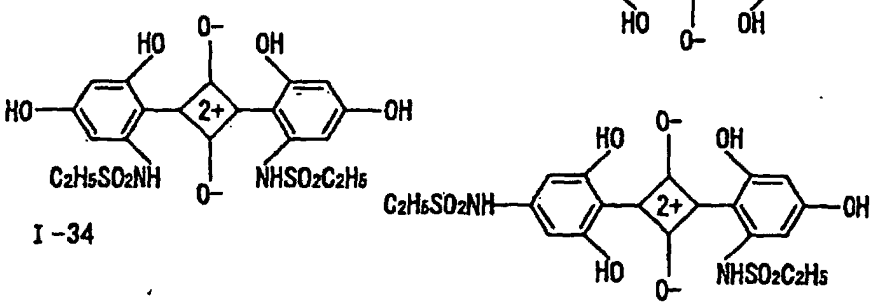

I-34

I-35

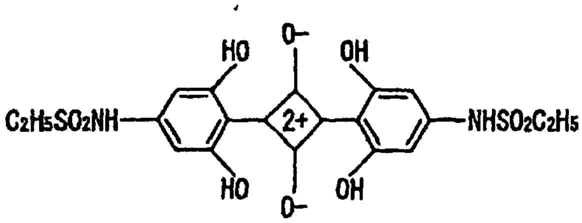

I-36

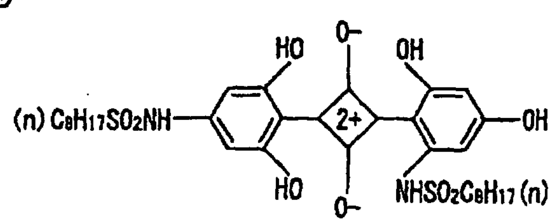

I-37

[Chemical formula 7]

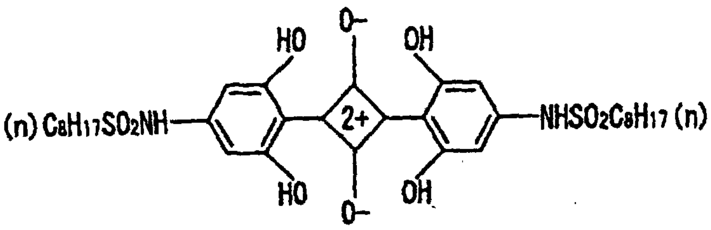

I -38

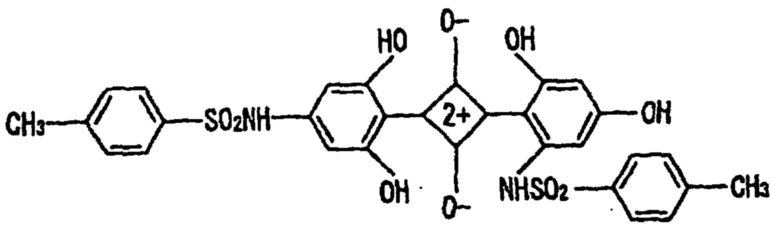

I -39

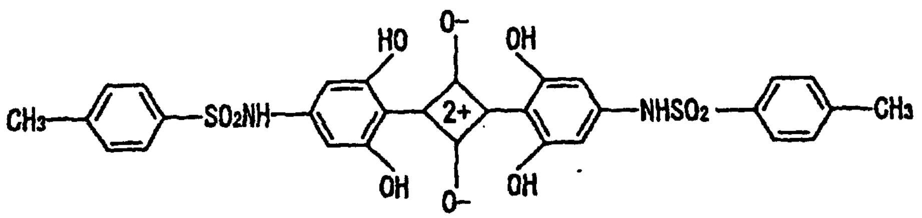

I -40

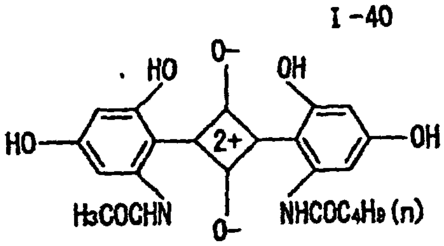

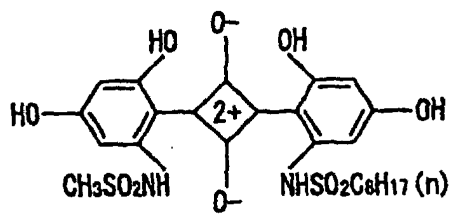

I -41

I -42

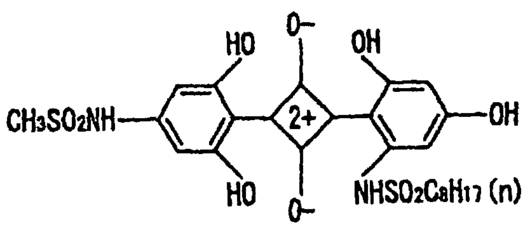

I -43

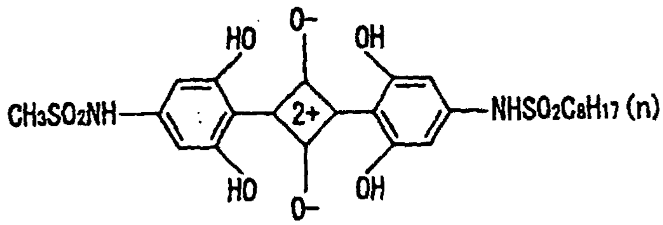

I -44

[Chemical formula 8]

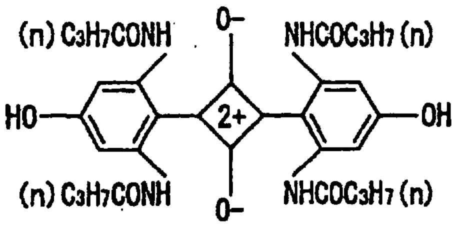

I -45

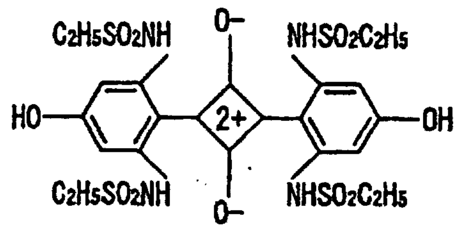

I -46

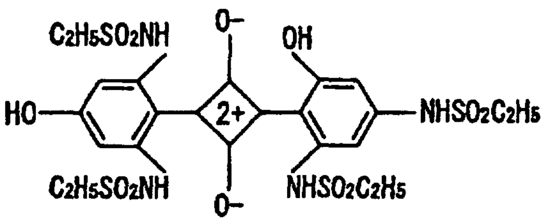

I -47

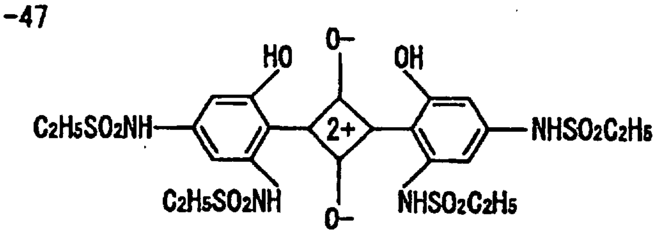

I -48

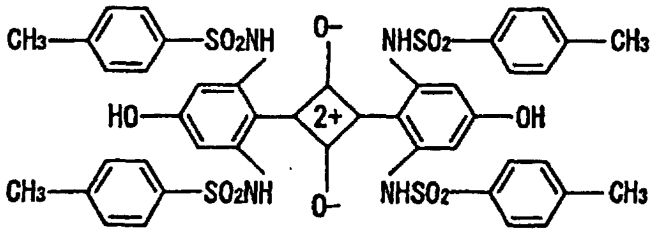

I -49

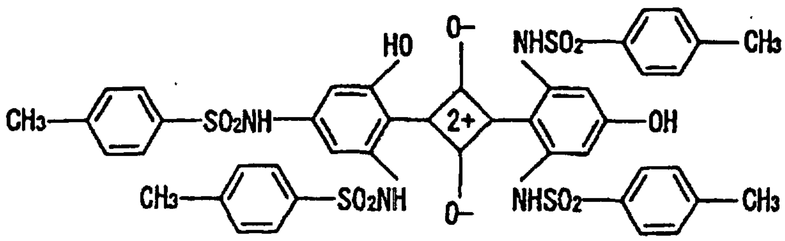

I -50

[Chemical formula 9]

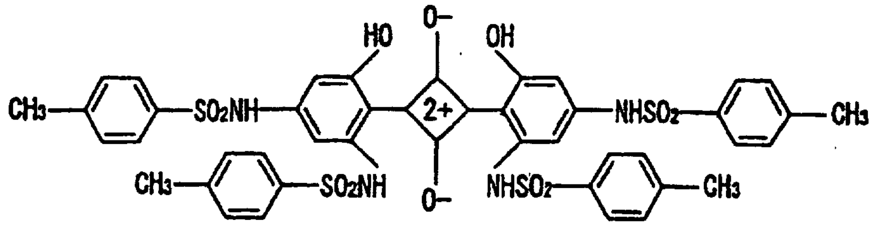

I -51

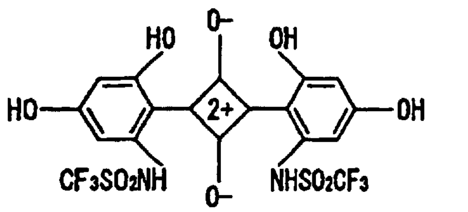

I -52

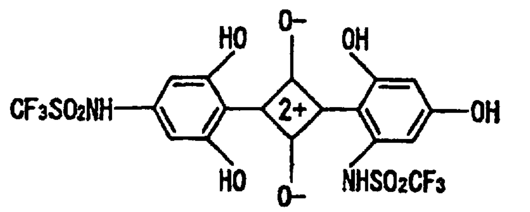

I -53

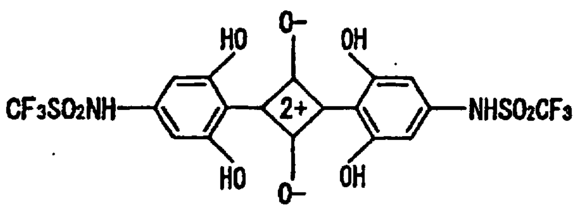

I -54

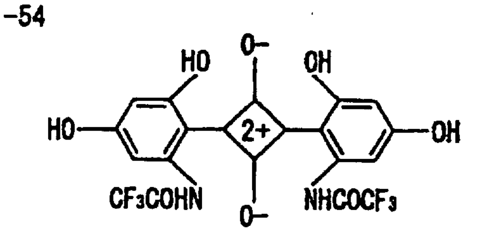

I -55

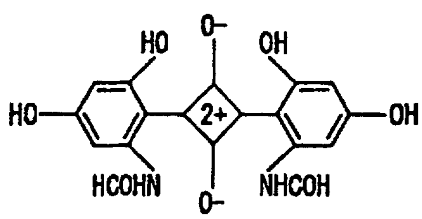

I -56

As a tetraazaporphyrin-family compound suitable to use at the overlapping points of the transmittance distribution curves of red-and- green color filter, the compound of general formula (II) shown in [Chemical formula 10] can be cited as a typical example.

[Chemical formula 10]

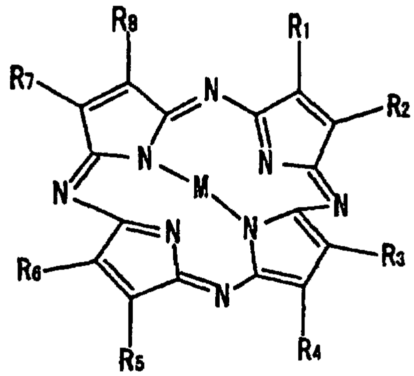

-------(II)

[In the formula (II), $R_1$-$R_8$ is, independently of one another, hydrogen atom, halogen atom, nitro group, cyano group, hydroxy group, amino group, an alkyl group which may have a substituent, alkoxy group which may have a substituent, an aryl group which may have a substituent, an aryloxy group which may have a substituent, an alkylamino group which may have a substituent, dialkylamino group which may have a substituent, and an alkylthio group which may have a substituent. $R_1$ and $R_2$, $R_3$ and $R_4$, $R_5$ and $R_6$, or $R_7$ and $R_8$ may be coupled to form an aliphatic carbon ring. M is two hydrogen atoms, a bivalent metallic atom, trihydric 1-substitution metallic atom, tetrahydric 2-substitution metallic atom, or an oxy metallic atom.

More specifically, compounds of general formulas (II-1) - (II-9) shown in [Chemical formula 11] can be cited as typical examples.

[Chemical formula 11]

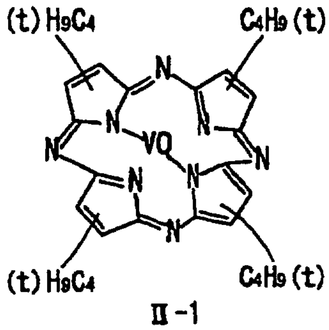

II-1

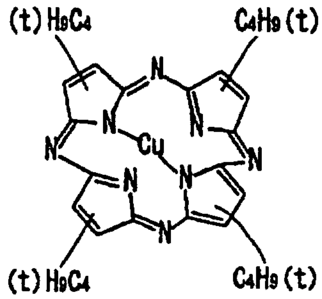

II-2

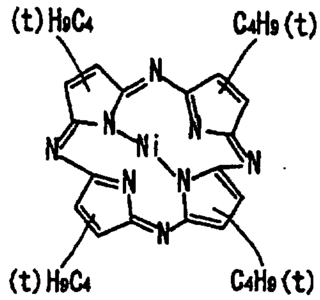

II-3

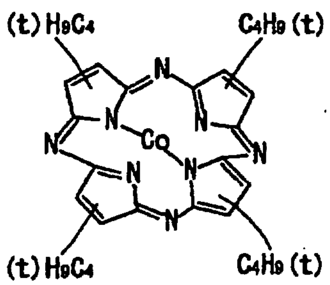

II-4

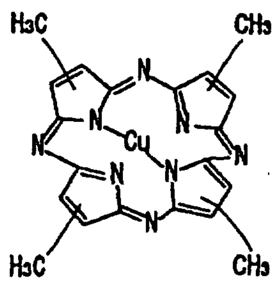

II-5

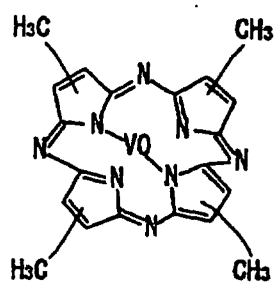

II-6

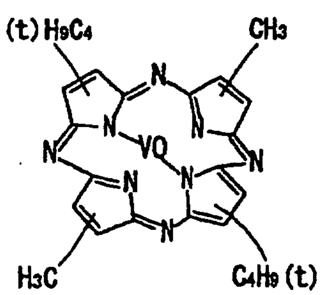

II-7

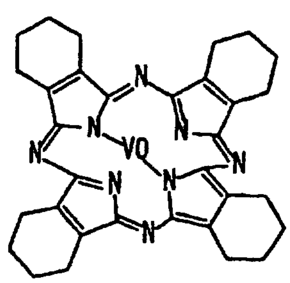

II-8

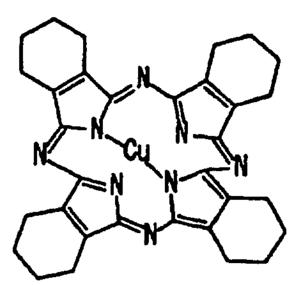

II-9

Also, as pyrazol-family squarylium compounds suitable for use at the overlapping points in transmittance distribution curves of blue-and-red color filter, the compound of general formula (III) shown in [Chemical formula 12] can be cited as a typical example.

[Chemical formula 12]

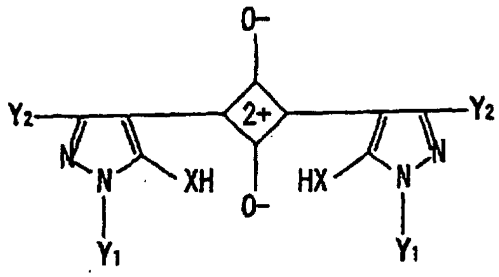

------- (III)

[In the formula (III), $Y_1$ shows a hydrogen atom, an alkyl group which may have a substituent, or an aryl group which may have a substituent. The respective $Y_1$'s may be the same or different. $Y_2$ is a hydrogen atom, an alkyl group which may have a substituent, an amino group which may have a substituent, or an alkoxycarbonyl group which may have a substituent. The respective $Y_2$'s may be the same or different. X shows an -O- or -NH- group.

More specifically, compounds of general formulas (III-1) - (III-8) shown in [Chemical formula 13] can be cited as typical examples.

[Chemical formula 13]

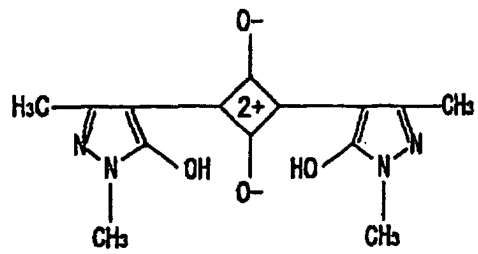

III-1

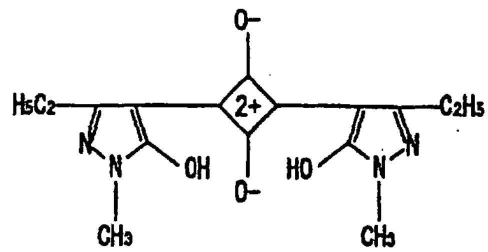

III-2

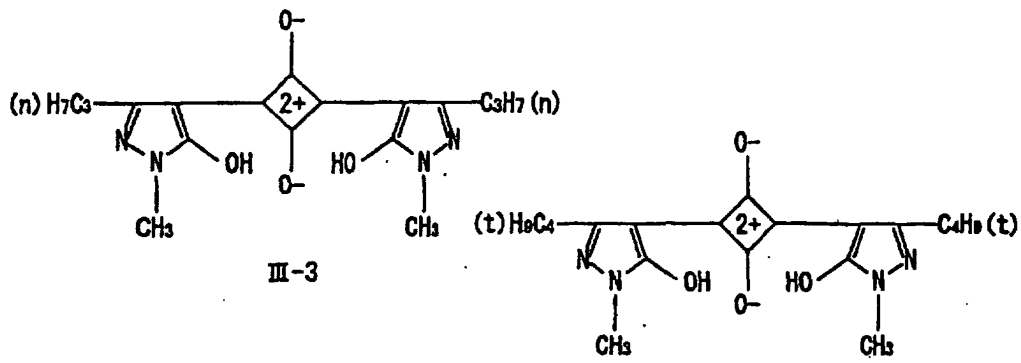

III-3

III-4

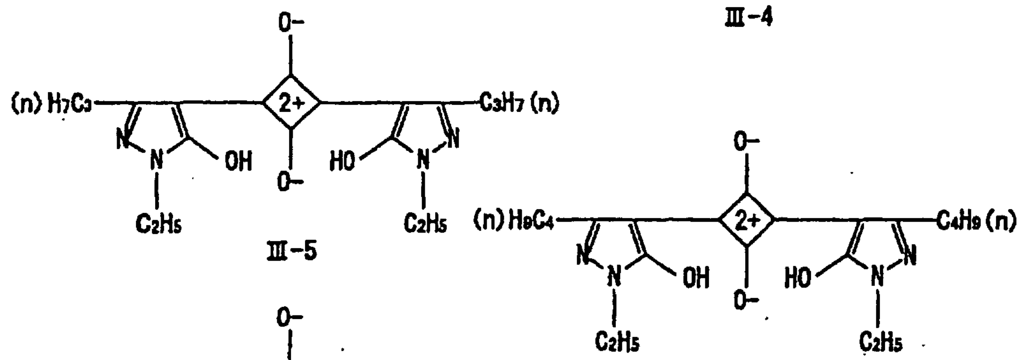

III-5

III-6

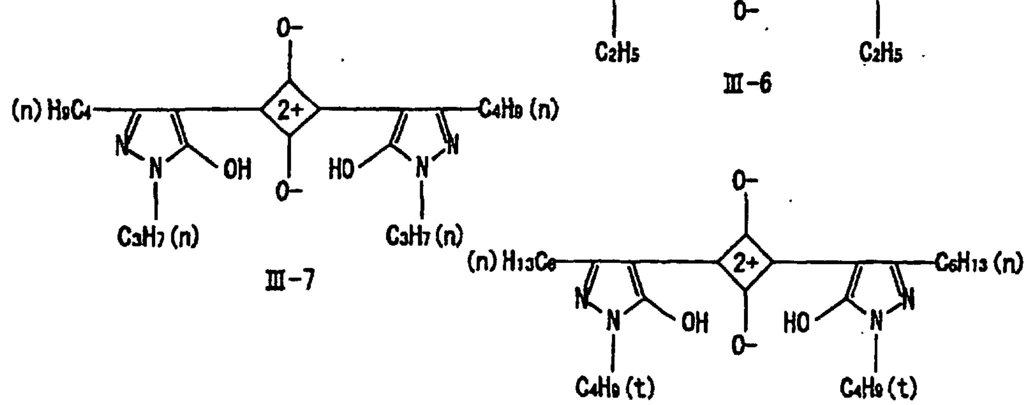

III-7

III-8

Here, these squarylium compounds can be manufactured e.g. by or according to the method described in Angew. Chem. 77 680-681d (1965). Also, these tetraazaporphyrin-family color materials can be manufactured according to the method described in J.Gen.Chem.USSR vol.47,1954-1958(1977).

Further, in this invention, in order to further improve color reproducibility and obtain vivid display images, color materials that selectively absorb even near wavelengths 400 nm are preferably added to the color material-dispersed layer.

As such a color material, for example, dipyrazolylmethyn color material of general formula (IV) shown in [Chemical formula 14] is suitable.

[Chemical formula 14]

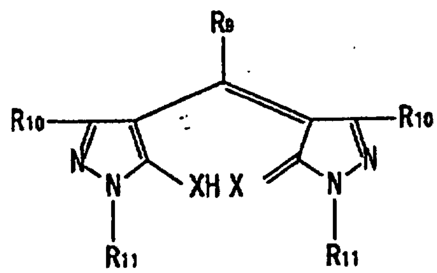

-------- (IV)

[In the formula (IV), $R_9$ is an alkyl group which may have a substituent, an aryl group which may have a substituent, or a hydrogen atom. $R_{10}$ is an alkyl group which may have a substituent, an alkoxy group which may have a substituent, an alkoxycarbonyl group which may have a substituent, an aryl group which may have a substituent, an aryloxy group, an aryloxycarbonyl group which may have a substituent, an amino group which may have a substituent, or a hydrogen atom. $R_{11}$ is an alkyl group which may have a substituent, a cycloalkyl group which may have a substituent, an aryl group which may have a substituent, or a hydrogen atom. X is an oxygen atom or an NH group. These $R_{10}$, $R_{11}$ and X may be different from each other between two pyrazole rings.

More specifically, compounds of general formulas (IV-1) to (IV-9) shown in [Chemical formula 15] can be cited as typical examples.

[Chemical formula 15]

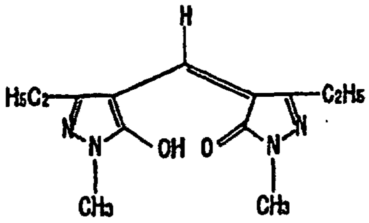
IV-1

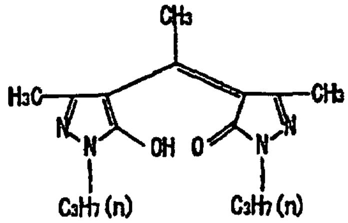
IV-2

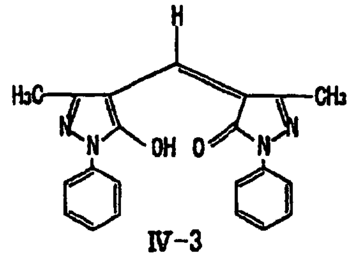
IV-3

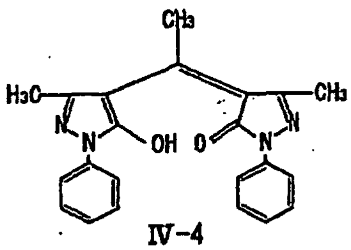
IV-4

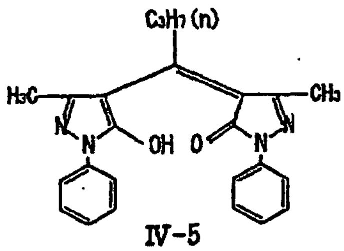
IV-5

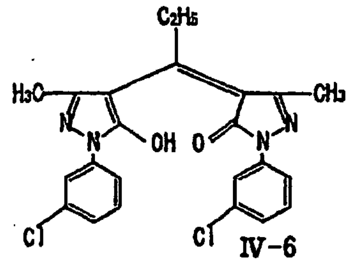
IV-6

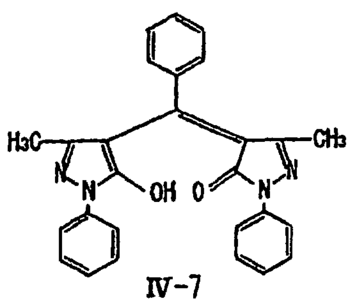
IV-7

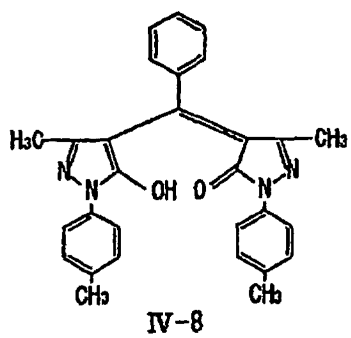
IV-8

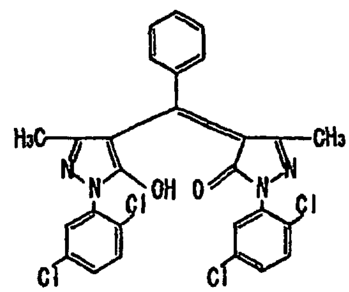
IV-9

Here, these pyrazolylmethyn compounds can be manufactured e.g. by or according to the method described Liebigs Ann. Chem., 1680-1688(1976).

As described above, with respect to a liquid crystal display of which color reproducibility is recently considered extremely important, this invention provides a liquid crystal display device having extremely high color purity (color reproducibility) which can be easily manufactured at a low cost while maintaining high light-emitting efficiency and evenness on the display surface.

This invention is not specifically limited to a liquid crystal display device, and can be suitably used for a display device having a color filter. For example, it can be suitably used for a color, organic EL display device in which a white emission EL element and a color filter are combined.

Examples

Hereinbelow, this invention will be described further in detail with reference to Examples. But as long as it does not exceed its point, it is not limited to the following Examples.

(Example 1)

Using a biaxially stretched polyethylene terephthalate film (PET film made by Mitsubishi Polyester Film Corporation, thickness: 100 micrometers) as a substrate 31, in order to form a surface layer having light diffusibility, a coating liquid was prepared by mixing, into a 30 wt% toluene solution of polymethylmethacrylate resin (DIANAL BR-80 made by Mitsubishi Rayon Co., Ltd.), which is a binder resin, spherical beads having an average particle diameter of 27 micrometers and made of acrylic resin by 200 wt% with respect to the binder resin, diphenylsquarylium compound represented by a general formula (I-34) by 0.130 wt% with respect to the binder resin, and pyrazol-family squarylium compound expressed by a general formula (III-3) by 0.040 wt% with respect to the binder resin.

The coating liquid was applied by bar-coating method and dried. After uniformly applying it at a weighed amount of 5.4 g/m$^2$ (as converted to the binder resin), the solvent was dried to obtain a layer 34 of an organic color material 32 having light diffusion by transparent beads.

Further, in order to provide an air layer, on the side of the film forming the filter of this invention opposite to the side on which the light diffusing layer is formed, ruggedness was formed on the surface of the film forming the filter of this invention by applying by 3.5 g/m$^2$ a coating liquid prepared by mixing spherical beads 13 having an average particle diameter of 27 micrometers and made of acrylic resin to a 30 wt% toluene solution of polymethylmethacrylate resin (DIANAL BR-80 made by Mitsubishi Rayon), which was a binder resin, by 3 wt% with respect to the binder resin.

As the light guide pipe 1, a wedge-shaped cyclic polyolefin-family resin (ZEONOR made by Zeon Corporation) was used which had a size of 289.6 x 216.8 mm, a thickness of 2.0 mm at a thick portion and 0.6 mm at a thin portion with the thickness changing along the short side, a linear light source 2 comprising a cold cathode tube (made by Harison Toshiba Lighting Corp.) having a tube diameter of 1.8 mm was arranged at the long side on the thick side, and further, the cold cathode tube was covered by a reflector plate (silver reflector plate made by Mitsui Chemical) having an Ag deposit layer as a light reflecting surface so that the emitted light beams from the linear light source 2 would efficiently enter the side end (light incoming surface) 1a of the light guide pipe 1 on its thick side.

On the surface 1c opposite to the light incoming surface 1b of the light guide pipe 1, fine circular patterns having a rough surface 6b, the diameter of which gradually grows as their distances increase from the linear light source 2, were formed by patterning by transcribing from a mold. As shown in Fig. 8, the diameters of the rough surface patterns were 130 micrometers near the light source, and as their distance from the light source 2 increased, they gradually increased so that at places farthest from the light source 2, they were 230 micrometers.

Here, the mold used for the formation of the fine circular patterns having the rough surface 6b was prepared by laminating a dry film resist having a thickness of 50 micrometers on a SUS base plate, and forming an outlet at portions corresponding to the patterns by photolithography. Further, after subjecting the mold to uniform blast working under a projection pressure of 0.3 MPa with #600 spherical glass beads by sand blast method, the dry film resist was peeled.

Further, on the light emitting surface 1b of the light guide pipe 1, as shown in Fig. 8, an array 1d of triangular prisms having an apex angle of 90 degrees and a pitch of 50 micrometers was arranged with the ridgelines substantially perpendicular to the light incoming surface 1a of the light guide pipe 1 to increase the condensing properties of light beams emitted from the light guide pipe 1. A mold used for the formation of the condensing element array comprising the triangular prism array 1d was obtained by cutting a stainless base plate subjected to nickel nonelectrolytic plating by use of a single crystal diamond cutting tool.

As shown in Fig. 8, the surface light source device 11 was formed by arranging a light reflecting sheet 7 (Lumirror E60L made by Toray Industries, Inc.) on the side 1c opposite the light emitting surface 1b of the light guide pipe 1, arranging the film forming the filter 18 of this invention, which was obtained by the abovesaid method, on the light emitting surface 1b, and providing two prism sheets (BEFIII made by 3M) 38, 39 having an array of triangular prisms having an apex angle of 90 degrees and a pitch of 50 micrometers on this film 5 so that the ridgelines of the respective prism sheets intersect at a right angle.

The cold cathode tube light source 2 was turned on by high frequency through an inverter (HIU-742A made by Harison Toshiba Lighting Corp.) to obtain the surface light source device 11. The optical characteristics in the effective emission area on the surface light source 11 were measured by use of a luminance measuring device (BM-7 made by Topcom Inc.), and a transmission type active matrix driven liquid crystal panel was arranged on the surface light source device 11 and driven so that the respective RGB colors would be illuminated, and the chromaticity was measured. The measurement results are shown in Table 1.

Since the color reproducibility improved, the images were brilliant and sharp. Thus a liquid crystal display

device which was free of uncomfortableness even when DVD (digital video disk) or television images were displayed was obtained.

(Comparative Example 1)

For the filter 18 described in the Example, except that diphenylsquarylium compound and pyrazol-family squarylium compound were not mixed into the coating liquid for forming the light diffusing coating layer, a surface light source device was formed in the same manner as in the Example, and evaluation was made by providing a liquid crystal panel. The results are shown in Table 1.

TABLE 1

| | On surface light source device | | On liquid crystal panel | | | |
|---|---|---|---|---|---|---|
| | (1) Brightness (nit) | (1) Unevenness in brightness (min./max. x 100.0%) | Chromaticity coordinate when each color is displayed | | | NTSC ratio (%) |
| | | | R | G | B | |
| Example 1 | 1729 | 74.5 | X=0.629 Y=0.311 | X=0.291 Y=0.624 | X=0.151 Y=0.092 | 70.8 |
| Comparative Example 1 | 1911 | 75.1 | X=0.618 Y=0.332 | X=0.315 Y=0.603 | X=0.153 Y=0.092 | 62.8 |

(1) Average value at 25 points in the effective emission area when the tube current is 6mA.

(Example 2)

Using a commercial iodine-family polarized film (transmittance: 44%, degree of polarization: 99.9%) as a substrate, a coating liquid was prepared by mixing a diphenyl squarylium-family compound expressed by formula (I-35) of [Chemical formula 2] and pyrazol-family squarylium compound expressed by formula (III-3) of [Chemical formula 13] by 0.190 wt% and 0.053 wt%, respectively, relative to the binder resin content into a 30 wt% toluene solution of polymethylmethacrylate resin (DIANAL BR-80 made by Mitsubishi Rayon) as the binder resin, and the coating liquid was applied by bar-coating method, and dried. After uniformly coating at a weighed amount of 5.4 $g/m^2$ (converted to binder resin content), the solvent was dried to obtain a color material-dispersed layer of organic color materials.

As shown in Fig. 1, the polarized film (sign 19) having the color material-dispersed layer (sign 18) was stuck on the front side of a transmission type active matrix-driven twisted nematic mode liquid crystal panel (15.1 inch size), while on the back, an ordinary polarized film not provided with a color material-dispersed layer was stuck to obtain a liquid crystal panel. Further, using a side light type back light having a cold-cathode tube as a light source as a backlight light source, a liquid crystal display device was formed. With the back light turned on and the liquid crystal panel driven so that each color of RGB would be turned on, the chromaticity value was measured using a luminance meter (BM-7 made by Topcom Inc.). The measurement results are shown in Table 2.

Since color reproducibility improved, images become vivid and crisp. Thus a liquid crystal display device which had no sense of incompatibility even when DVD (digital video disc) or television images were displayed was obtained.

Fig. 34 shows spectral transmittance characteristics of the color filter mounted on the liquid crystal panel and those of its color material-dispersed layer. As shown in Fig. 34, diphenylsquarylium compound has light absorption peaks having a light absorption half-band width of 21 nm, at positions 13 nm away from the overlapping points of the color filter. Pyrazol-family squarylium compoundd has light absorption peaks having a light absorption half-band width of 43 nm at positions 8 nm away from the overlapping points. Further, since the light absorption peaks formed in the color material-dispersed layer were only two, it was confirmed that necessary spectra were not cut, and emission spectra that lower color reproducibility were cut with extremely high efficiency.

(Comparative Example 2)

Except that the color material-dispersed layer was not provided on the polarized film, a liquid crystal display device was prepared in the same manner as in Example 2, and evaluation was made. The results are shown in Table 2.

(Example 3)

Using a biaxially oriented polyethylene terephthalate film (PET film made by Mitsubishi Polyester Film Corporation, thickness: 100 μm) as a substrate, in order to form a surface layer having a light-diffusing layer, a coating solution was prepared by mixing acrylic resin spherical beads having an average particle diameter of 35 μm, tetraazaporphyrin-family compound expressed by formula (II-1) of [Chemical formula 11], and pyrazol-family squarylium compound expressed by formula (III-3) of [Chemical formula 13] by 130 wt%, 0.105 wt% and 0.040 wt%, respectively, relative to a binder resin content into a 20 wt% dimethoxyethane solution of polymethyl methacrylate resin (DIANAL BR-80 made by Mitsubishi Rayon) as the binder resin.

The coating solution was coated by bar-coating method, dried. After uniformly coating at a weighed amount of 5.9 $g/m^2$ (converted to binder resin content), the solvent was dried to obtain a color material-dispersed layer having light diffusion by the transparent beads.

Further, in order to provide an air layer, on the surface opposite to the one on which was formed the light-diffusing layer having the color material-dispersed layer, a coating liquid prepared by adding acrylic resin spherical beads having an average particle diameter of 27 μm by 3 wt% relative to the binder resin content to a 30 wt% toluene solution of polymethylmethacrylate resin (DIANAL BR-80 made by Mitsubishi Rayon) as the binder resin was applied by 3.5 $g/m^2$ to form ruggedness on the surface of the light-adjusting sheet.

As the light-guiding pipe, a flat plate-like acrylic resin having a size of 325.6 x 242.8 mm and a thickness of 4.0 mm (80NHX made by Asahi Kasei Corporation) was used, two linear sources comprising cold-cathode tube (made by Harrison Toshiba Lighting Corp.) having a tube diameter of 2.4 mm were arranged at two opposed longitudinal sides, and the cold-cathode tubes were covered by reflector plates (silver reflector plate made by Mitsui Chemical Inc.) having their Ag deposit layer as a light reflecting surface so that outgoing light beams from the linear light sources would efficiently enter the side end portions (light incident surfaces) of the light guide pipe.

On the surface opposite to the light-outgoing surface of the light guide pipe, a fine circular pattern comprising a rough surface of which the diameter increases gradually as it moves away from the linear light sources was patterned by transferring from a mold. As shown in Fig. 1, the diameter of the rough surface pattern is 100 μm near the light sources and gradually increases as it moves away from the light sources, and is 170 μm at a place farthest from the

light source.

Here, the mold used to form the fine circular pattern was prepared by laminating a dry film resist having a thickness of 50 μm on a SUS substrate, and forming an opening at a portion corresponding to the pattern by photolithography. The mold was uniformly blasted at a projecting pressure of 0.4 MPa with #600 spherical glass beads by sand blast method, and the dry film resist was peeled.

On the light-outgoing surface of the light guide pipe, as shown in Fig. 1, a triangular prism array having an apex angle of 135 degrees and a pitch of 50 μm was provided so that their ridge lines are substantially perpendicular to the light incident surface of the light guide pipe to increase the condensing properties of light beams emitted from the light guide pipe. A mold used to form the array portion of the condensing element was obtained by grinding a stainless substrate subjected to nickel electroless plating with a monocrystal diamond cutting tool.

As shown in Fig. 1, on the side opposing the light outgoing surface of the light guide pipe, a light reflecting sheet (Lumirror E60L made by Toray Industries, Inc.) was provided, and on the light outgoing surface, the light-adjusting sheet obtained by the above method was provided, and further, on the light outgoing surface, the sheet (BEFIII made by 3M) provided with a triangular prism array having an apex angle of 90 degrees and a pitch of 50 μm was provided as the back light so that the prism ridgelines would be parallel to the light incident surface.

Through an inverter (HIU-742A made by Harison Toshiba Lighting Corp.), the cold cathode tube light sources were turned on by high frequency to provide the back light. The optical properties in the effective light emitting area on the back light were measured using a luminance measuring device (BM-7 made by Topcom Inc.), and the chromaticity when each color was displayed was measured after a transmission type active matrix-driven liquid crystal panel was provided on the backlight and driven so that each color of RGB would be turned on. The measuring results are shown in Table 2.

Since color reproducibility improved, displayed images were vivid and crisp, and a liquid crystal display device was obtained which had no sense of incompatibility even when DVD (digital video disc) or television images were displayed.

Tetraazaporphyrin-family compound had light absorption peaks having a light absorption half-band width of 35 nm at positions 8 nm away from the overlapping points of the color filter. Pyrazol-family squarylium compound had light absorption peaks of light absorption half-band width of 45 nm at positions 11 nm from the overlapping points. Further, since the light absorption peaks formed in the color material-dispersed layer were only two, it was confirmed that unnecessary spectra were not cut, and emission spectra that would lower color reproducibility were cut with extremely high efficiency.

(Comparative Example 3)

For the light-adjusting film, except that a tetraazaporphyrin-family compound and pyrazol-family squarylium compound were not mixed into the coating liquid for forming the light-diffusing coating layer, a back light was prepared in the same manner as in Example 2, and evaluation was made with the liquid crystal panel arranged. The results are shown in Table 2.

TABLE 2

| | (1) Chromaticity coordinate when each color is displayed | | | NTSC ratio (%) |
|---|---|---|---|---|
| | R | G | B | |
| Example 2 | X=0.631<br>Y=0.302 | X=0.278<br>Y=0.629 | X=0.156<br>Y=0.097 | 72.0 |
| Comparative Example 2 | X=0.615<br>Y=0.316 | X=0.304<br>Y=0.611 | X=0.153<br>Y=0.099 | 64.0 |
| Example 3 | X=0.625<br>Y=0.305 | X=0.265<br>Y=0.652 | X=0.150<br>Y=0.088 | 76.8 |
| Comparative Example 3 | X=0.619<br>Y=0.312 | X=0.301<br>Y=0.613 | X=0.153<br>Y=0.099 | 65.7 |

(1) Average value at 25 points in the effective emission area

(Example 4)

Using a commercial iodine-family polarizing film (transmission: 44%, polarity: 99.9%) as a substrate, a coating

liquid was prepared by mixing, into a 30 wt% toluene solution of polymethylmethacrylate resin (DIANAL BR-80 made by Mitsubishi Rayon), which is a binder resin, 0.215 wt% of diphenylsquarylium compound expressed by formula (I-35) and 0.120 wt% of pyrazol-family squarylium compound expressed by formula (III-3) by 0.215 wt% and 0.120 wt%, respectively, with respect to the binder resin. The coating liquid was applied by bar coating method and dried, and after uniformly applying it at a weighed amount of 5.7 $g/m^2$ (converted to the binder resin), the solvent was evaporated to obtain an organic color material dispersed layer.

As shown in Fig. 3, a polarizing film having the organic color material dispersed layer was stuck on the back (side facing a back light) of a transmission type active matrix drive twisted nematic mode liquid crystal panel (15.1 inch size), and on the front side, an ordinary polarizing film not provided with an organic color material dispersed layer was stuck to obtain a liquid crystal panel. Further, a liquid crystal display device was structured with a side light type surface light source device using a cold cathode tube as the light source as a backlight light source. The back light was turned on and the liquid crystal panel was driven so that the respective RGB colors would be turned on, and the chromaticity was measured when the respective colors were turned on. An NTSC ratio of 71.1% was obtained.

Since the color reproducibility improved, display with brilliant and sharp images was obtained. Thus a liquid crystal display device was obtained in which there is uncomfortableness even when DVD (digital video disk) or television images were displayed. Further, since the screen was dark black even when the display was off, a display device having high depth as an interior and giving the feeling of high quality was obtained.

Further, from the spectral transmission properties of the color filter mounted on the liquid crystal panel and the transmission properties of the polarizing film having a coating of the abovesaid organic color materials, it was confirmed that for diphenylsquarylium compound, it had a light absorption peak at a position 13 nm away from the overlap point of the color filter, and for pyrazol-family squarylium compound, it had a light absorption peak at a position 8 nm from the overlap point, and that emission spectra that lower color reproducibility had been cut extremely efficiently.

(Example 5)

Using a biaxially stretched polyethylene terephthalate film (PET film made by Mitsubishi Polyester Film Corporation, thickness: 100µm) as a substrate, in order to form a surface layer having a light diffusing layer, into a 20 wt% dimethoxyethane solution of polymethylmethacrylate resin (DIANAL BR-80 made by Mitsubishi Rayon Co., Ltd.), which was a binder resin, a coating liquid was prepared by mixing spherical beads having an average particle diameter of 35 micrometers and made of acrylic resin, tetraazaporphyrin-family compound expressed by formula (II-1), and pyrazol-family squarylium compound expressed by formula (III-3) by 130 wt%, 0.125 wt% and 0.091 wt%, respectively, with respect to the binder resin.

The coating liquid was applied by bar coating method and dried, and after uniformly applying it at a weighed amount of 5.4 $g/m^2$ (converted to the binder resin), the solvent was evaporated to obtain an organic color material dispersed layer having light diffusing properties due to transparent beads.

Further, in order to provide an air layer, on the surface opposite to the one on which was formed the light-diffusing layer comprising the light adjusting film, ruggedness was formed by preparing a coating liquid by adding spherical beads having an average particle diameter of 27 micrometers and made of acrylic resin to a 30 wt% toluene solution of polymethylmethacrylate resin (DIANAL BR-80 made by Mitsubishi Rayon Co., Ltd.), which was a binder resin, by 3 wt% with respect to the binder resin, and applying the coating liquid by 3.5 $g/m^2$. This light adjusting film was arranged on the back light to provide a liquid crystal display device.

As a result of evaluation with the display turned on, color reproducibility improved as in Example 1, so that images were brilliant and sharp. Thus, a liquid display device was obtained in which there is no uncomfortableness even when DVD (digital video disk) and television images were displayed. Further, since the screen was dark black even when the display was off, a display device having high depth as an interior and high quality feeling was obtained. The NTSC ratio was 69.3%.

From the spectral transmission properties of the color filter mounted on the liquid crystal panel, and the transmission properties of the polarizing film on which a coating of the organic color materials was provided, it was confirmed that for the tetraazaporphyrin-family compound, it had a light absorption peak at a position 8 nm from the overlap point of the color filter, and for the pyrazol-family squarylium compound, it had a light absorption peak at a position 11 nm from the overlap point. Thus it was confirmed that emission spectra that lower color reproducibility were efficiently cut.

(Comparative Example 4)

Except that a polarizing film provided with an organic color material dispersed layer was stuck on the front side of the liquid crystal cells and an ordinary polarizing film was stuck on the side facing the back light (side near the light source), a liquid display device was prepared in the same manner as in Example 4 to conduct evaluation. The NTSC ratio was 68.8%.

When the liquid crystal display was turned on, external light was reflected, so that the screen looked pink. This is not preferable in appearance. Thus the feeling of high quality was too poor to use it as a TV.

(Example 6)

Using a transparent biaxially stretched polyethylene terephthalate film (PET film made by Mitsubishi Polyester Film Corporation, thickness: 100 μm) as a substrate film 5a, a coating liquid was prepared by mixing into a ultraviolet-setting acrylic resin, diphenylsquarylium compound expressed by formula (I-34) and pyrazol-family squarylium compound expressed by formula (III-3) by 0.015 wt% and 0.005 wt%, respectively, with respect to the binder resin.

This coating liquid was applied by bar coating method (film thickness: 52 micrometers), and with a nickel mold formed with an array of fine triangular prisms having an apex angle of 90 degrees and a pitch of 50 micrometers in close contact with the coating liquid layer, an ultraviolet lamp was illuminated to set the ultraviolet setting resin layer to transcribe the shape of the triangular prism array, thereby forming an organic color material dispersed layer 5b having condensing elements 4 on the surface of the substrate film 5a.

Further, in order to form an air layer a, on the surface of the substrate film 5a opposite to the organic color material dispersed layer 5b, a coating liquid was applied which was prepared by adding to a 30 wt% toluene solution of polymethylmethacrylate resin, which was a binder resin, spherical beads having an average particle diameter of 27 micrometers and made of an acrylic resin by 5 wt% with respect to the binder resin, by 3.5 $g/m^2$ to form rugged surface.

Using a flat board-shaped cyclic polyolefin-family resin (ZEONOR made by Zeon Corporation) having a size of 315.2 x 232.0 mm and a thickness of 4.0 mm as the light guide pipe 1, two linear light sources 2 comprising cold cathode tubes (made by Harison Toshiba Lighting Corp.) having a tube diameter of 2.2 mm were provided at a long side opposite to each other, and the cold cathode tubes were covered by a reflector 3 (silver reflector plate made by Mitsui Chemical, Inc.) having an Ag deposit layer as a light reflecting surface so that emission light beams from the light sources 2 efficiently would enter through the side end of the light guide pipe 1, i.e. light incoming surface 1a.

On the side of the light guide pipe 1 opposite the light emitting surface 1b, fine circular patterns having a rough surface were patterned by transcribing from a mold such that their diameters increase as the distance from the linear light sources 2 increases. The diameters of the rough surface patterns are 160 micrometers near the light sources, increases as the distance from the light source increases, and 230 micrometers at the place remotest from the light sources, and the arrangement pitch is 200 micrometers.

Here, for the mold used for the formation of the fine circular patterns having a rough surface, a dry film resist having a thickness of 25 micrometers was laminated on a SUS base board, openings was formed at portions corresponding to the patterns by photolithography, and after uniformly blasting the mold under a projection pressure of 0.2 MPa with #600 alumina particles by sand blasting, the dry film resist was peeled.

As shown in Fig. 10, on the side of the light guide pipe 1 opposite the light emitting surface 1b, a light reflecting sheet (Lumirror E60L made by Toray Industries, Inc.) was arranged as the reflector 7, and on the light emitting surface 1b, the condensing film 5 obtained by the above method was arranged, and a light diffusing film 9 having a haze of 20% was arranged on the light condensing film 5 to form a surface light source device.

The cold cathode tube light source was turned on by high frequency through an inverter (HIU-742A made by Harison Toshiba Lighting Corp.) to obtain a surface light source device. The optical properties in the effective emitting light area on the surface light source device were measured using a luminance measuring device (BM-7 made by Topcom Inc.), and a transmission type active matrix driven liquid crystal panel was arranged on the surface light source device, and after driving so that the RGB colors were turned on, the chromaticity values when the respective colors were displayed were measured. The results are shown in Table 3.

Since the color reproducibility and brightness improved simultaneously, display was such that images were brilliant and sharp. Thus a liquid display device was obtained in which even when DVD (digital video disk) and television images were displayed, there was no uncomfortable feeling.

Further, while as the liquid crystal panel, an active matrix driven inplane switching type liquid crystal panel provided with a coloring matter dispersed type color filter was used, the diphenylsquarylium compound showed a sharp light absorbing peak of which the light absorbing half band width was 38 nm at a position 12 nm from the overlap point of the coloring matter dispersed type color filter, and the pyrazol-family squarylium compound showed a sharp light absorbing peak of which the light absorbing half band width was 43 nm at a position 11 nm from the overlap point of the coloring matter dispersed type color filter, and further, there were only two light absorbing peaks formed in the organic color material dispersed layer. Thus it was confirmed that unnecessary spectra that cause lowering of brightness were not cut, and only emission spectra that lower the color reproducibility were extremely efficiently cut.

TABLE 3

| On surface light source device | | | On liquid crystal panel | | | |
|---|---|---|---|---|---|---|
| Brightness (nit) | Unevenness in brightness (min./max.) x 100 (%) | Rising rate of brightness when condensing film is arranged | Chromaticity coordinate when each color is displayed | | | NTSC ratio (%) |
| | | | R | G | B | |
| 1729 | 74.5 | 2.22 | X=0.631<br>Y=0.319 | X=0.291<br>Y=0.639 | X=0.148<br>Y=0.090 | 73.5 |

In Table 3, brightness is an average value at 25 points in the effective emission area when the tube current was 6 mA.

(Example 7)

With a commercial iodine-family polarizing film (transmission 44%, polarity 99.9%) as a substrate, into a 25 wt% toluene solution of polymethylmethacrylate resin (DIANAL BR-80 made by Mitsubishi Rayon Co., Ltd.), which is a binder resin, 0.160 wt% diphenylsquarylium compound expressed by a formula I-35 and 0.053 wt% pyrazol-family squarylium compound expressed by formula III-3, and 78 wt% spherical beads having an average particle diameter of 35 micrometers and made of an acrylic resin were mixed with respect to the binder resin to prepare a coating liquid. The coating liquid was applied to the polarizing film by bar coating and after uniformly applying it at a weighed amount of 4.8 $g/m^2$ (as converted to the binder resin), the solvent was evaporated to obtain the polarizing film of this invention.
Collimate light of an He-Ne laser with the beam diameter increased by a focal type optical unit was introduced into this polarizing film, and the emission light amount distribution at each emission angle was measured as shown in Fig. 4. As a result, the diffusion angle was 17 degrees. It was confirmed that a polarizing film having light diffusing properties suitable for use in this invention was obtained.
As shown in Fig. 9, a liquid crystal panel was obtained by sticking a polarizing film having an area where the organic color materials were dispersed on the back of a transmission type active matrix driven twisted nematic mode liquid crystal panel (15.1 inch size), and sticking an ordinary polarizing film on the front side. Further, with a side light type surface light source device using a cold cathode tube as a backlight light source, a liquid crystal display device was structured. The back light was turned on, the liquid crystal panel was driven to turn on the respective RGB colors, and the chromaticity values when the respective colors were turned on were measured using a luminance meter (BM-7 made by Topcom Inc.). The results are shown in Table 4.
Since color reproducibility improved, display images became brilliant and sharp, so that a liquid crystal display device was obtained in which there was no uncomfortableness even when DVD (digital video disk) and television images were displayed.
Further, diphenylsquarylium compound showed a light absorbing peak of which the light absorbing half band width was 25 nm at a position 13 nm from the overlap point of the color filter, and the pyrazol-family squarylium compound showed a light absorbing peak of which the light absorbing half band width was 41 nm at a position 8 nm from the overlap point, and further, since there were only two light absorbing peaks formed in the area where the organic color materials were dispersed, it was confirmed that unnecessary spectra were not cut, and emission spectra that lower the color reproducibility were extremely efficiently cut.

(Example 8)

With a commercial iodine-family polarizing film (transmission 44%, polarity 99.9%) as a substrate, into a 20 wt% dimethoxyethane solution of polymethylmethacrylate resin (DIANAL BR-80 made by Mitsubishi Rayon Co., Ltd.), which is a binder resin, 0.113 wt% tetraazaporphyrine compound expressed by formula II-2, 0.053 wt% pyrazol-family squarylium compound expressed by a formula III-3, 150 wt% spherical glass beads having an average particle diameter of 12 micrometers, and 0.3 wt% of an ultraviolet absorber comprising 2-(2'-hydroxy-5'-t-butylphenyl) benzotriazole were mixed with respect to the binder resin to prepare a coating liquid. The coating liquid was applied to the polarizing film by bar coating and dried, and after uniformly applying it at a weighed amount of 3.9 $g/m^2$ (as converted to the

binder resin), the solvent was evaporated to obtain the polarizing film of this invention.

Collimate light of an He-Ne laser in which the beam diameter was increased by an afocal type optical unit was introduced into this polarizing film, and the emission light amount distribution at every emission angle was measured as shown in Fig. 4. The diffusion angle was 21 degrees. It was confirmed that a polarizing film having light diffusing properties suitable for used in this invention was obtained.

As shown in Fig. 9, a liquid crystal panel was obtained by sticking a polarizing film having an area where the organic color materials are dispersed on the back of a transmission type active matrix driven twisted nematic mode liquid crystal panel (15.1 inch size), and sticking an ordinary polarizing film on the front side. Further, with a side light type surface light source device having a cold cathode tube as a backlight light source, a liquid crystal display device was structured. The back light was turned on, the liquid crystal panel was driven to turn on the respective RGB colors, and the chromaticity values when the respective colors were turned on were measured using a luminance meter (BM-7 made by Topcom Inc.). The results are shown in Table 4.

Since color reproducibility improved, display images were brilliant and sharp, so that a liquid crystal display device was obtained in which there was no uncomfortableness even when DVD (digital video disk) and television images were displayed.

Further, the tetraazaporphyrine-family compound showed a light absorbing peak of which the light absorbing half band width was 32 nm at a position 8 nm from the overlap point of the color filter, and the pyrazol-family squarylium compound had a light absorbing peak of which the light absorbing half value width was 40 nm at a position 8 nm from the overlap point, and further, since there were only two light absorbing peaks formed in the area where the organic color materials were dispersed, it was confirmed that unnecessary spectra are not cut, and emission spectra that lower the color reproducibility are extremely efficiently cut.

(Comparative Example 5)

Compared with the liquid crystal display device described in Example 7, except that an area where organic color materials and transparent beads were dispersed was not provided on the polarizing film, a liquid crystal display device was prepared in the same manner as in Example 1, and evaluation was carried out. The results are shown in Table 4.

TABLE 4

| | (1) Chromaticity coordinate when each color is displayed | | | NTSC ratio (%) |
|---|---|---|---|---|
| | R | G | B | |
| Example 7 | X=0.636<br>Y=0.325 | X=0.301<br>Y=0.611 | X=0.149<br>Y=0.090 | 68.8 |
| Example 8 | X=0.629<br>Y=0.310 | X=0.312<br>Y=0.610 | X=0.148<br>Y=0.091 | 67.5 |
| Comparative Example 5 | X=0.620<br>Y=0.335 | X=0.319<br>Y=0.608 | X=0.150<br>Y=0.092 | 63.7 |

(1) Average value at 25 points in the effective emission area

(Example 9)

Using a cold cathode tube lamp having an Nb electrodes and having a tube diameter of 2.4 mm and a lamp length of 317 mm, a cold cathode tube that produces emission colors that are stronger in green than normal by selectively increasing the rate of the green phosphor was made. It was turned on by high frequency with an inverter (HIU742A made by Harison Toshiba Lighting Corp.), and the color coordinate in the x-y color system was measured using a luminance meter (BM-7 made by Topcom Inc.). The color coordinate was x = 0.292, y = 0.319. Here, the emission efficiency of the green phosphor was 47.61 m/W, it was primary color component having the greatest emission efficiency among the three RGB primary colors.

Next, with a transparent biaxially stretched polyethylene terephthalate film (PET film made by Mitsubishi Polyester Film Corporation, thickness: 100 μm) as a substrate, into a 30 wt% toluene solution of polymethylmethacrylate resin (DIANAL BR-80 made by Mitsubishi Rayon Co., Ltd.), which was a binder resin, 200 wt% spherical beads having an average particle diameter of 25 micrometers and made of an acrylic resin was mixed with respect to the binder resin to prepare a coating liquid. The coating liquid was applied by bar coating and dried, and after uniformly applying

it, the solvent was evaporated to provide a light diffusing layer by the transparent beads.

Further, to the surface opposite the surface on which the light diffusing layer was formed, into a 30 wt% toluene solution of polymethylmethacrylate resin, which was a binder resin, 5 wt% spherical beads having an average particle diameter of 25 micrometers and made of an acrylic resin, 0.540 wt% diphenylsquarylium compound expressed by a formula (I-35), and 0.270 wt% pyrazol-family squarylium compound expressed by formula (III-3) were mixed with respect to the binder resin to prepare a coating liquid. The coating liquid was applied by bar coating and dried, and after uniformly applying it, the solvent was evaporated to obtain an organic color material dispersed layer.

Using a flat board-like acrylic resin (VH5 made by Mitsubishi Rayon Co., Ltd.) having a size of 314.0 x 232.0 mm and a thickness of 4.0 mm as a light guide pipe, two cold cathode tubes in which the above greenishness has been intensified were provided at a long side opposite each other, and the cold cathode tubes were covered by a reflector plate (silver reflector plate made by Mitsui Chemical, Inc.) of which the light reflecting surface was an Ag deposit layer so that emission light from the linear light sources would efficiently enter the side end (light incoming surface) 1a of the light guide pipe 1.

On the side of the light guide pipe 1 opposite the light emitting surface 1b, fine circular patterns comprising a rough surface were patterned by transcribing from a mold such that their diameters would increase as the distance from the linear light sources 2 increases. The diameters of the rough surface patterns are 170 micrometers near the light sources, and 245 micrometers at a place remotest from the light sources, and the arrangement pitch is 200 micrometers. They are arranged as shown in Fig. 30.

Here, the mold used for the formation of the fine circular patterns comprising the rough surface was formed by laminating a dry film resist having a thickness of 25 micrometers on an SUS base board, forming openings at portions corresponding to the patterns by photolithography, and uniformly blasting the mold under a projection pressure of 0.2 MPa with #600 alumina particles by a sand blast method, and peeling the dry film resist.

In molding the light guide pipe, using a mold for injection molding in which a mold having the above patterns is fitted, it was molded by injection molding in an injection molder (made by Toshiba Machine Co., Ltd.) having a clamping force of 550 t.

As shown in Fig. 4, a surface light source device was prepared by providing a light reflecting sheet 7 (Lumirror E60L made by Toray Industries, Inc.) on the side of the light guide pipe 1 opposite the light emitting surface, providing a light adjusting film in which is provided the organic color material dispersed layer obtained by the above method, on the light emitting surface of the light guide pipe, and providing a lens film (BEFIII made by 3M) provided with an array of triangular prisms having an apex angle of 90 degrees and a pitch of 50 micrometers on the light adjusting film.

Here, it was confirmed that the film provided with an organic color material dispersed layer has a lens effect (effect of improving the front brightness), and if the front brightness measured right over the emitting surface of the light guide pipe using a luminance meter is LA, and the front brightness measured after the light adjusting film has been arranged is LB, the rate LB/LA was 1.27, so that together with the spectrum correcting effect by the organic color material dispersed layer, it also had a condensing function.

Further, the film provided with the organic color material dispersed layer is not in close contact with the light guide pipe light emitting surface due to the effect of the beads that have been added slightly when provided right over the light guide pipe. Thus it is provided with an air gap, keeping a gap of about 20 micrometers relative to the surface of the light guide pipe. Thus, repeated interactions between illuminating light beams that propagate through the light guide pipe and the organic color material dispersed layer are prevented, and interactions are kept constant irrespective of the distance from the cold cathode tube, so that it was possible to prevent development of unevenness in colors.

Further, in order to quantify the effect of the organic color material dispersed layer, by coating the same coating liquid as above on a transparent biaxially stretched polyester film (made by Mitsubishi Polyester Film Corporation) having a thickness of 100 micrometers, a film for evaluation in which only the organic color material dispersed layer was arranged was obtained. The transmission spectra of the film for evaluation is as shown in Fig. 36, and has sharp absorption peaks near an intermediate wavelength of the three primary colors and has no absorption peak in the other spectral range.

The color coordinate was measured through the film for evaluation when the cold cathode tube was turned on as in the previous method. As a result, x' = 0.290, y' = 0.287, $\Delta x$ = x-x' = 0.002, and $\Delta y$ = y-y' = 0.032. Thus, it was confirmed that emission spectra from the cold cathode tube, which was greenish due to the effect of the organic color material dispersed layer, had shifted toward white.

The two cold cathode tubes arranged on the surface light source device were driven under the tube current of 6 mA, left about 30 minutes in a turned-on state. After they had sufficiently stabilized, the optical properties were measured. Further, as shown in Fig. 42, for the emission spectra of the cold cathode tubes, it was confirmed that sub-emissions resulting from the green phosphor was suppressed, so that the independency of the spectra corresponding to the three RGB colors was high, and the emission efficiency was superior, and it had extremely suitable properties as a back light of a liquid crystal display device.

(Example 10)

Using a cold cathode tube lamp having a tube diameter of 2.6 mm and a lamp length of 320 mm and having Ni electrodes, a cold cathode tube which produces emission colors which are intensified in blue-green than normal was prepared by selectively increasing the ratio of the green phosphor and blue phosphor. It was turned on by high frequency with an inverter (HIU742A made by Harison Toshiba Lighting Corp.) and the color coordinate was measured in the x-y color system using a luminance meter (BM-7 made by Topcom Inc.). The color coordinate was x = 0.301, y = 0.314.

Six of such cold cathode tubes were arranged in parallel at equal intervals of 35 mm, and as shown in Fig. 18, a reflecting board curved like a corrugated board was provided under the lamps. On the surface of the reflecting board, a white material having a high refractance (Lumirror E60L made by Toray Industries, Inc.) was provided. Further, on the light emitting surface, an acrylic resin board (board thickness: 2 mm, Aclylite made by Mitsubishi Rayon Col., Ltd.) on which printing of white ink was provided only near the light source was provided as a cover so that the brightness distribution would be uniform and showing of the lamps be prevented.

Further, a light adjusting film obtained in the same manner as in Example 9 with a light diffusing layer formed on one side and an organic color material dispersed layer formed on the other side was arranged on the acrylic resin board. In order to evaluate the lens effect (effect of improving the front brightness) of the light adjusting film, the front brightness LA was measured using a luminance meter right over the acrylic resin board as a cover, and the front brightness LB measured with the light adjusting film arranged. It was confirmed that the ratio LB/LA was 1.22, and together with the spectrum correcting effect by the organic color material dispersed layer, the condensing function was also retained.

Further, as in Example 9, $\Delta x$, $\Delta y$ measured for a film for evaluation in which only the organic color material dispersed layer was provided were $\Delta x = 0.003$, $\Delta y = 0.031$. Thus, without markedly sacrificing the brightness, blue-greenish emission spectra from the cold cathode tube were converted toward white.

On this light adjusting film, another light diffusing film having a similar lens effect was arranged to form a surface light source device. The surface light source device was turned on with a tube current of 4 mA. The results are shown in Table 5. Further, it was confirmed that for emission spectra, spectra corresponding to the respective RGB colors are high in independency, and superior in the emission efficiency, that it had extremely suitable properties as a back light of a liquid crystal display device.

(Example 11)

With the surface light source device described in Example 9 as a back light, an active matrix driven twisted nematic type liquid crystal panel provided with a coloring matter dispersed type color filter was arranged on the back light to form a transmission type liquid crystal display device.

With the diphenylsquarylium compound, the organic color material dispersed layer has a light absorbing peak at a position 12 nm from the overlap point of green and red of the coloring matter dispersed type color filter, and with the pyrazol-family squarylium compound, it has a light absorbing peak at a position 11 nm from the overlap point of blue and green. Thus the spectral characteristics of the color filter are not much impaired.

By inputting video signals into the liquid crystal display device and driving it, brightness and chromaticity when the white was turned on and when the respective RGB colors were turned on were measured. The measuring results are shown in Table 6. While the color reproducing range (NTSC ratio) was wide, lowering of the brightness was suppressed. It was confirmed that it had superior properties as a liquid crystal display device.

(Comparative Example 6)

Using a cold cathode tube lamp having a tube diameter of 2.4 mm and a lamp length of 317 mm and having Nb electrodes, a cold cathode tube was prepared by adjusting the composition of phosphor such that it would be white as is normally the case. It was turned on by high frequency with an inverter (made by Harison Toshiba Lighting Corp.) and the color coordinate in the x-y color system was measured using a luminance meter (BM-7 made by Topcom Inc.). The color coordinate was x = 0.288, y = 0.241.

Further, as was described in Example 9, a coating of spherical beads having an average particle diameter of 25 micrometers and made of an acrylic resin was formed on a transparent biaxially stretched polyethylene terephthalate film to provide a light diffusing layer. On the reverse side, a coating of only acrylic resin beads and a binder resin was formed without mixing diphenylsquarylium compound and pyrazol-family squarylium compound to provide a light adjusting film. Besides, a surface light source device was obtained with the light guide pipe, reflecting film, lamp reflector and the condensing film provided on the light adjusting film being all the same as in Example 9.

Optical properties measured after sufficiently stabilizing the surface light source device are shown in Table

5. Further, emission spectra of the cold cathode tube are shown in Fig. 40. They were such light source properties that independency of the three RGB colors was insufficient and achieving high color reproducibility was inherently difficult. Further, for a liquid crystal display device structured by providing the liquid crystal panel described in Example 11 in the light source device, the optical properties were evaluated. The results are shown in Table 6.

(Comparative Example 7)

Using a cold cathode tube colored white as usual as described in Comparative Example 6, a surface light source device was obtained with other elements being the same as in Example 9.

Optical properties were measured and evaluated after sufficiently stabilizing the surface light source device as in Example 9. Brightness lowered due to the influence of the organic color material dispersed layer, and it became apparent that it was efficiently insufficient. The results are shown in Table 5. Further, for a liquid crystal display device structured by arranging the liquid crystal panel described in Example 3 in the surface light source device, the optical properties were evaluated. The results are shown in Table 6.

(Comparative Example 8)

Regarding the organic color material dispersed layer described in Example 9, except that diphenylsquarylium compound was mixed by 0.110 parts by weight relative to the binder resin content, and pyrazol-family squarylium compound was mixed by 0.033 parts by weight to prepare a coating liquid, and the organic color material dispersed layer was provided, a surface light source device was obtained in the same manner as in Example 1.

$\Delta x$ and $\Delta y$ were measured for the film for evaluation provided with only an organic color material dispersed layer as in Example 9. $\Delta x$ was 0.001 and $\Delta y$ was 0.008. Further, the optical properties measured after being sufficiently stabilized as in Example 1 are shown in Table 5. Further, for a liquid crystal display device structured by arranging the liquid crystal panel described in Example 11 in the light source device, the optical properties were evaluated. The results are shown in Table 6.

(Comparative Example 9)

Regarding the surface light source device described in Example 1, except that the light adjusting film was prepared with no spherical beads mixed in the coating liquid to be coated on the surface of the light adjusting film opposite the surface on which the light diffusing layer was formed, a surface light source device was prepared as in Example 1.

After turning on for a long time to conduct turn-on evaluation, portions developed where they partially contact the light guide pipe, so that color unevenness developed from place to place of the light emitting surface. Thus, it was inferior in the quality of the surface light source. Optical properties measured after being sufficiently stabilized as in Example 9 are shown in Table 5. For a liquid crystal display device structured by arranging the liquid crystal panel described in Example 3 in the light source device, the optical properties were evaluated. The results are shown in Table 6.

TABLE 5

| Results of evaluation of optical properties on the surface light source device | | | | | |
|---|---|---|---|---|---|
| | Average brightness of 25 points in the surface | Average chromaticity of 25 points in the surface | | Chromaticity deviation of 25 points in the surface (max-min) | |
| | | x | y | x | y |
| Example 9 | 2155 | 0.295 | 0.322 | 0.003 | 0.018 |
| Example 10 | 3240 | 0.303 | 0.348 | 0.004 | 0.020 |
| Comparative Example 6 | 2396 | 0.296 | 0.320 | 0.003 | 0.016 |
| Comparative Example 7 | 1689 | 0.281 | 0.291 | 0.004 | 0.015 |

TABLE 5 (continued)

| Results of evaluation of optical properties on the surface light source device | | | | | |
|---|---|---|---|---|---|
| | Average brightness of 25 points in the surface | Average chromaticity of 25 points in the surface | | Chromaticity deviation of 25 points in the surface (max-min) | |
| | | x | y | x | y |
| Comparative Example 8 | 2245 | 0.294 | 0.312 | 0.003 | 0.017 |
| Comparative Example 9 | 2080 | 0.298 | 0.323 | 0.029 | 0.034 |

TABLE 6

| Results of evaluation of optical properties on the liquid crystal panel | | | | | | |
|---|---|---|---|---|---|---|
| | Average brightness of 25 points in the surface | Average chromaticity of 25 points in the surface | | Chromaticity deviation of 25 points in the surface (max-min) | | NTSC ratio (%) |
| | | x | y | x | Y | |
| Example 11 | 151 | 0.303 | 0.342 | 0.002 | 0.016 | 68.3 |
| Comparative Example 6 | 174 | 0.301 | 0.339 | 0.004 | 0.017 | 63.3 |
| Comparative Example 7 | 118 | 0.290 | 0.309 | 0.002 | 0.014 | 65.1 |
| Comparative Example 8 | 157 | 0.299 | 0.323 | 0.003 | 0.017 | 64.0 |
| Comparative Example 9 | 146 | 0.310 | 0.339 | 0.024 | 0.030 | 67.5 |

(Example 12)

A cold cathode tube lamp having a tube diameter of 2.4 mm and a lamp length of 317 mm and having Nb electrodes was turned on by high frequency with an inverter (HIU742A made by Harison Toshiba Lighting Corp.), and the color coordinate in the x-y color system was measured using a luminance meter (BM-7 made by Topcom Inc.). The color coordinate value was x = 0.312, y = 0.328.

Next, with a transparent biaxially stretched polyethylene terephthalate film (PET film made by Mitsubishi Polyester Film Corporation, thickness: 100 µm) as a substrate, into a 30 wt% toluene solution of polymethylmethacrylate (DIANAL BR-80 made by Mitsubishi Rayon Co., Ltd.), which was a binder resin, a mix of diphenylsquarylium compounds expressed by formulas (I-34), (I-35) and (I-36) was added to prepare a coating liquid. The coating liquid was applied by bar coating and dried, and after uniformly applying, the solvent was evaporated to obtain a light adjusting film having a coating of an organic color material dispersed layer having a film thickness of 3.8 micrometers. As shown in Fig. 37, it is adjusted so as to be an asymmetrical absorption spectrum in which it is narrow on the short wavelength side and expanded on the long wavelength side.

Further, for this cold cathode tube, the color coordinate value of the illuminating light that has passed the light adjusting film was measured, it was x' = 0.293, y' = 0.282, and the amount of change of the y coordinate value through the organic color material dispersed layer was |y-y'| = 0.046. Further, $H_S = 1.94H_L$.

Using a flat board-shaped acrylic resin (VH5 made by Mitsubishi Rayon) having a size of 314.0 x 232.0 mm and a thickness of 4.0 mm as the light guide pipe, two of the above cold cathode tubes were arranged opposite each other at a long side, and the cold cathode tubes were covered by a reflector plate (silver reflector plate made by Mitsui

Chemical, Inc.) of which the light reflecting surface is an Ag deposit layer so that emitted light from the linear light source will efficiently enter the side end (light incoming surface) of the light guide pipe.

On the surface of the light guide pipe opposite the light emitting surface, fine circular patterns comprising a rough surface and having such diameters as to grow as they are farther from the linear light source was patterned by transcribing from a mold. The diameters of the rough surface patterns were 170 micrometers near the light source and 245 micrometers at the remotest portion from the light source, and the arrangement pitch was 200 micrometers.

Here, the mold used for the formation of the fine circular patterns comprising a rough surface was prepared by laminating a dry film resist having a thickness of 25 micrometers on a SUS base board, forming openings at portions corresponding to the patterns by photolithography, and further uniformly blasting the mold by sand blast with #600 alumina particles under a projection pressure of 0.2 MPa, and peeling the dry film resist.

For the molding of the light guide pipe, using a mold for injection molding on which is fitted a SUS base board in which are arranged the above patterns, the patterns comprising the rough surface were transcribed on the surface by injection molding with an injection molder (made by Toshiba Machine Co., Ltd.) having a clamping force of 550 t.

As shown in Fig. 7, a surface light source device was prepared by arranging a light reflecting sheet (Lumirror E60L made by Toray Industries, Inc.) on the side of the light guide pipe opposite the light emitting surface, a light diffusing sheet (D121Z made by Tsujiden Co., Ltd.), on the light emitting surface of the light guide pipe and a lens film (BEFIII made by 3M) provided with an array of triangular prisms having an apex angle of 90 degrees and a pitch of 50 micrometers so as to overlap, and superposing a light adjusting film in which is arranged the organic color material dispersed layer obtained by the above method.

Further, a liquid crystal display device was structured by arranging an active matrix driven twisted nematic mode liquid crystal panel on the surface light source device. Two cold cathode tubes arranged in the surface light source device were driven with a tube current of 6 mA and left for about 30 minutes in a turned-on state, and after having been sufficiently stabilized, the brightness and chromaticity were measured first in a white display state. Further, the liquid crystal panel was driven and measurement of color reproducing range was conducted by measuring chromaticity when the respective colors were displayed. The results are shown in Table 7. It was confirmed that a liquid crystal display device was obtained which was superior in the emission efficiency while keeping a wide color reproducing range, and has superior optical properties.

(Example 13)

With a transparent biaxially stretched polyethylene terephthalate film (PET film made by Mitsubishi Polyester Film Corporation, thickness: 100 μm) as a binder, into a 30 wt% solution of polymethylmethacrylate resin (DIANAL BR-80 made by Mitsubishi Rayon Co., Ltd.), which is a binder resin, spherical beads having an average diameter of 25 micrometers and made of an acrylic resin was added by 200 wt% relative to the binder resin to form a coating liquid. The coating liquid was applied by bar coating and dried, and after uniformly applying, the solvent was evaporated to obtain a light diffusing layer by the transparent beads.

Further, to a 30 wt% toluene solution of polymethylmethacrylate, which was a binder resin, spherical beads having an average particle diameter of 25 micrometers and made of an acrylic resin was added by 5 wt% relative to the binder resin, and the concentrations of diphenylsquarylium compounds expressed by formulas (I-34), (I-35) and (I-36) and pyrazol-family squarylium compound expressed by the formula (III-3) were adjusted such that an asymmetrical absorption spectral curve in which the long wavelength side is narrow and the short wavelength side is expanded would be obtained as shown in Fig. 38 to prepare a coating liquid. The coating liquid was applied to the surface opposite the surface on which the light diffusion layer was formed by bar coating, and dried to obtain a light adjusting film having a coating of an organic color material dispersed layer having a film thickness of 4.1 micrometers.

The emission color of the cold cathode tube was x = 0.292, y = 0.295, and for the cold cathode tube, the color coordinate value of the illuminating light that has passed the light adjusting film was measured. The results were x' = 0.295, y' = 0.280, and the amount of change of the y coordinate value through the organic color material dispersed layer was |y-y'|= 0.015. Further, $H_S = 1.91H_L$ (boundary of blue and green), and $H_S = 2.11H_L$ (green-red boundary).

Using the same light guide pipe as described in Example 12, as shown in Fig. 5, a surface light source device was structured by arranging a light reflecting sheet (Lumirror E60L made by Toray Industries, Inc.) on the side of the light guide pipe opposing the light emitting surface of the light guide pipe, providing the light adjusting film on the light emitting surface of the light guide pipe, and arranging by superposing a lens film (BEFIII made by 3M) on which an array of triangular prisms having an apex angle of 90 degrees and a pitch of 50 micrometers was provided.

Further at this time, in order to measure the lens effect of the light adjusting film, if the front brightness measured right over the light emitting surface of the light guide pipe using a luminance meter is LA, and the front brightness on the light adjusting film after the light adjusting film has been provided is LB, the ratio LB/LA was 1.22. Thus it was confirmed that the light adjusting film had a lens effect (function of improving the front brightness) as well, together with the spectra correcting effect by the organic color material dispersed layer.

A liquid crystal display device was structured by arranging the liquid crystal panel described in Example 12 on the surface light source device and the optical properties was evaluated in the same manner as in Example 12. The results are shown in Table 7. It was confirmed that a liquid crystal display device was obtained which was superior in emission efficiency while keeping wide color reproducing range, and has superior optical properties. Further, the number of parts was extremely small and assemblability was good too.

(Example 14)

For a cold cathode tube lamp having a tube diameter of 2.4 mm and a lamp length of 317 mm and having Nb electrodes, phosphors were used in which the content of the green phosphor has been selectively increased, it was turned on by high frequency by an inverter (HIU742A made by Harison Toshiba Lighting Corp.), and the color coordinate in the x-y color system was measured using a luminance meter (BM-7 made by Topcom Inc.). The color coordinate was x = 0.292, y = 0.322.

As in Example 13, with a transparent biaxially stretched polyethylene terephthalate film (PET film made by Mitsubishi Polyester Film Corporation, thickness: 100 µm) as a substrate, to a 30 wt% solution of polymethylmethacrylate resin (DIANAL BR-80 made by Mitsubishi Rayon Co., Ltd.), which is a binder resin, spherical beads having an average particle diameter of 25 micrometers and made of an acrylic resin were added by 200 wt% relative to the binder resin to form a coating liquid. The coating liquid was applied by bar coating and dried, and after uniformly applying it, the solvent was evaporated to obtain a light diffusing layer by the transparent beads.

Further, to a 30 wt% toluene solution of polymethylmethacrylate, which is a binder resin, spherical beads having an average particle diameter of 25 micrometers and made of an acrylic resin was added by 5 wt% relative to the binder resin, and the concentrations of diphenylsquarylium compounds expressed by formulas (I-34), (I-35) and (I-36) and pyrazol-family squarylium compound expressed by the formula (III-3) were adjusted such that an asymmetrical absorption spectral curve in which the long wavelength side is narrow and the short wavelength side is expanded was obtained as shown in Fig. 38 to prepare a coating liquid. The coating liquid was applied to the surface opposite the surface on which the light diffusion layer was formed by bar coating, and dried to obtain a light adjusting film having a coating of an organic color material dispersed layer having a film thickness of 4.1 micrometers.

For the cold cathode tube, the color coordinate value of the illuminating light that has passed the light adjusting film. x' = 0.297, y' = 0.299, and the amount of change of the y coordinate value through the organic color material dispersed layer was y-y' = 0.023.

Using the same light guide pipe as described in Example 12, as shown in Fig. 6, a surface light source device was made by arranging a light reflecting sheet (Lumirror E60L made by Toray Industries, Inc.) on the side of the light guide pipe opposing the light emitting surface, providing the light adjusting film on the light emitting surface of the light guide pipe, and arranging a lens film (BEFIII made by 3M) on which an array of triangular prisms having an apex angle of 90 degrees and a pitch of 50 micrometers was provided.

Further, in order to measure the lens effect of the light adjusting film, the front brightness $L_A$ measured right over the light emitting surface of the light guide pipe using a luminance meter, and the front brightness $L_B$ on the light adjusting film after the light adjusting film has been provided were measured. The ratio $L_B/L_A$ was 1.21. Thus it was confirmed that the light adjusting film had a lens effect (function of improving the front brightness) as well, together with the spectra correcting effect by the organic color material dispersed layer.

A liquid crystal display device was structured by arranging the liquid crystal panel described in Example 12 on the surface light source device and the optical properties was evaluated in the same manner as in Example 1. The results are shown in Table 7. It was confirmed that a liquid crystal display device was obtained which was superior in emission efficiency while keeping wide color reproducing range, and had superior optical properties. Further, the number of parts was extremely small and the assemblability was good too.

(Example 15)

Regarding the light adjusting film described in Example 14, an organic color material dispersed layer was designed by adjusting the concentration ratio of diphenylsquarylium compound and pyrazol-family squarylium compound so that y-y' = 0.013.

A liquid crystal display device was structured in the same manner as in Example 3 for other points. The evaluation of the optical properties was carried out in the same manner as in Example 1. The results are shown in Table 7.

(Comparative Example 10)

Regarding the light adjusting film described in Example 12, a liquid crystal display device was made in the

same manner as in Example 12 except that an organic color material dispersed layer having a symmetrical absorption spectrum was used as shown in Fig. 39 by adjusting the mixture ratio of diphenylsquarylium compound. $H_S = 1.02H_L$.

The evaluation of optical properties was conducted in the same manner as in Example 12. The results are shown in Table 7. Since the brightness lowered due to the influence of the light adjusting film, it was inferior in the balance of the color reproducibility and emission efficiency.

(Comparative Example 11)

Regarding the light adjusting film described in Example 13, a liquid crystal display device was made in the same manner as in Example 2 except that an organic color material dispersed layer having a symmetrical absorption spectrum was used as shown in Fig. 37 with the mixture ratio of diphenylsquarylium compound adjusted. $H_S = 1.091H_L$ (blue-green boundary), and $H_S = 0.97H_L$ (green-red boundary).

The evaluation of optical properties was conducted in the same manner as in Example 12. The results are shown in Table 7. Since the brightness lowered due to the influence of the light adjusting film, it was inferior in the balance of the color reproducibility and emission efficiency.

(Comparative Example 12)

Regarding the light adjusting film described in Example 14, an organic color material dispersed layer in which y-y' = 0.007 was designed by adjusting the concentration ratio of diphenylsquarylium compound and pyrazol-family squarylium compound.

A liquid crystal display device was prepared in the same manner as in Example 14 for other points. The evaluation of the optical properties was carried out in the same manner as in Example 1. The results are shown in Table 7.

(Comparative Example 13)

Regarding the light adjusting film described in Example 12, except that the light adjusting film was sticked on the front surface of the liquid crystal panel, a liquid crystal panel was made in the same manner as in Example 12. The evaluation of optical properties was conducted in the same manner as in Example 12. The results are shown in Table 7.

In a bright room environment in which a liquid crystal display device is normally used, while the back light is not turned on, since the front surface of the panel is colored, no high quality was felt, so that it was poor in design.

(Comparative Example 14)

Regarding the light adjusting film described in Example 12, except that a surface light source device was structured by sticking the light adjusting film on the light emission surface of the light guide pipe, a liquid crystal display device was made in the same manner as in Example 12. The evaluation of optical properties was conducted in the same manner as in Example 12. The results are shown in Table 7.

TABLE 7

Results of evaluation of optical properties on the liquid crystal panel

| | Average brightness of 25 points in the surface (nit) | Average chromaticity of 25 points in the surface | | Chromaticity deviation of 25 points in the surface (max-min) | | NTSC ratio (%) | Coloring phenomenon when the back light is not on |
|---|---|---|---|---|---|---|---|
| | | x | y | x | y | | |
| Example 12 | 152 | 0.305 | 0.336 | 0.004 | 0.018 | 67.6 | none |
| Example 13 | 159 | 0.303 | 0.332 | 0.002 | 0.016 | 66.9 | none |
| Example 14 | 154 | 0.306 | 0.339 | 0.003 | 0.017 | 69.4 | none |
| Example 15 | 167 | 0.303 | 0.343 | 0.002 | 0.015 | 65.7 | none |

TABLE 7 (continued)

| Results of evaluation of optical properties on the liquid crystal panel | | | | | | | | |
|---|---|---|---|---|---|---|---|---|
| | Average brightness of 25 points in the surface (nit) | Average chromaticity of 25 points in the surface | | Chromaticity deviation of 25 points in the surface (max-min) | | NTSC ratio (%) | Coloring phenomenon when the back light is not on |
| | | x | y | x | y | | |
| Comparative Example 10 | 144 | 0.304 | 0.322 | 0.004 | 0.017 | 62.1 | none |
| Comparative Example 11 | 131 | 0.302 | 0.329 | 0.003 | 0.014 | 61.8 | none |
| Comparative Example 12 | 169 | 0.299 | 0.347 | 0.004 | 0.015 | 60.6 | none |
| Comparative Example 13 | 155 | 0.302 | 0.340 | 0.003 | 0.017 | 67.9 | yes |
| Comparative Example 14 | 138 | 0.311 | 0.339 | 0.022 | 0.033 | 65.2 | none |

**Claims**

1. A display device having a color filter, wherein a light absorbing layer having the function of absorbing light of specific wavelengths in the visible light beam region is provided on a light path, and the light absorption peak in the visible light beam region of the light absorbing layer is positioned in the range of ±30 nm from an overlapping point in spectral transmission properties of respective colors of said color filter.

2. A display device as claimed in claim 1 wherein the light absorbing layer comprises an organic color material dispersed layer.

3. A display device having an organic color material dispersed layer in an illuminating optical unit, wherein said organic color material dispersed layer has absorption peaks in wavelengths near intermediate portions of respective RGB colors, and the relation between $H_S$ and $H_L$ of said absorption peaks is $H_S > H_L$, where $H_S$ is a half value width on a short wavelength side and $H_L$ is a half value width on a long wavelength side.

4. A display device as claimed in claim 3 wherein for an illuminating light source of said display device, a fluorescent lamp comprising a three band tube is used, and said organic color material dispersed layer is provided nearer to the illuminating light source than a polarizing film provided on the frontmost.

5. A display device as claimed in claim 3 or 4 wherein regarding the emission color expressed on an x - y chromaticity diagram of said illuminating light source, if the measured values before it passes said organic color material dispersed layer are x, y, and the measured value after it has passed said organic color material dispersed layer are x', y',

$$\Delta y > 0.01.$$

wherein $\Delta y = |y-y'|$

6. A surface light source device using a fluorescent lamp comprising a three band tube as a light source, **characterized in that** said three band tube is relatively strong in the emission intensity of green, the emission color expressed on an chromaticity diagram is in the range of x = 0.24-0.35, y = 0.25 - 0.39, an auxiliary filter having an organic

color material dispersed layer is provided on an illuminating optical path of said surface light source device, and the emission color of said surface light source device is turned white by being subjected to color correction by said auxiliary filter.

**7.** A surface light source device as claimed in claim 6 wherein light transmission spectra of said auxiliary filter, which has an organic color material dispersed layer, have absorption peaks near sub-emission peaks of the fluorescent lamp.

**8.** A surface light source device as claimed in claim 6 or 7 wherein regarding the emission color of said three band tube, if the color coordinate expressed on the x-y chromaticity diagram is x, y, and if the emission color on the x-y chromaticity diagram measured through said auxiliary filter is x', y',

$$\Delta y > 0.01.$$

wherein $\Delta y = y-y'$

**9.** A film for use with a liquid crystal display device and which uses a thermoplastic resin having a thickness of 30-350 micrometers as a substrate, **characterized in that** it has the function of absorbing light of specific wavelengths in a visible light beam region by an organic color material dispersed layer, and that the transmission of said organic color material dispersed layer in the maximum absorption wavelength is not more than 75%.

**10.** A polarizing film used for a transmission type or semi-transmission type liquid crystal display, which has the function of absorbing light of specific wavelengths in a visible light beam region having a region in which are dispersed organic color materials, and wherein the light absorbing half band width of an organic color material corresponding to each specific wavelength is not more than 60 nm.

**11.** A condensing film used for a liquid crystal display device having a color filter, comprising a synthetic resin formed with condensing elements on the surface, and having a light absorption peak positioned in a range of ± 30 nm from an overlap point in spectral transmission properties of each color of said color filter.

**12.** A display device as claimed in claim 1 or 2 wherein an auxiliary filter forming the light absorbing layer is provided nearer to a light source than said color filter.

**13.** A display device as claimed in claim 12 comprising a color filter having polarizing plates on the front surface, wherein said auxiliary filter is provided nearer to the light source than a polarizing plate provided on the outermost layer.

**14.** A display device as claimed in any of claims 1-5, 12 and 13 wherein it is a liquid crystal display device.

**15.** A display device as claimed in any of claims 1-5 and 12-14 wherein said display device is an active matrix driven, transmission type or semi-transmission type liquid crystal display device, and said color material dispersed layer is provided on a film stuck on a liquid crystal cell or on a film arranged on a light emitting surface of a back light.

**16.** A display device as claimed in any of claims 1-5 and 12-14 wherein said color material dispersed layer is provided on a film stuck on the surface of a glass base plate of a liquid crystal panel.

**17.** A display device as claimed in claim 16 wherein the film stuck on the surface of the glass base plate of said liquid crystal panel is a polarizing film and/or a phase difference film and/or a visual field expanding film, and wherein the color material dispersed layer provided on said film is a color material dispersed resin coated on said film.

**18.** A display device as claimed in any of claims 1-5 and 12-17 wherein said color filter is a coloring matter dispersed type color filter, and for said back light, a cold cathode tube is used as a light source.

**19.** A display device as claimed in claim 17 wherein the film stuck on the surface of the glass plate of said liquid crystal panel is subjected to antiglare and/or antireflection treatment.

**20.** A display device as claimed in claim 19 wherein the film stuck on the surface of the glass plate of said liquid crystal

panel is subjected to contrast improving measures by being dyed substantially black.

**21.** A display device as claimed in any of claims 1-5 wherein said color dispersed layer is provided on a film arranged on a back light.

**22.** A display device as claimed in claim 21 wherein the color material dispersed layer provided on the film arranged on the back light is a color material dispersed resin coated on said film.

**23.** A display device as claimed in claim 21 wherein the color material dispersed layer is provided by dispersing color materials in a light guide pipe of the back light.

**24.** A display device as claimed claim 21 wherein the color material dispersed layer is provided by dispersing color materials in ink which is printed on the surface of a light guide pipe of the back light.

**25.** A display device as claimed in any of claims 1-5 and 12-24 wherein the light absorption half band width of the light absorption peak in said visible light beam region is not more than 60 nm.

**26.** A display device as claimed in any of claims 1-5 and 12-25 wherein the number of light absorption peaks in the visible light beam region, which comprises said color material dispersed layer, is not less than one and less than three.

**27.** A display device as claimed in any of claims 1-5 and 12-26 wherein an ultraviolet absorber and/or a light stabilizer is blended in said color material dispersed layer.

**28.** A display device as claimed in any of claims 1-5 and 12-27 wherein an ultraviolet absorbing layer is provided in the optical path so that ultraviolet rays will not reach said color material dispersed layer.

**29.** A surface light source device as claimed in any of claims 1-8 wherein said organic color material dispersed layer is arranged with an air layer provided on the light emitting surface of said surface light source device.

**30.** A surface light source device as claimed in claim 29 wherein the film forming said auxiliary filter has a lens effect.

**31.** A color liquid crystal display device using the surface light source device defined in any of claims 6-8, 29 and 30 as a back light, and comprising a pigment dispersed type color filter.

**32.** The surface light source devices as claimed in claims 6-8, 29 and 30, the film as claimed in claims 9-11, and the liquid crystal display devices as claimed in claims 1-5 and 12-28 wherein for said organic color material dispersed layer, squarylium and/or tetraazaporphyrine family organic color materials are used.

**33.** A polarizing film as claimed in claim 10 wherein the number of light absorption peaks in the visible light beam region comprising the region in which the color materials are dispersed is not less than one and less than three.

**34.** A polarizing film as claimed in claim 10 or 33 wherein a resin coating layer is provided on the surface and said organic coloring material is dispersed in the resin coating.

**35.** A polarizing film as claimed in any of claims 10, 33 and 34 wherein it has such a light diffusing function as to have a diffusing angle of 1-120 degrees.

**36.** A film as claimed in claim 9 wherein the film forming said auxiliary filter is arranged with an air layer provided on a light emitting surface in a surface light source device of a transmission type or semi-transmission type liquid crystal display device.

**37.** A film as claimed in claim 36 wherein in arranging the film forming said auxiliary filter with said air layer provided on said light emitting surface of said surface light source device, the side of the film contacting said light emitting surface is subjected to roughening, and roughened portion formed comprise a coating layer of substantially transparent beads.

**38.** A film as claimed in claim 36 or 37 wherein the film forming said auxiliary filter has such a light diffusing function

as to have a haze in the range of 5%-90%, and that said light diffusing function is obtained by providing a coating layer of substantially transparent beads on the surface of said color correction film.

**39.** A film as claimed in claim 36 or 37 wherein said organic color material dispersed layer is provided by dispersing organic color materials in said coating layer of substantially transparent beads.

**40.** A film as claimed in claim 39 wherein said coating layer of substantially transparent beads is a coating layer comprising a photocuring resin or a thermocuring resin.

**41.** A film as claimed in claim 40 wherein said coating layer of substantially transparent beads is obtained by coating a solution in which a binder resin comprising a thermoplastic resin and organic color materials are dispersed in a solvent, and evaporating said solvent.

**42.** A film as claimed in any of claims 36-41 wherein said organic color material dispersed layer contains a light stabilizer.

**43.** A color correcting film as claimed in any of claims 36-42 wherein said color correcting film is provided with an ultraviolet absorbing layer.

**44.** A film as claimed in any of claims 36-43 wherein the number of light absorption peaks in the visible light beam region comprising said organic color material dispersed layer is not less than one and less than three.

**45.** A film as claimed in any of claims 36-44 wherein it is used in a liquid crystal display device having a color filter, and the light absorption peaks in the visible light beam region are positioned in a range of ± 30 nm from an overlap point in spectral transmission properties of each color of the color filter.

**46.** A film as claimed in claim 45 wherein said color filter is a coloring matter dispersed type color filter.

**47.** A film as claimed in claim 45 or 46 wherein the organic color material corresponding to each of said light absorption peaks is one kind only.

**48.** A film as claimed in any of claims 45-47 wherein said organic color materials comprise one or both of squarylium and tetraazaporphyrine family.

**49.** A film as claimed in any of claims 45-48 wherein in a spectral absorption rate curve obtained from an organic color material corresponding to each of said light absorption peaks, the light absorption half band width obtained from said spectral absorption rate is not more than 60 nm.

**50.** A surface light source device comprising a light source having one of a cold cathode tube and a hot cathode tube or a combination thereof, and a light homogenizing means for converting said light source light to a substantially uniform surface light source, said surface light source device being used as a back light source means of a transmission type or semi-transmission type liquid crystal display device, and on the light emitting surface of said surface light source device, the film claimed in any of claims 45-49 being arranged.

**51.** A surface light source device as claimed in claim 50, comprising a light guide pipe having at least one side end thereof as a light incoming surface and one surface as a light emitting surface, a light takeout mechanism for taking illuminating light out of said light guide pipe, and a light reflecting sheet provided on the side opposite to said light emitting surface.

**52.** A surface light source device as claimed in claim 51 wherein said light takeout mechanism provided on said light guide pipe comprises recesses and protrusions provided on one or both of said light emitting surface of said light guide pipe and the surface opposite to said light emitting surface, and wherein said recesses and protrusions are heat transcribed from a mold.

**53.** A surface light source device as claimed in claim 52 wherein on one or both of said light emitting surface of said light guide pipe and the surface opposite to said light emitting surface, an array of condensing elements having ridgelines in a direction perpendicular to said light incoming surface is provided.

**54.** A condensing film as claimed in claim 11 wherein the light absorption peak is formed by dispersing organic color materials in a synthetic resin having condensing elements formed on the surface.

**55.** A condensing film as claimed in claim 11 or 54 wherein said condensing elements are a prism array and/or a lenticular lens array and/or a corrugated plate-like array and/or a microlens array and/or a prism array.

**56.** A condensing film as claimed in claim 11 or 54 wherein said condensing elements are formed by coating substantially spherical beads having a lens function.

**57.** A condensing film as claimed in any of claims 11 and 54-56 wherein on the side of the condensing film opposite the surface on which the condensing elements are provided, recesses and protrusions for preventing adhesion are formed.

**58.** A condensing film as claimed in any of claims 11 and 54-57 wherein the condensing film is formed of a biaxially stretched polyethylene terephthalate and/or a biaxially stretched polypropylene.

**59.** A condensing film as claimed in any of claims 11 and 54-58 wherein the light absorbing half band width of the light absorption peak in the visible light beam region is not more than 60 nm.

**60.** A condensing film as claimed in any of claims 11 and 54-59 wherein the number of light absorbing peaks in the visible light beam region is not less than one and less than three.

**61.** A condensing film as claimed in any of claims 11 and 54-60 wherein the light absorption peak is formed by dispersing organic color materials in the condensing film.

**62.** A condensing film as claimed in any of claims 11 and 54-61 wherein it is provided with an ultraviolet absorbing layer.

**63.** A condensing film as claimed in any of claims 11-62 wherein the organic color materials comprise at least one kind of squarylium and/or tetraazaporphyrine family.

**64.** A surface light source device comprising a light source and means for converting said light source light to a surface light source, and used as a back light source means of a transmission type or semi-transmission type liquid crystal display device, wherein the condensing film claimed in any of claims 11 and 54-63 is provided on its light emitting surface.

**65.** A surface light source converting means comprises a light guide pipe having A surface light source device as claimed in claim 64 wherein the at least one side end as a light incoming surface and its surface as a light emitting surface, a light takeout mechanism for taking the light source light out of said light guide pipe, and a light reflecting sheet provided on the opposite side of the light emitting surface with the light guide pipe sandwiched between.

Fig.1

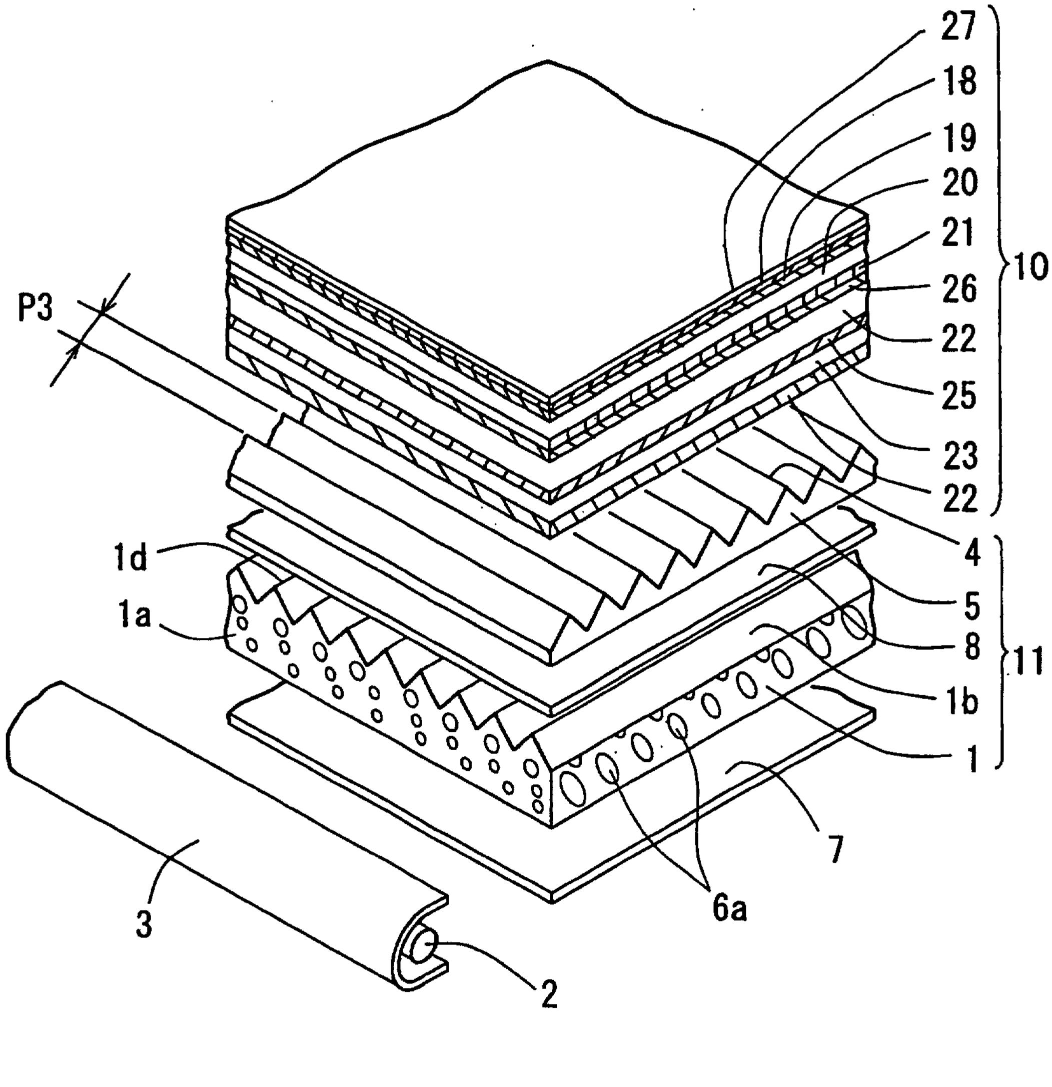

Fig.2

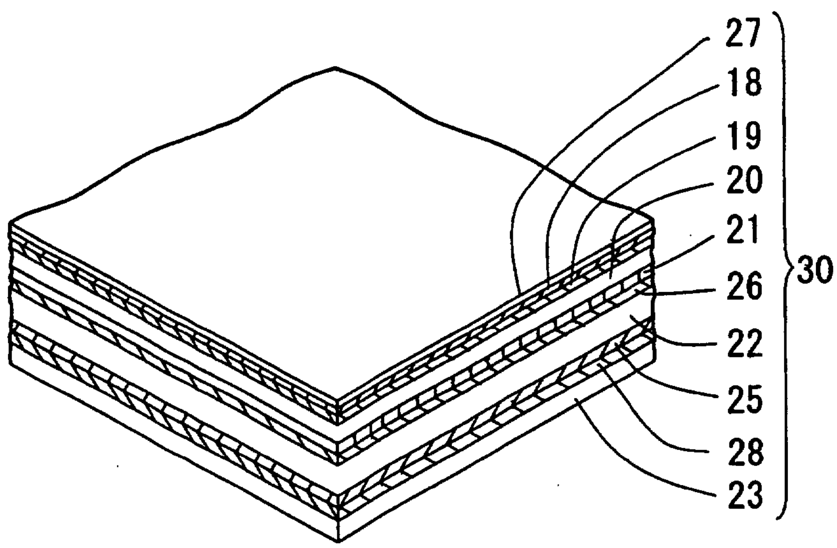

Fig.3

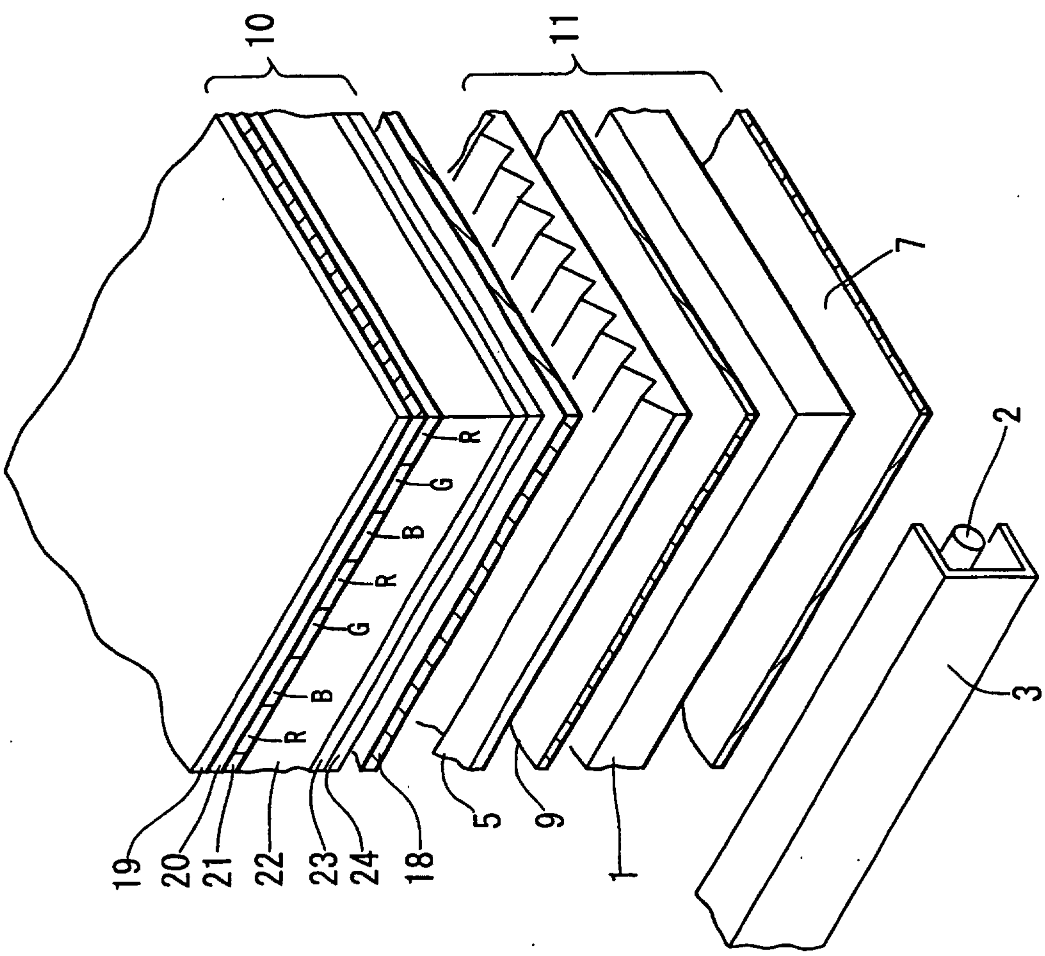

Fig.4

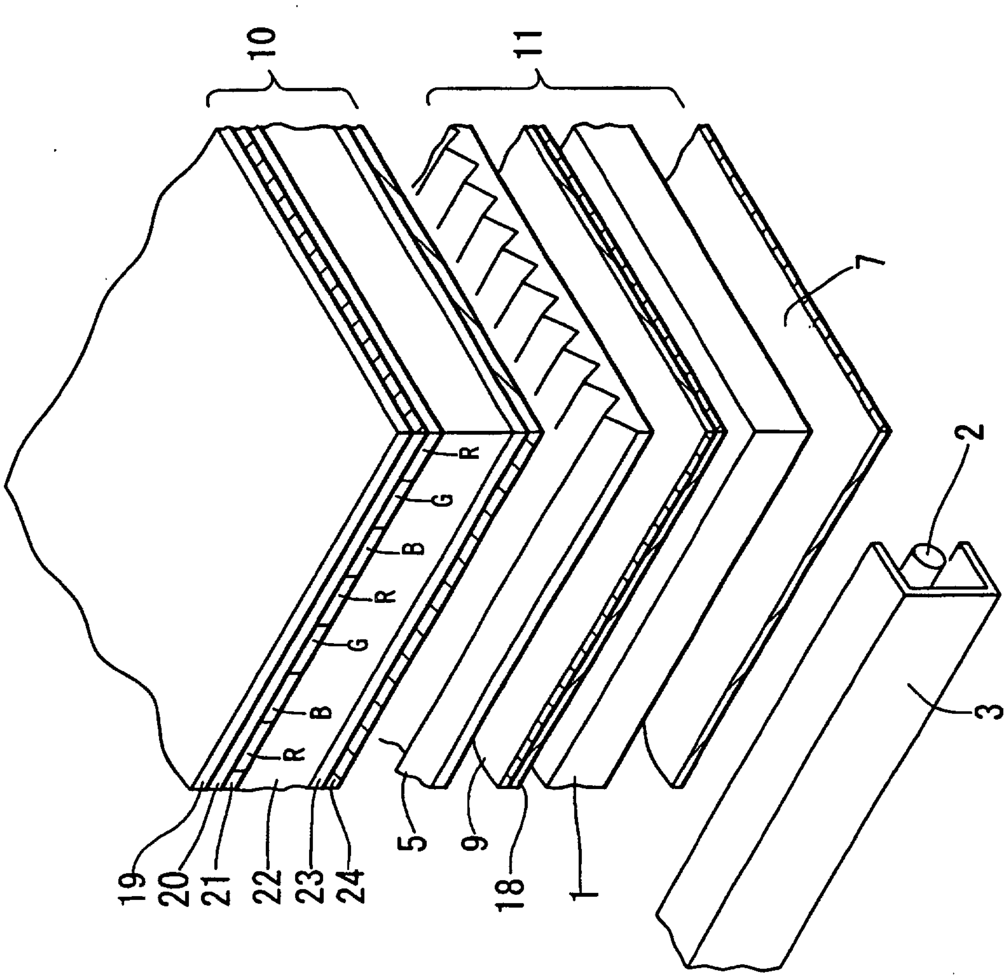

Fig.5

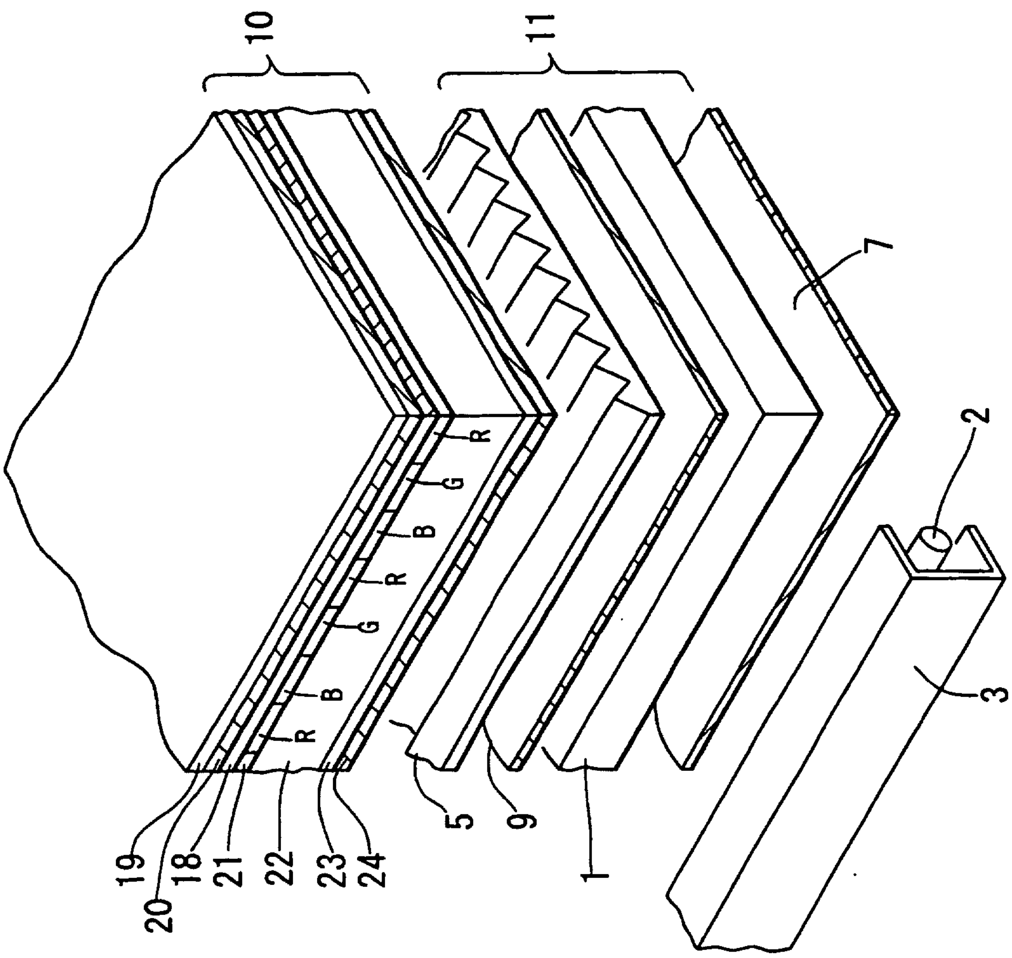

Fig.6

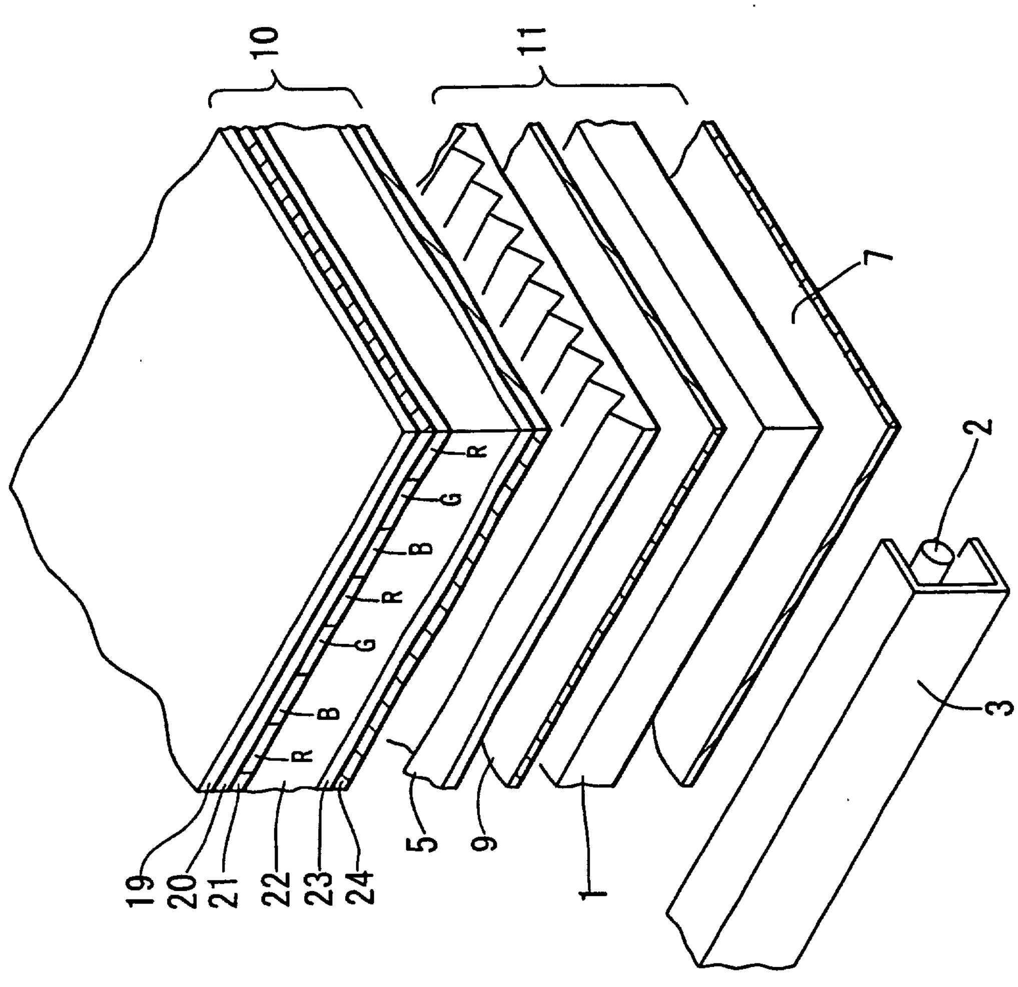

Fig.7

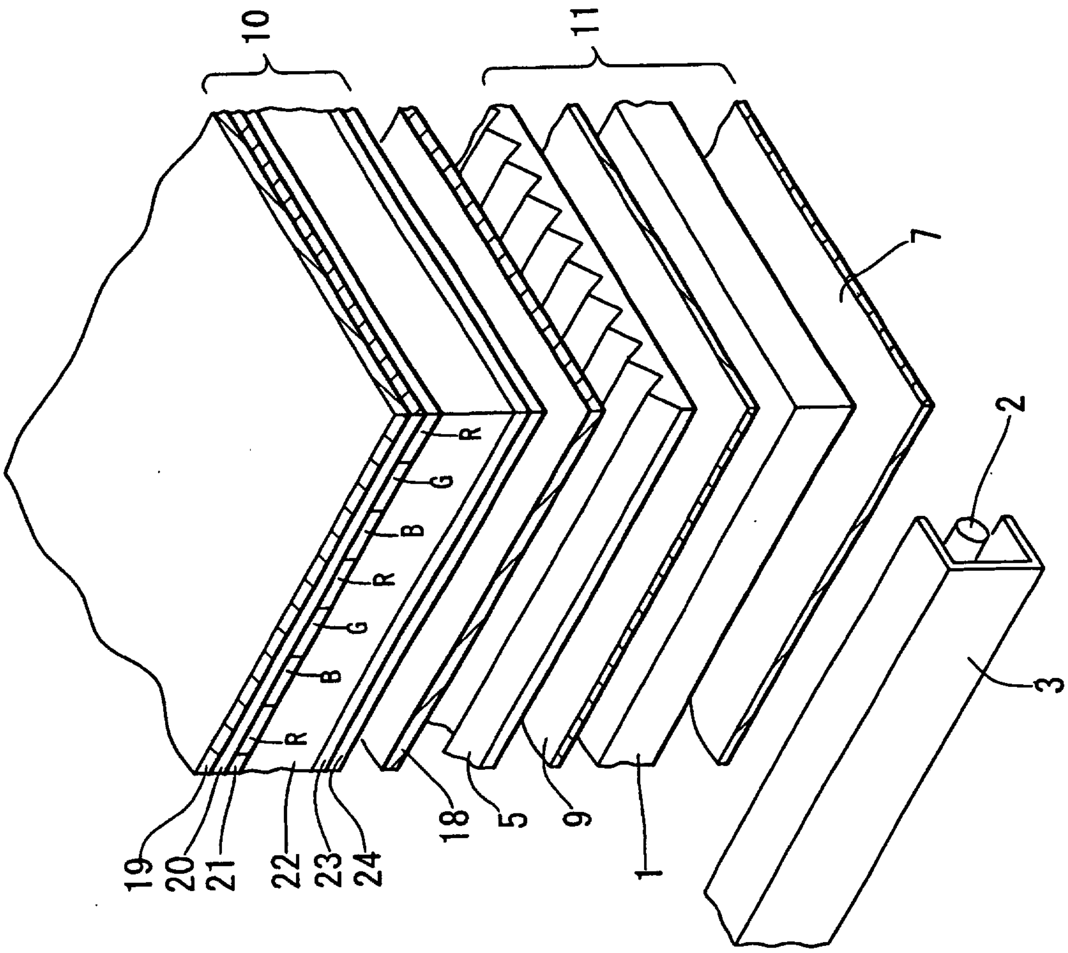

Fig.8

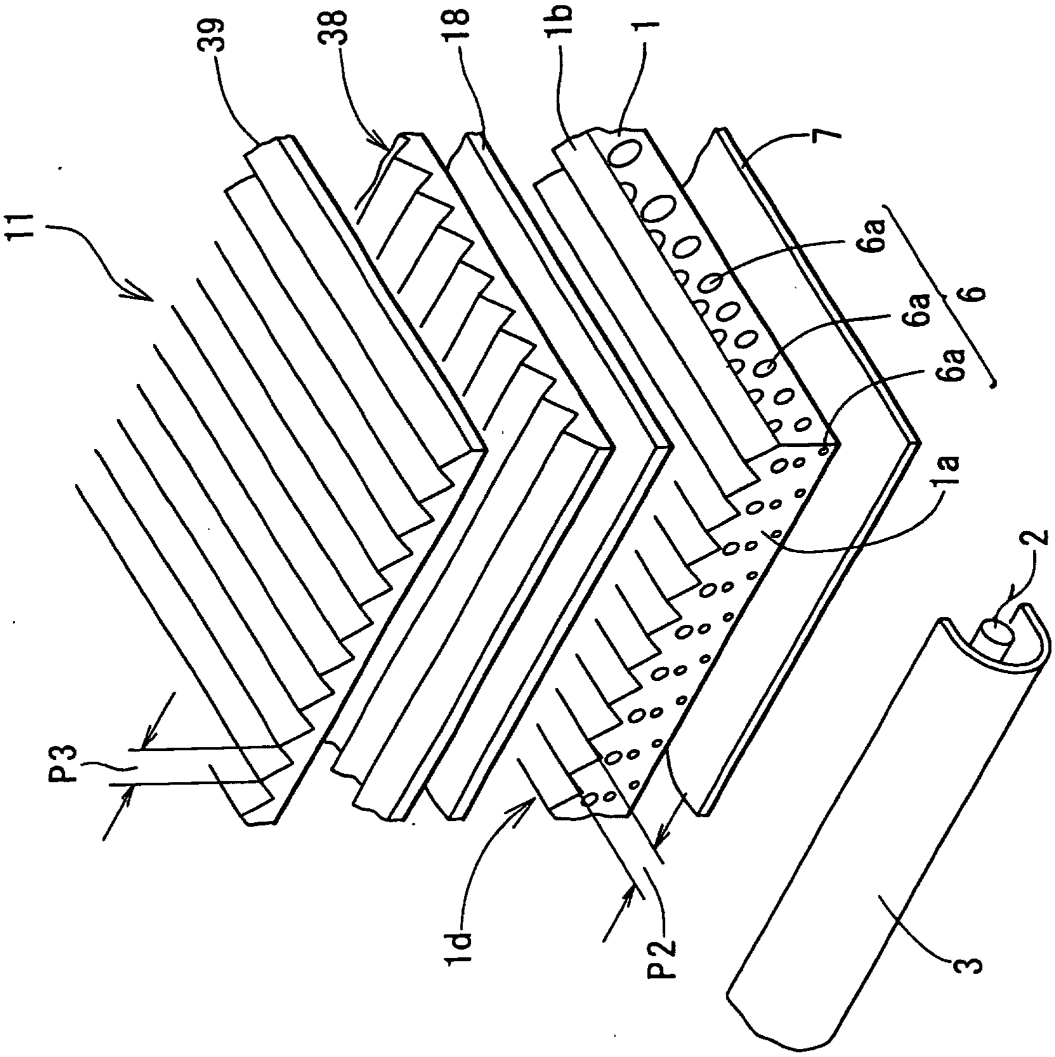

Fig.9

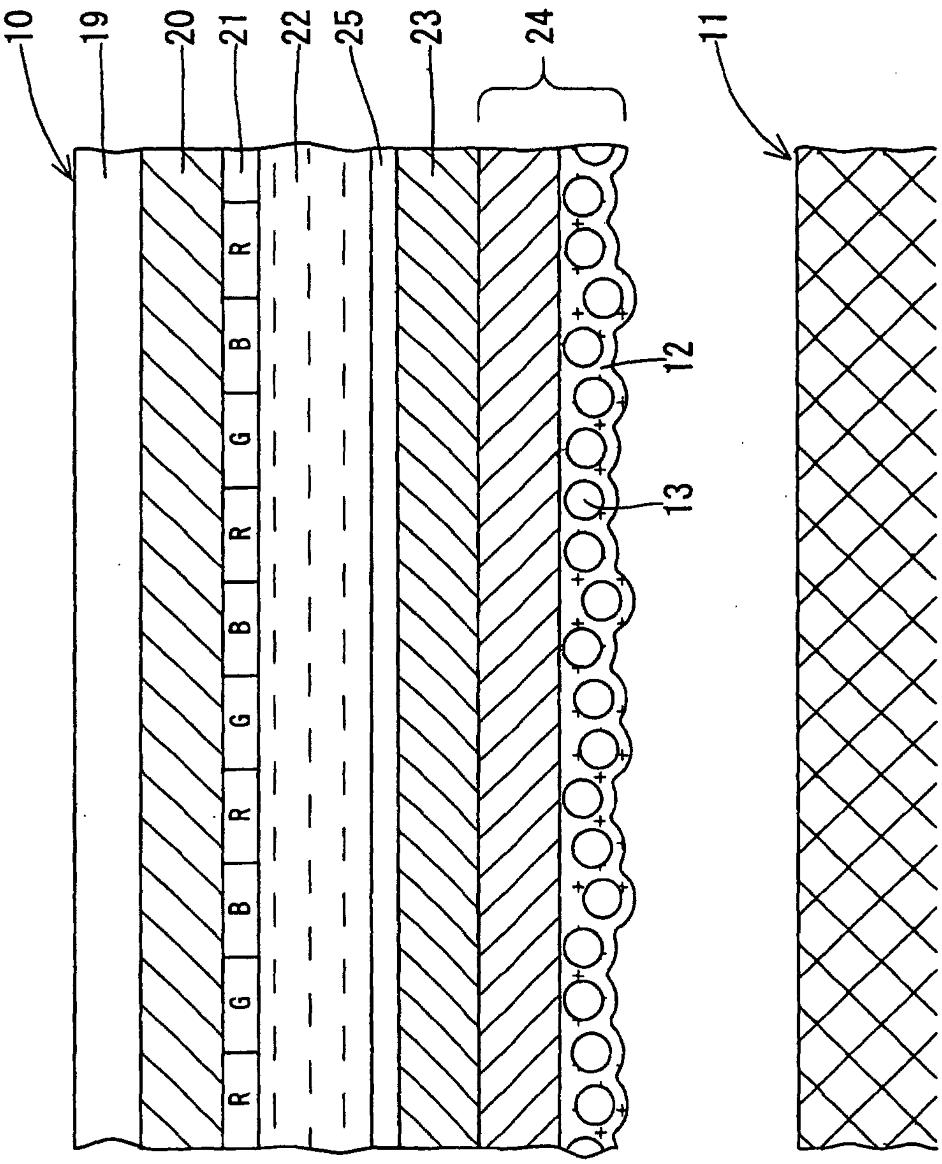

Fig.10

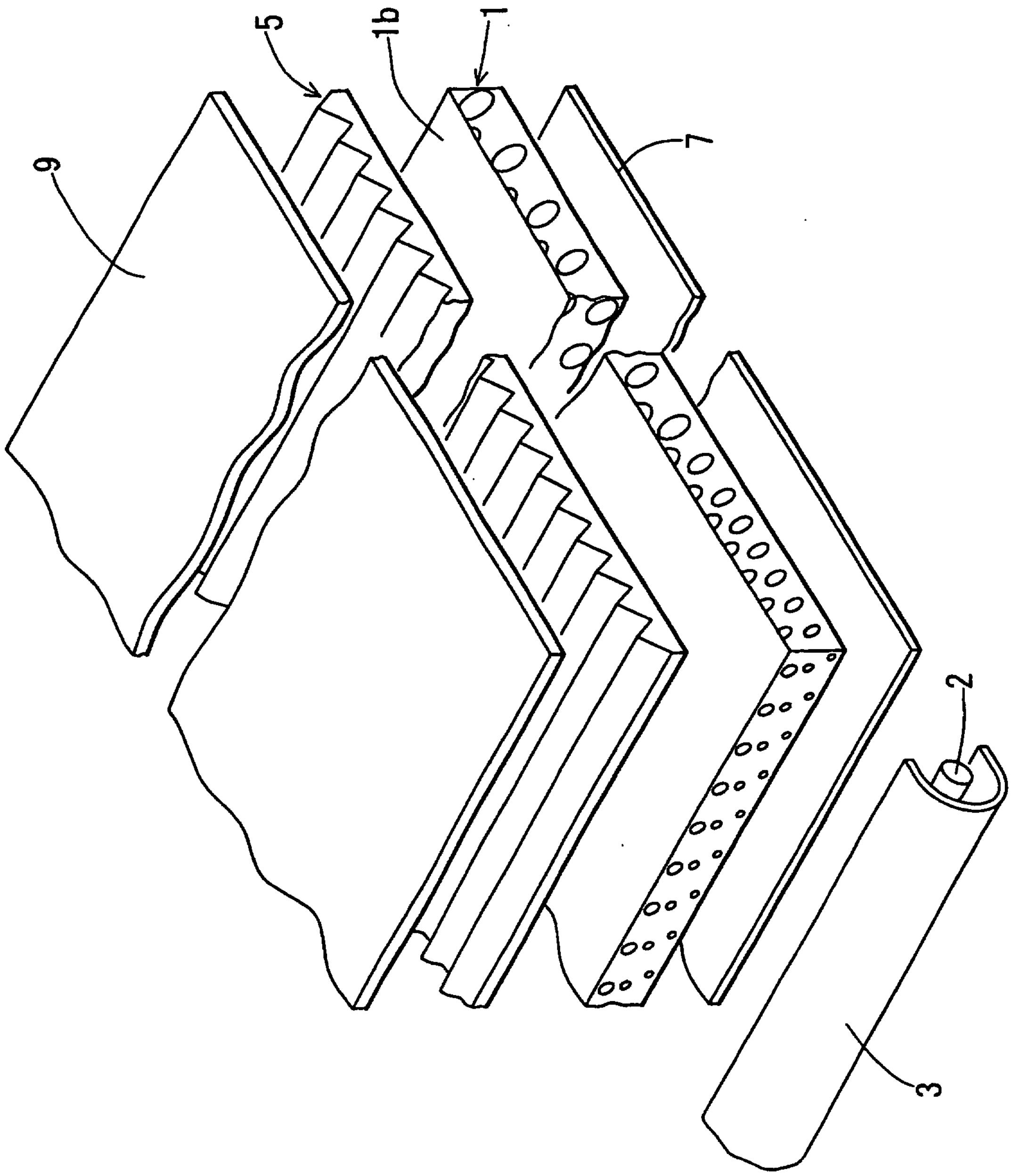

Fig.11

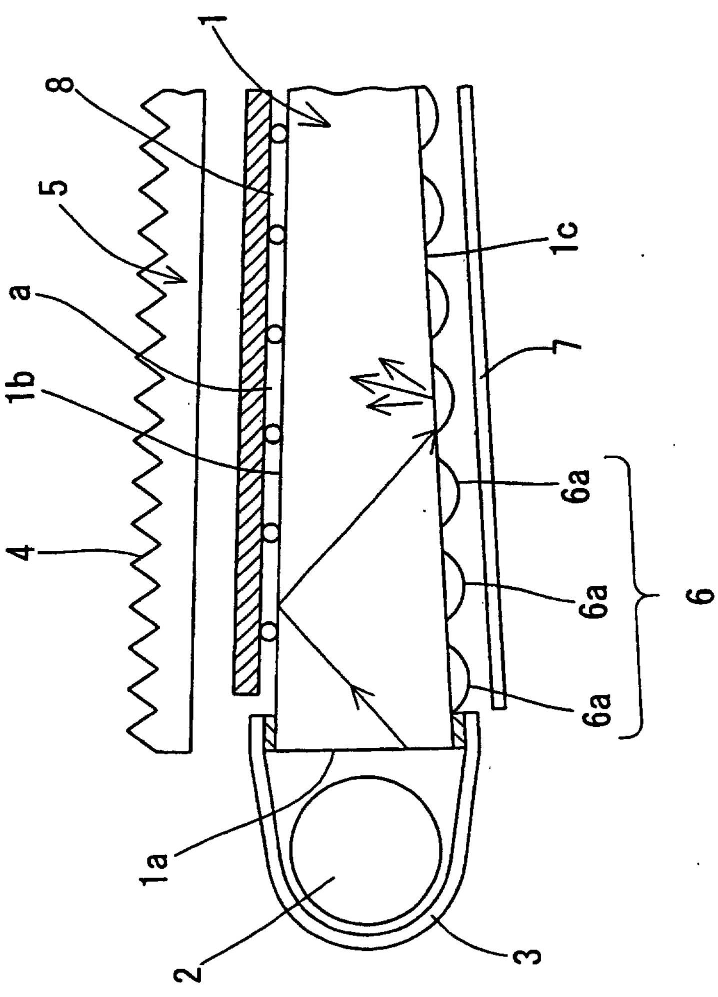

Fig.12

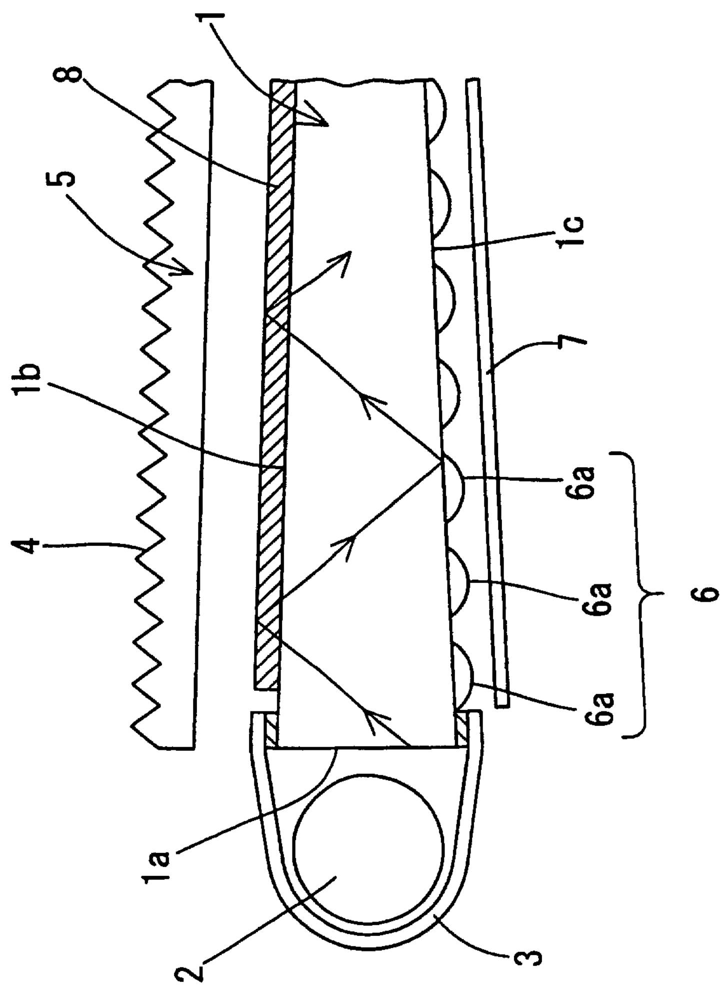

Fig. 13

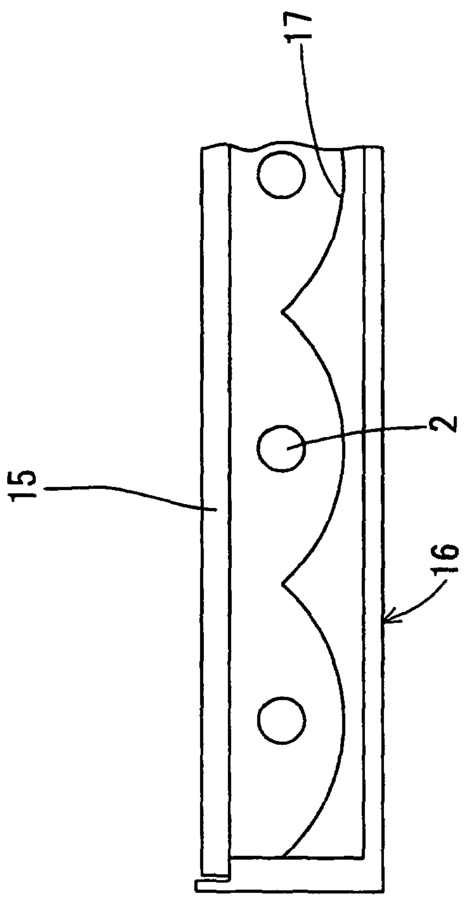

Fig.14

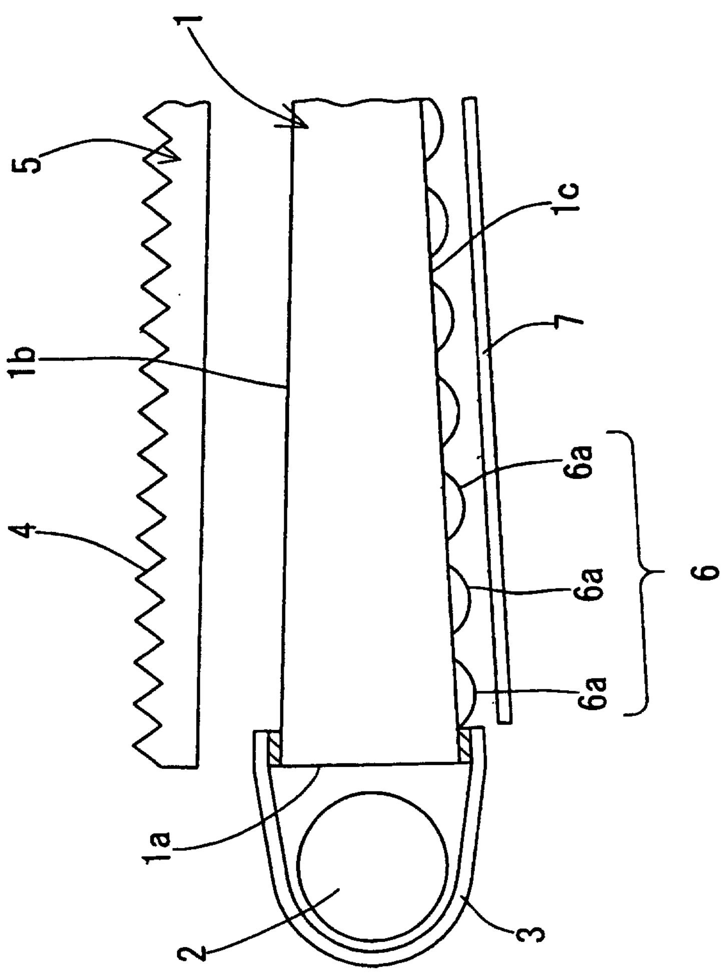

Fig.15

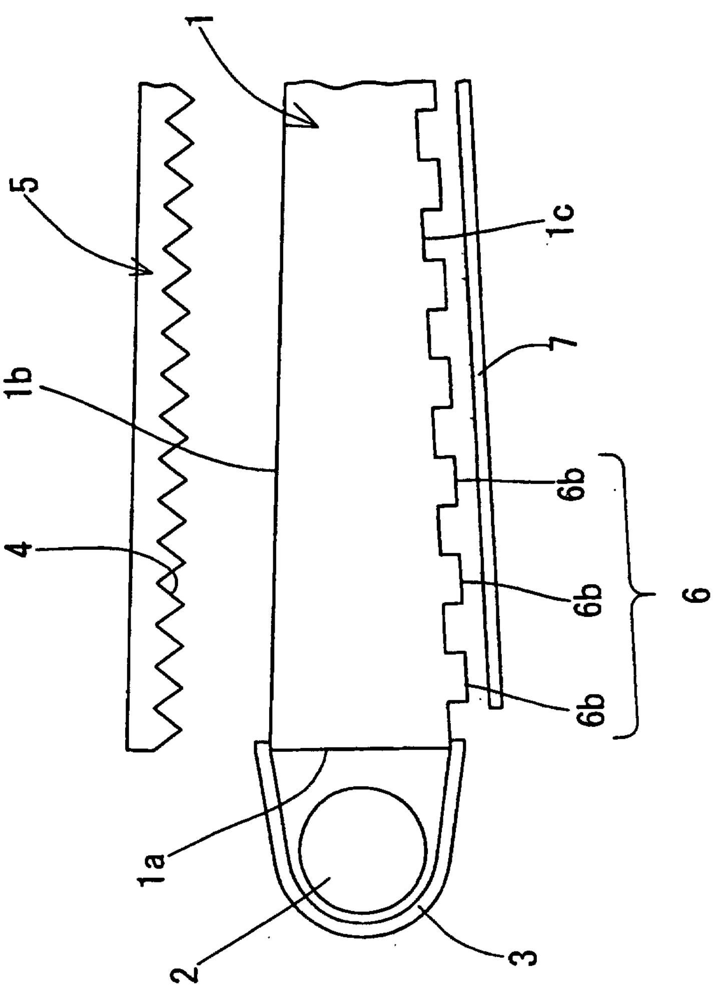

Fig.16

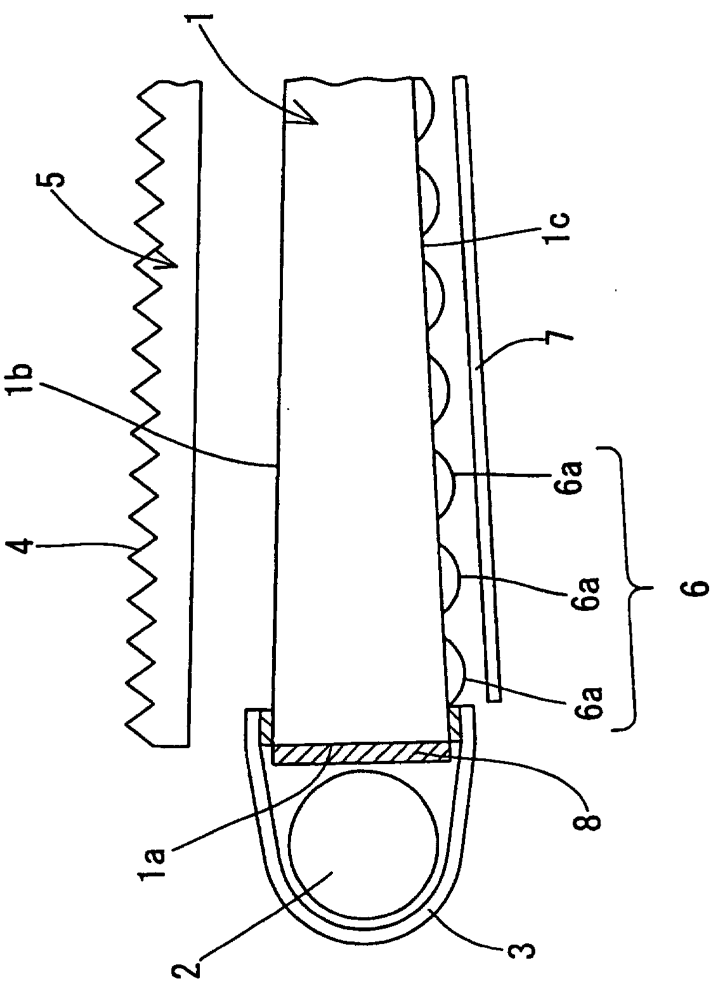

Fig.17

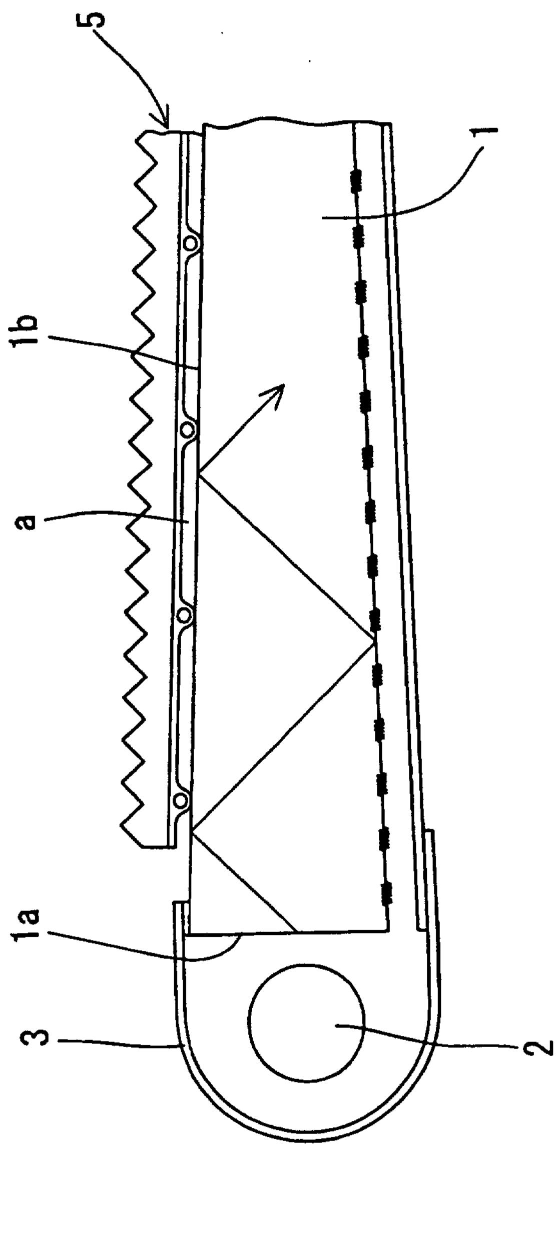

Fig.18

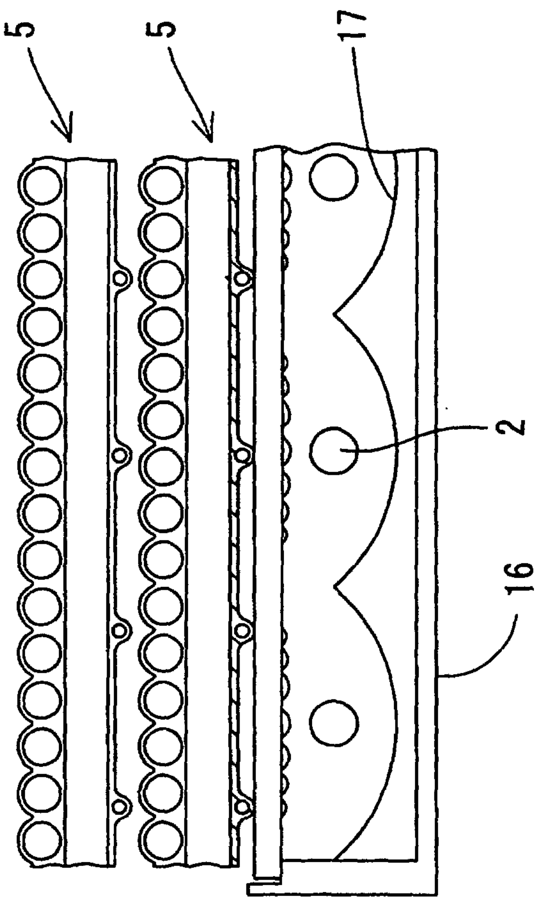

Fig.19

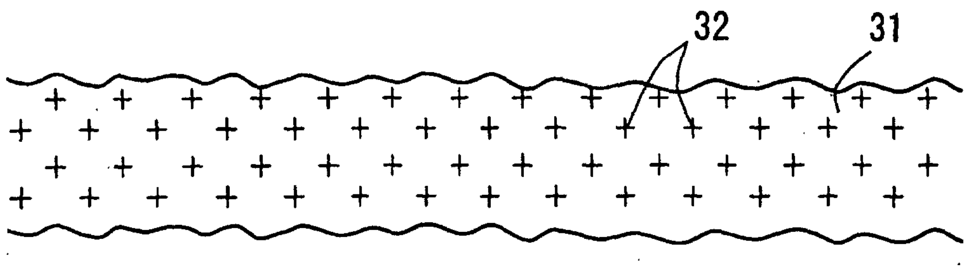


Fig.20

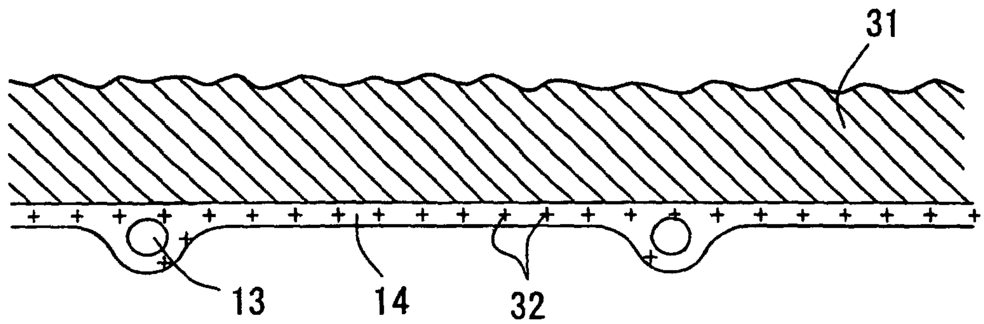


Fig.21

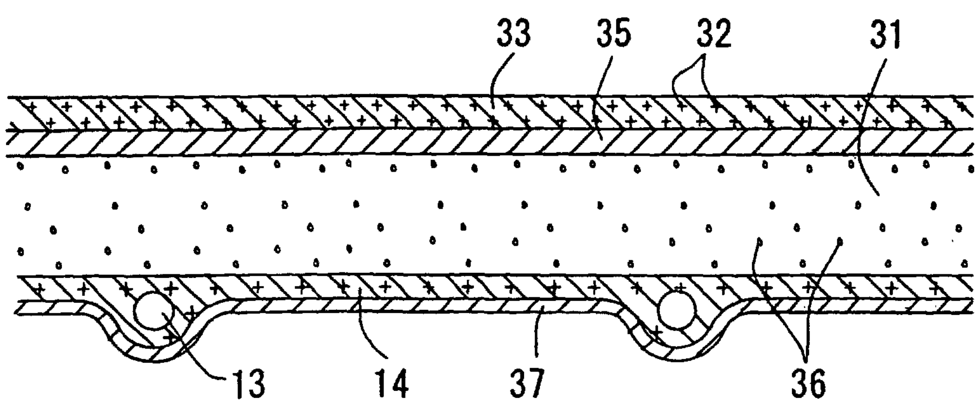

Fig.22

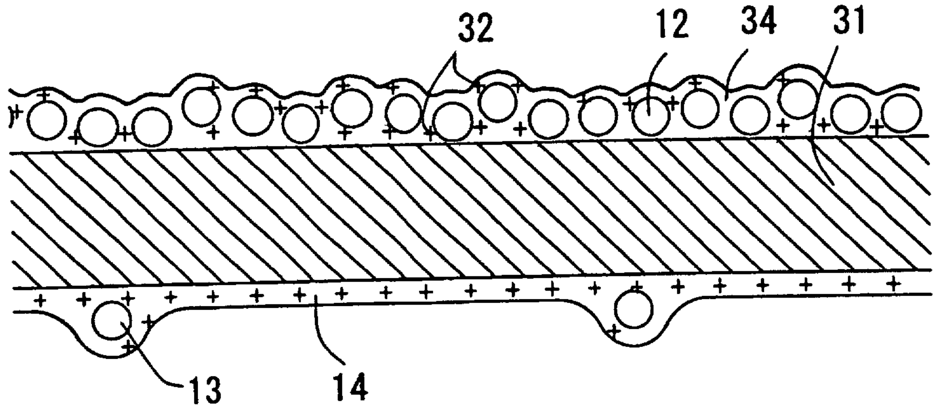


Fig.23

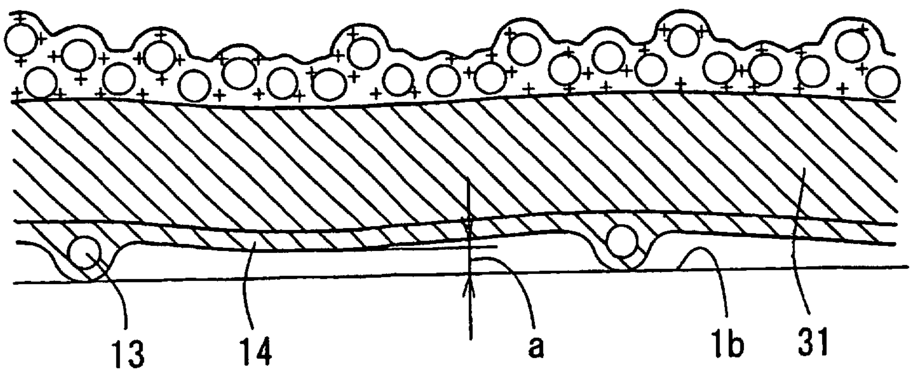

Fig.24

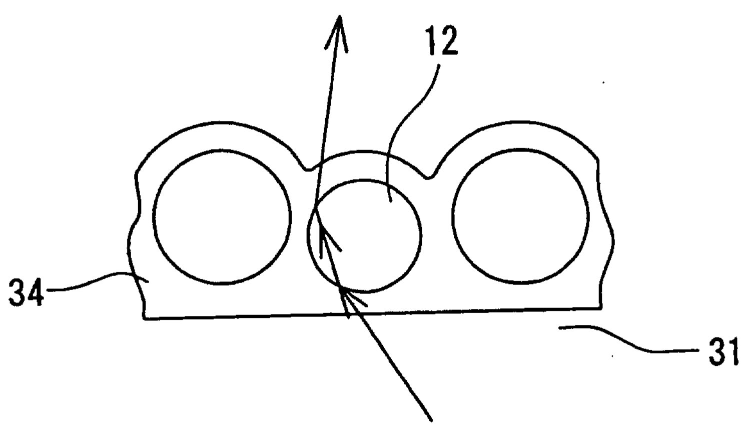

Fig.25

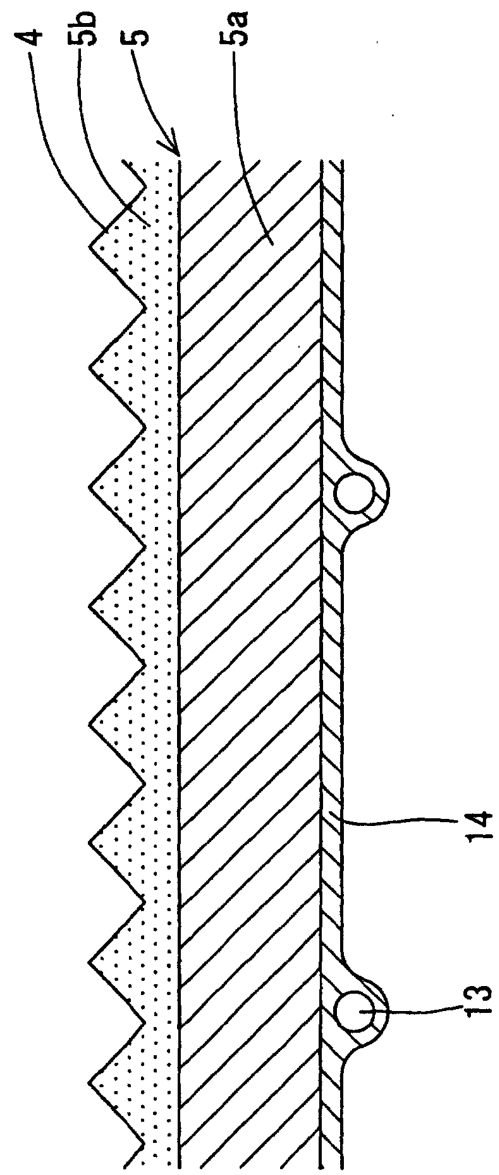

Fig.26

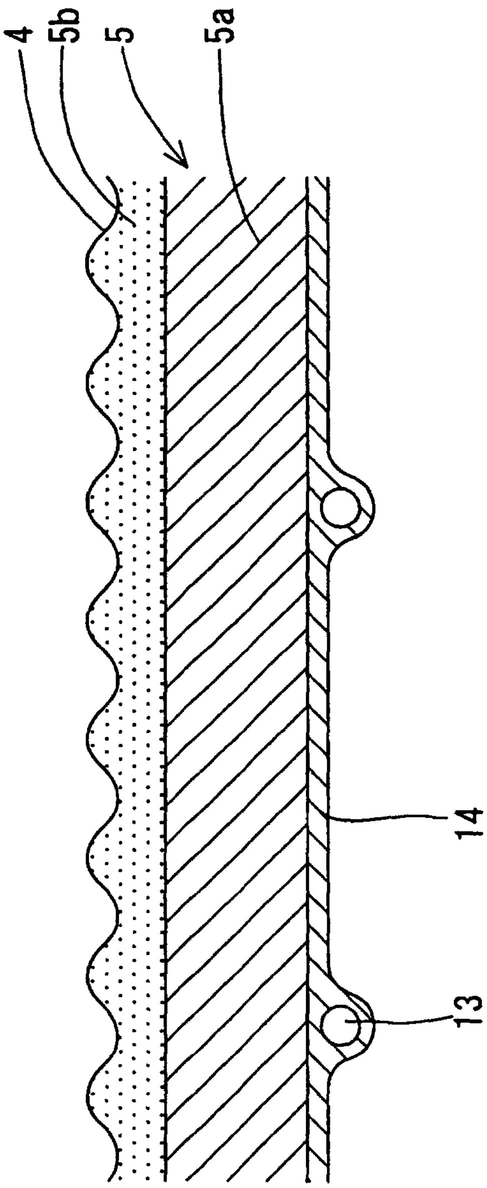

Fig.27

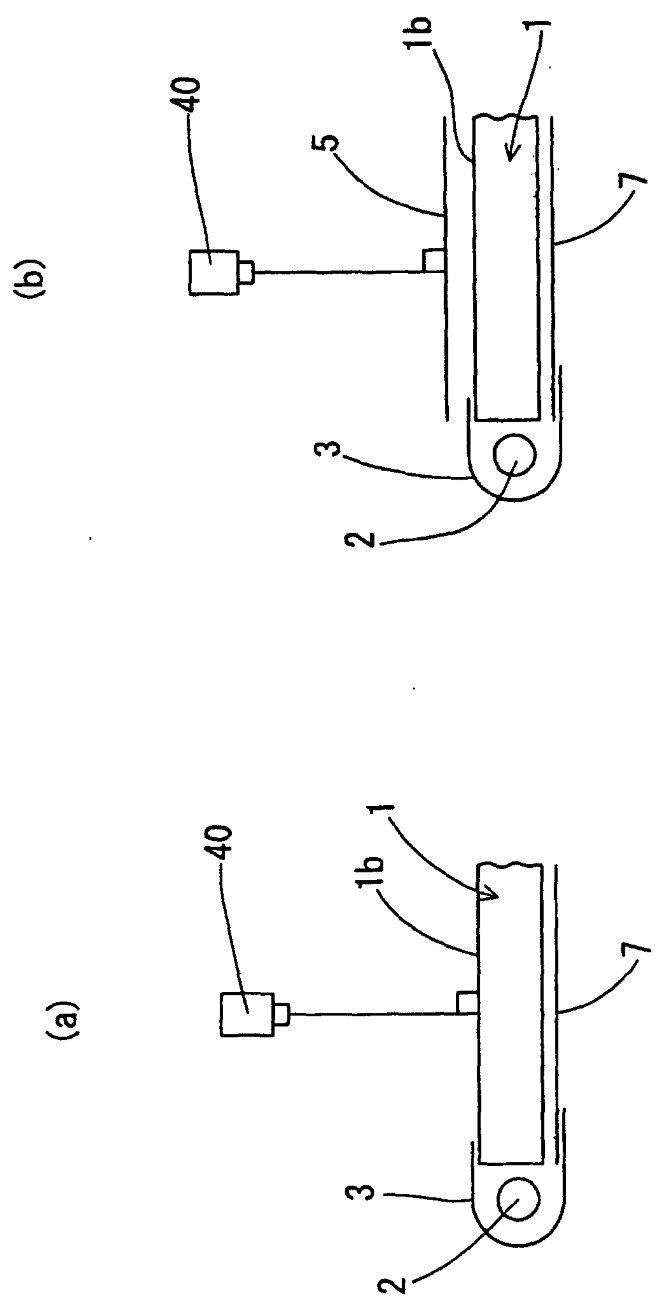

Fig.28

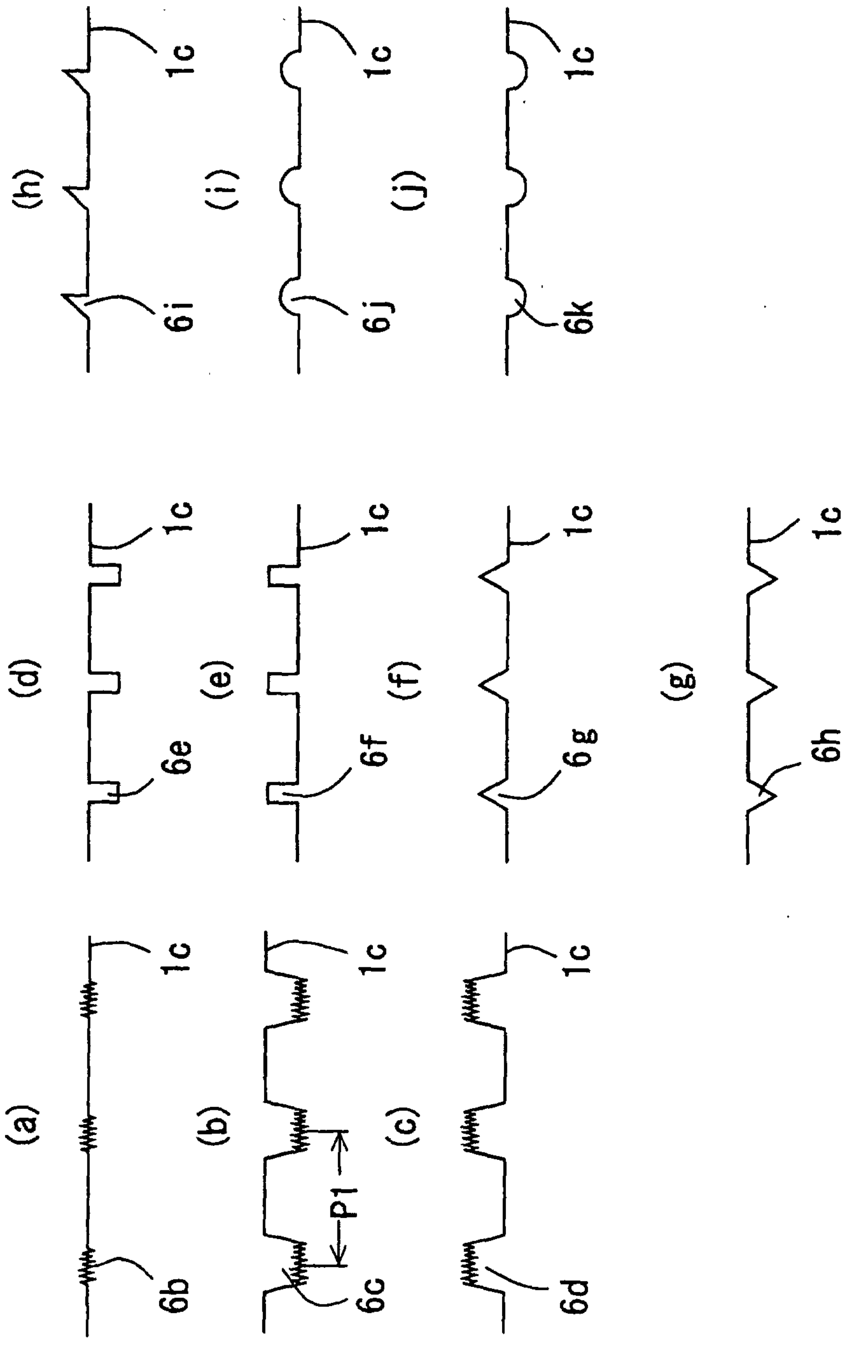

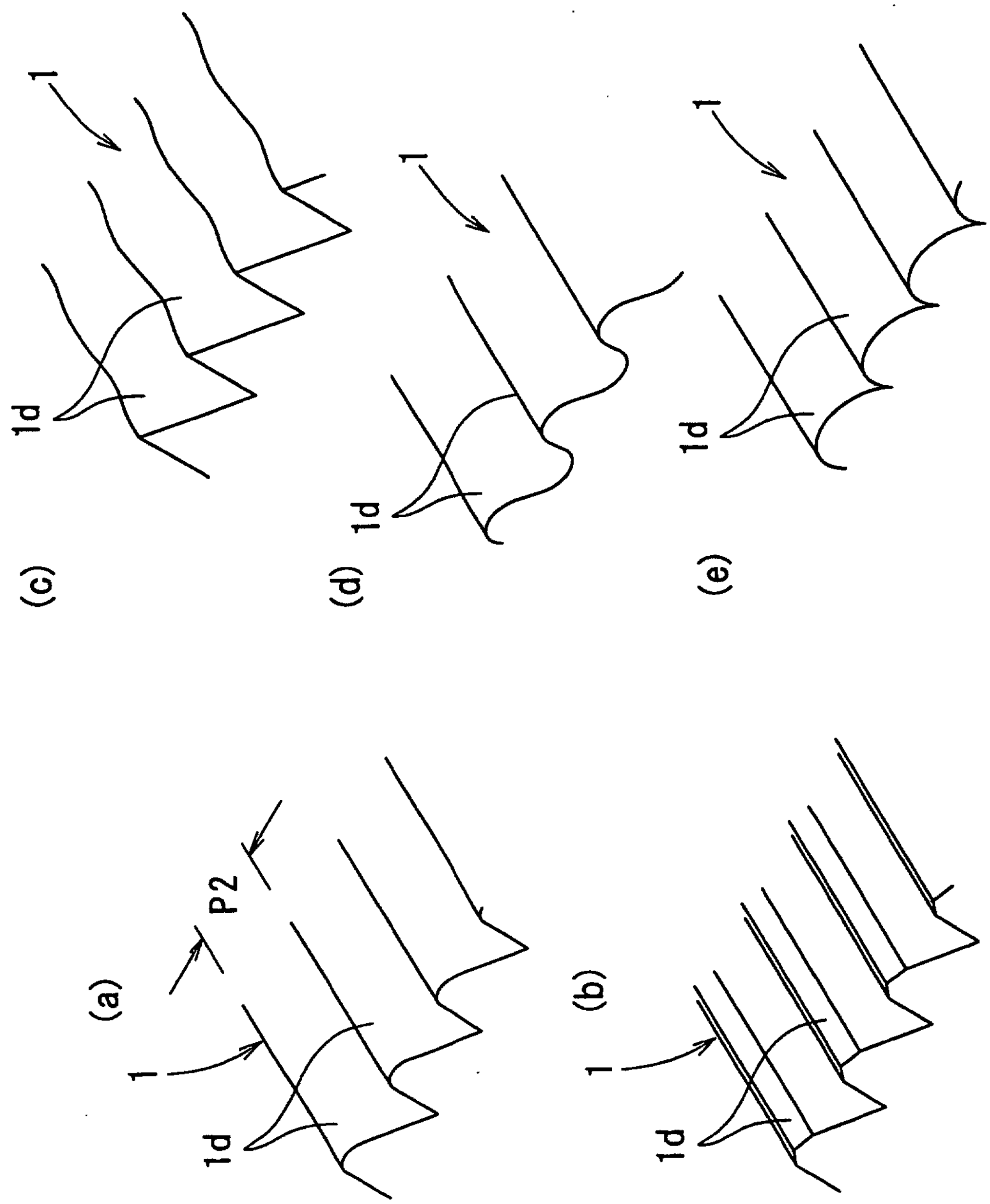

Fig.29

Fig.30

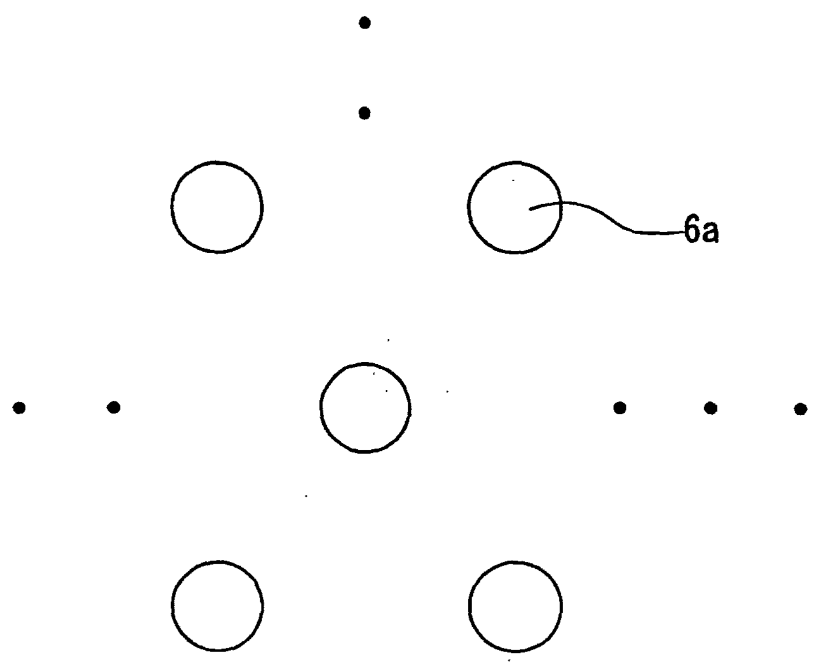

Fig.31

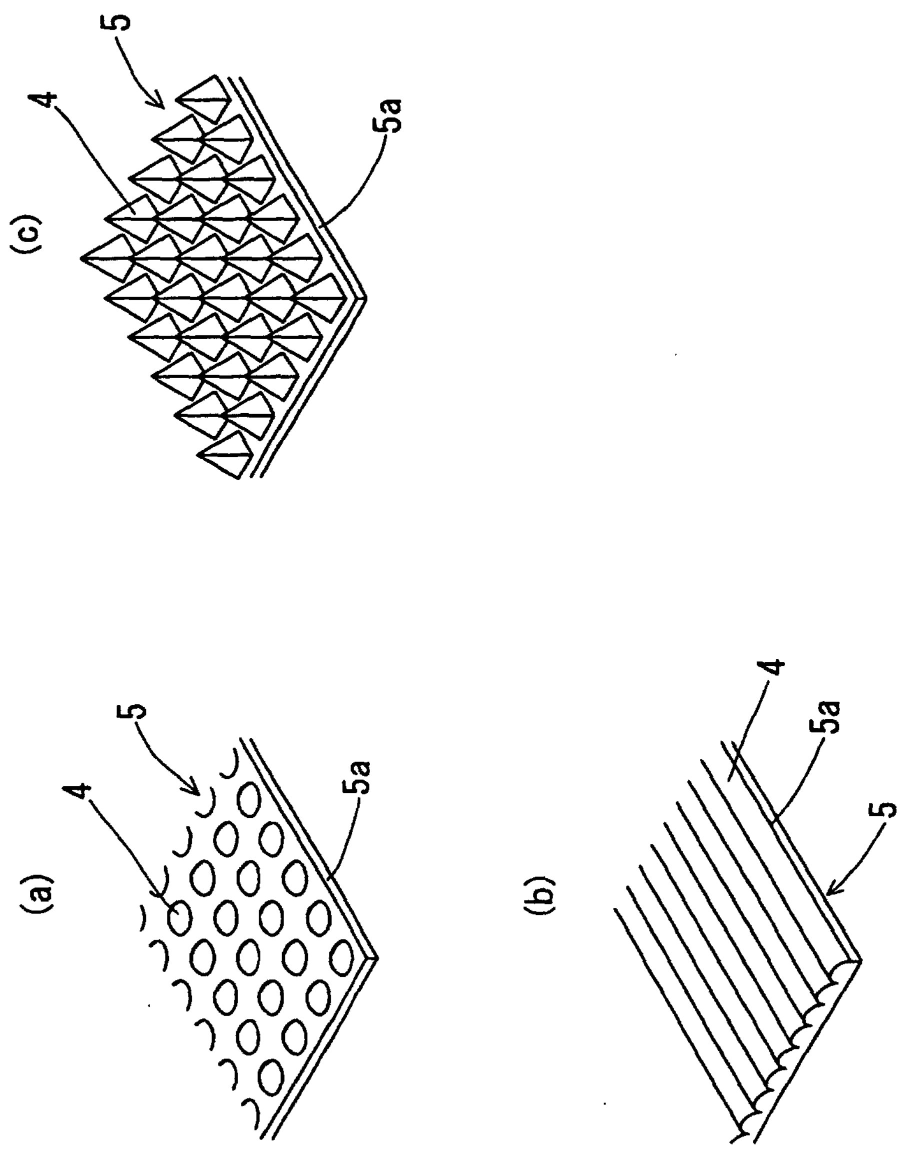

Fig.32

(a)

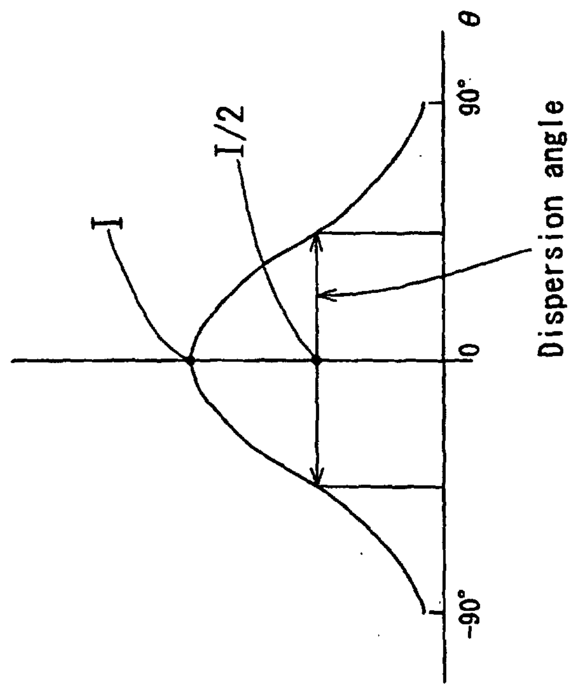


(b)

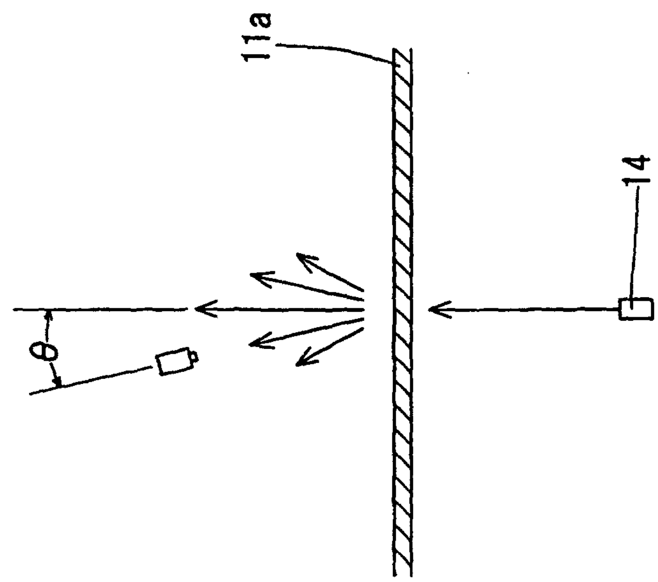

Fig.33

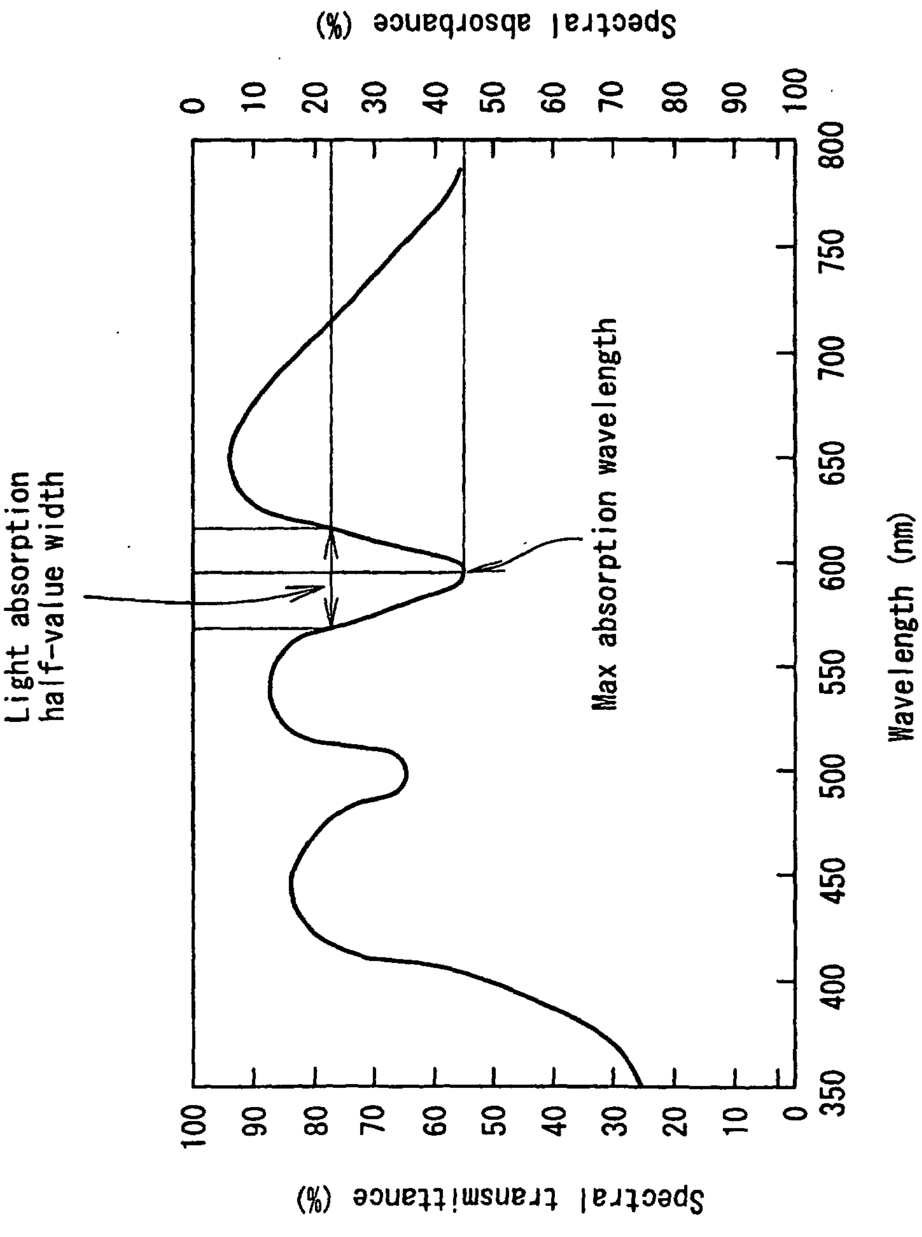
Light absorption half-value width
Max absorption wavelength
Spectral absorbance (%)
Spectral transmittance (%)
Wavelength (nm)
0
10
20
30
40
50
60
70
80
90
100
350
400
450
500
550
600
650
700
750
800

Fig.34

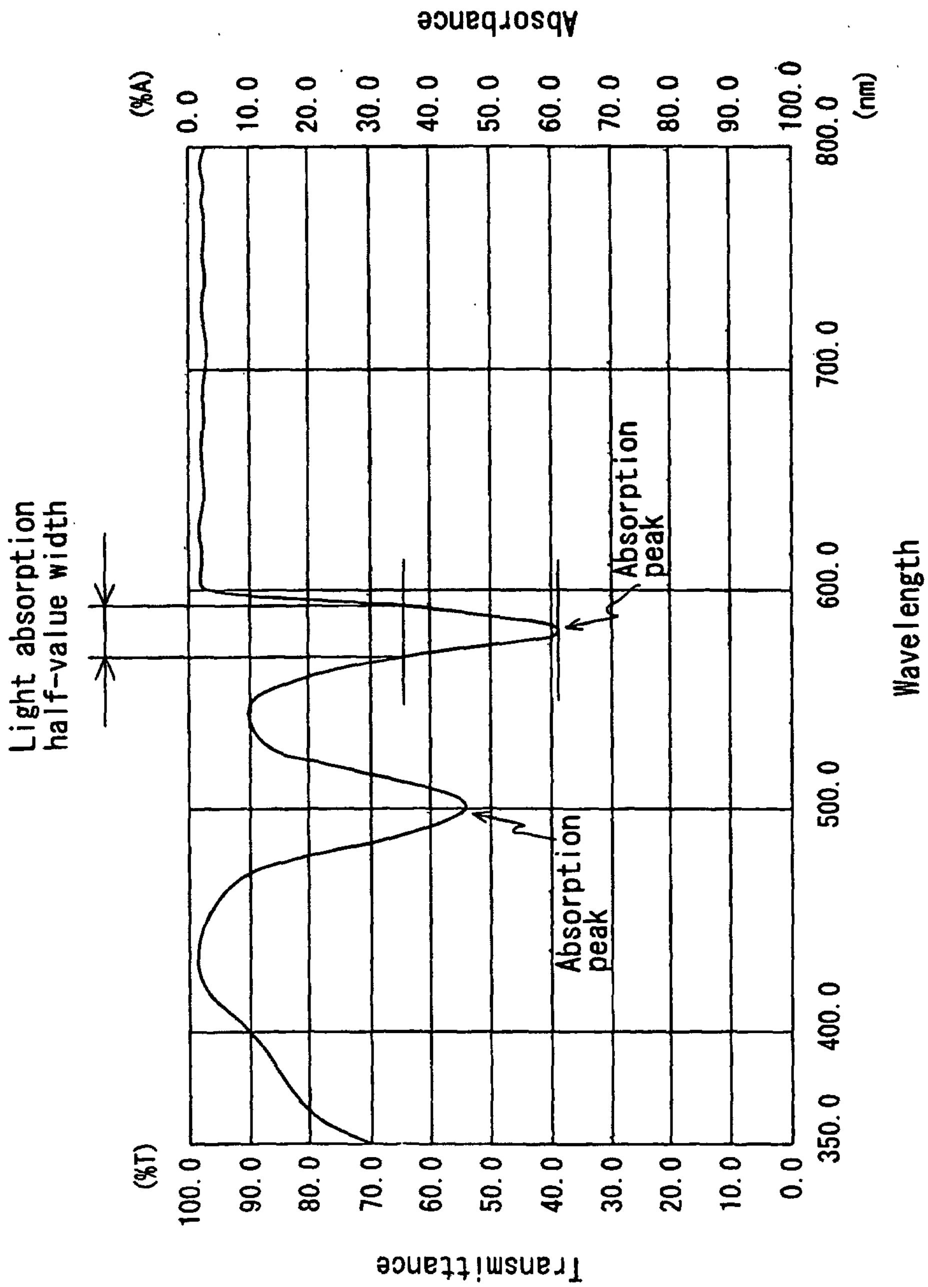
Light absorption half-value width
Absorption peak
Absorption peak
Absorbance
(%A)
0.0
10.0
20.0
30.0
40.0
50.0
60.0
70.0
80.0
90.0
100.0
Transmittance
(%T)
100.0
90.0
80.0
70.0
60.0
50.0
40.0
30.0
20.0
10.0
0.0
350.0
400.0
500.0
600.0
700.0
800.0
(nm)
Wavelength

Fig.35

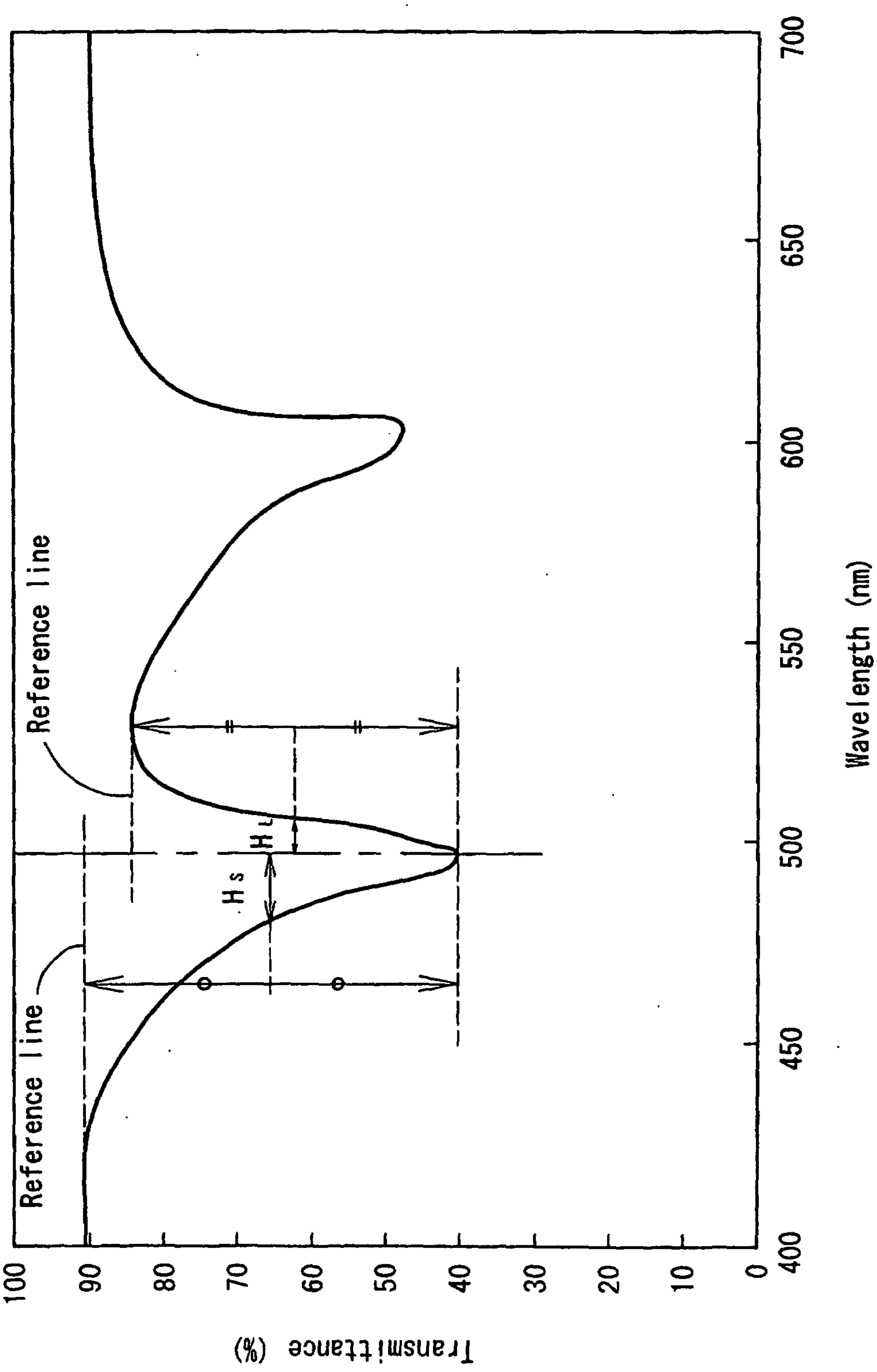
Reference line
Reference line
Hs
HL
Transmittance (%)
100
90
80
70
60
50
40
30
20
10
0
400
450
500
550
600
650
700
Wavelength (nm)

Fig.36

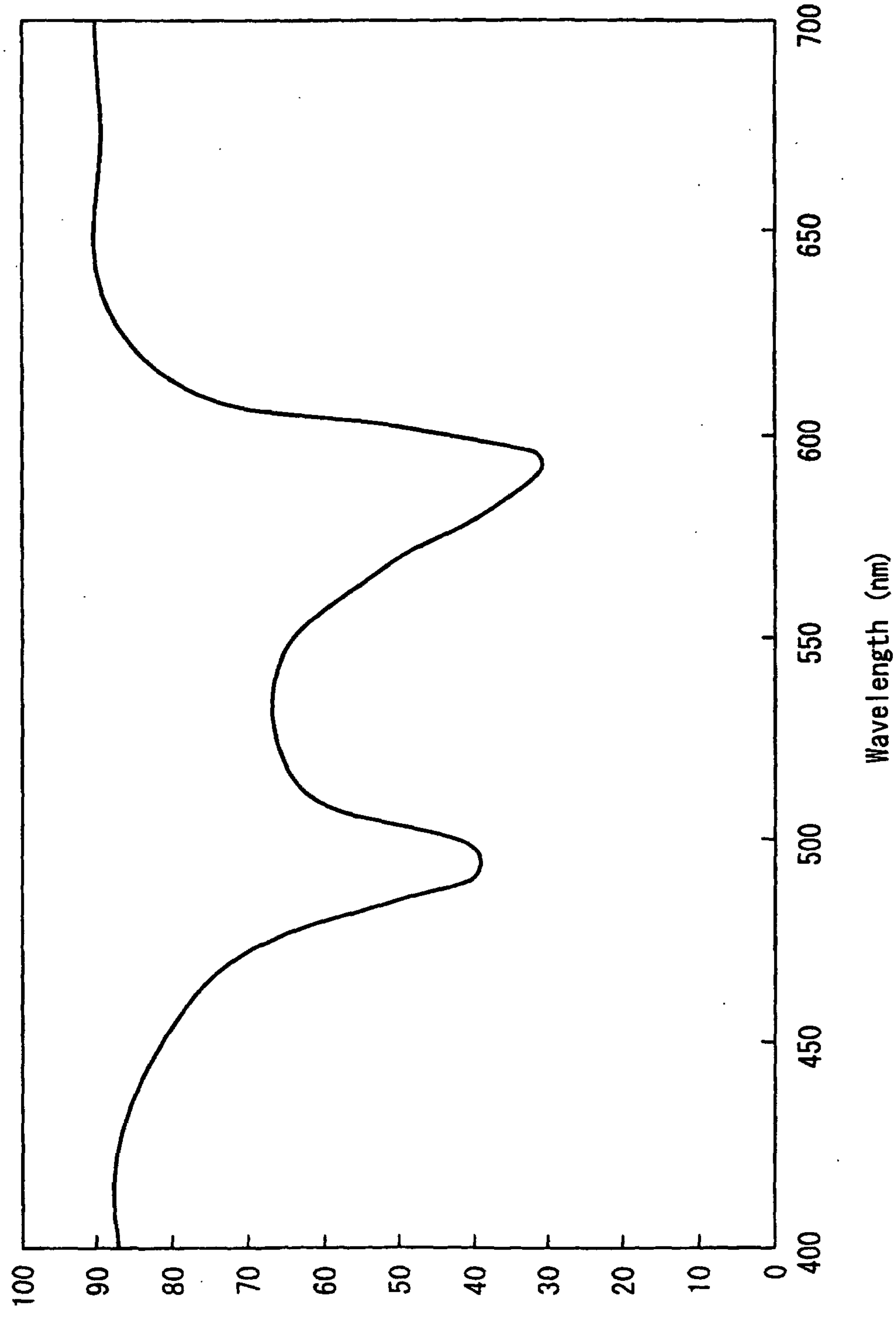
Transmittance (%)
100
90
80
70
60
50
40
30
20
10
0
400
450
500
550
600
650
700
Wavelength (nm)

Fig.37

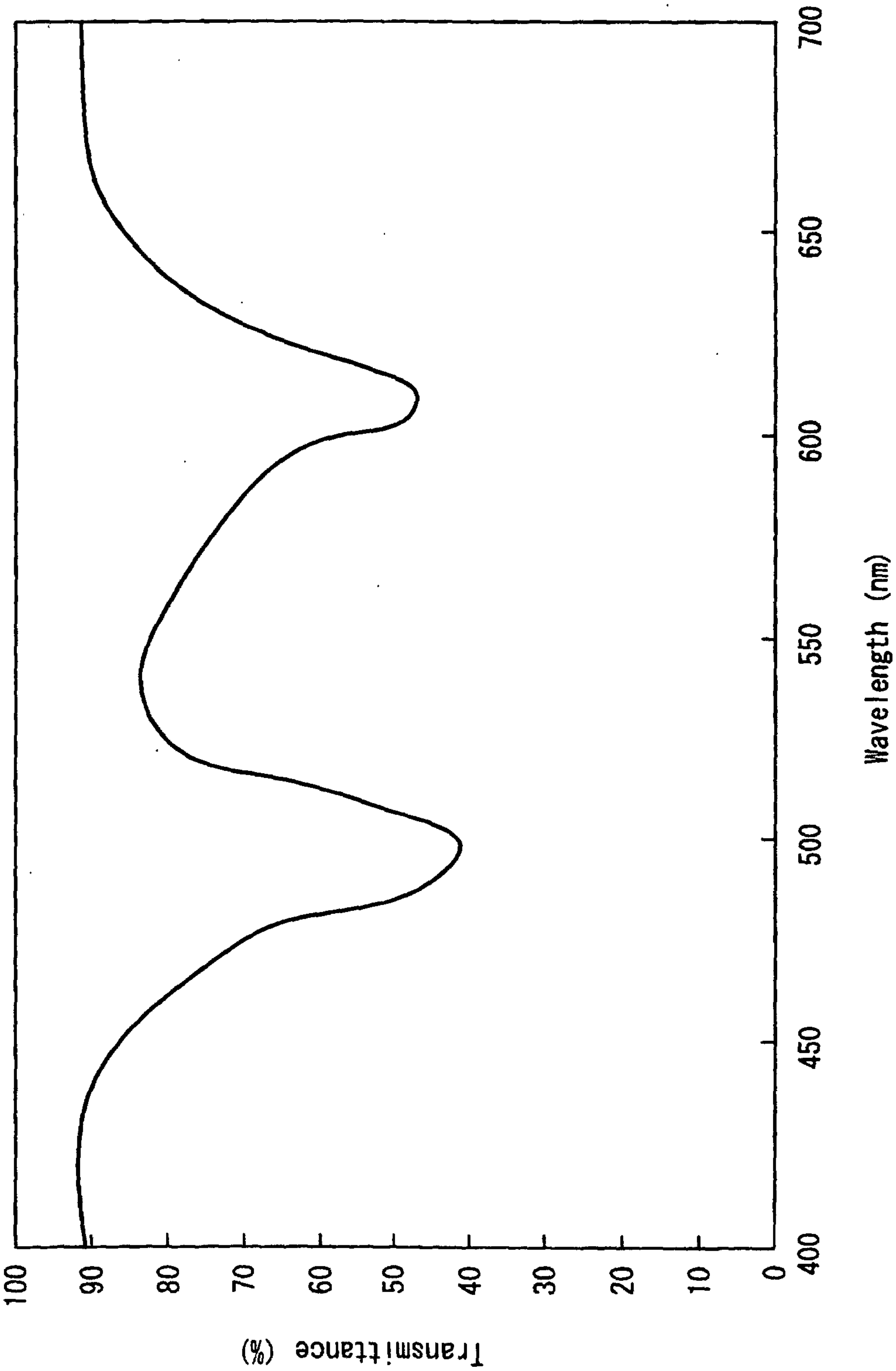
Transmittance (%)
100
90
80
70
60
50
40
30
20
10
0
400
450
500
550
600
650
700
Wavelength (nm)

Fig.38

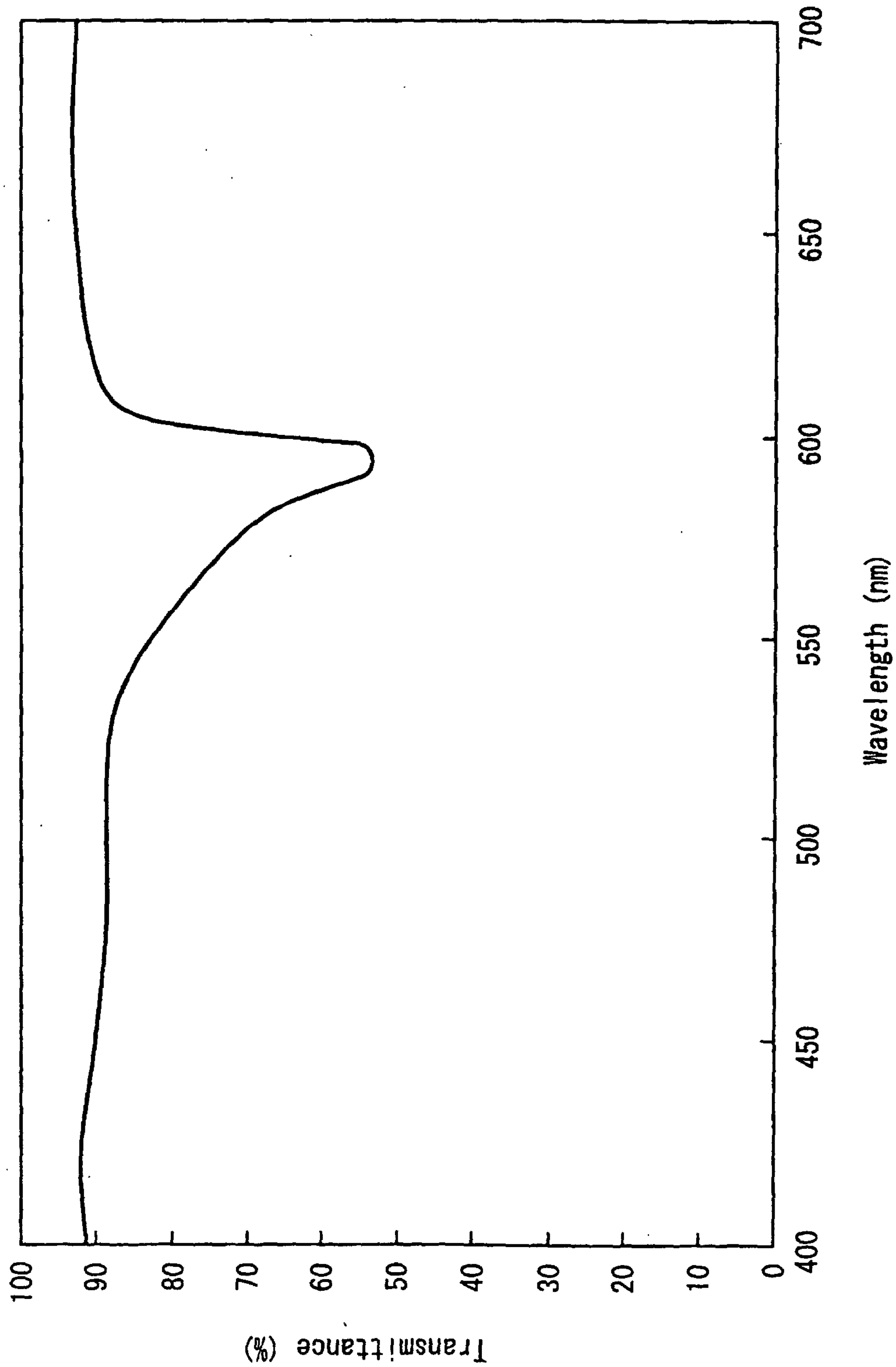
Transmittance (%)
100
90
80
70
60
50
40
30
20
10
0
400
450
500
550
600
650
700
Wavelength (nm)

Fig.39

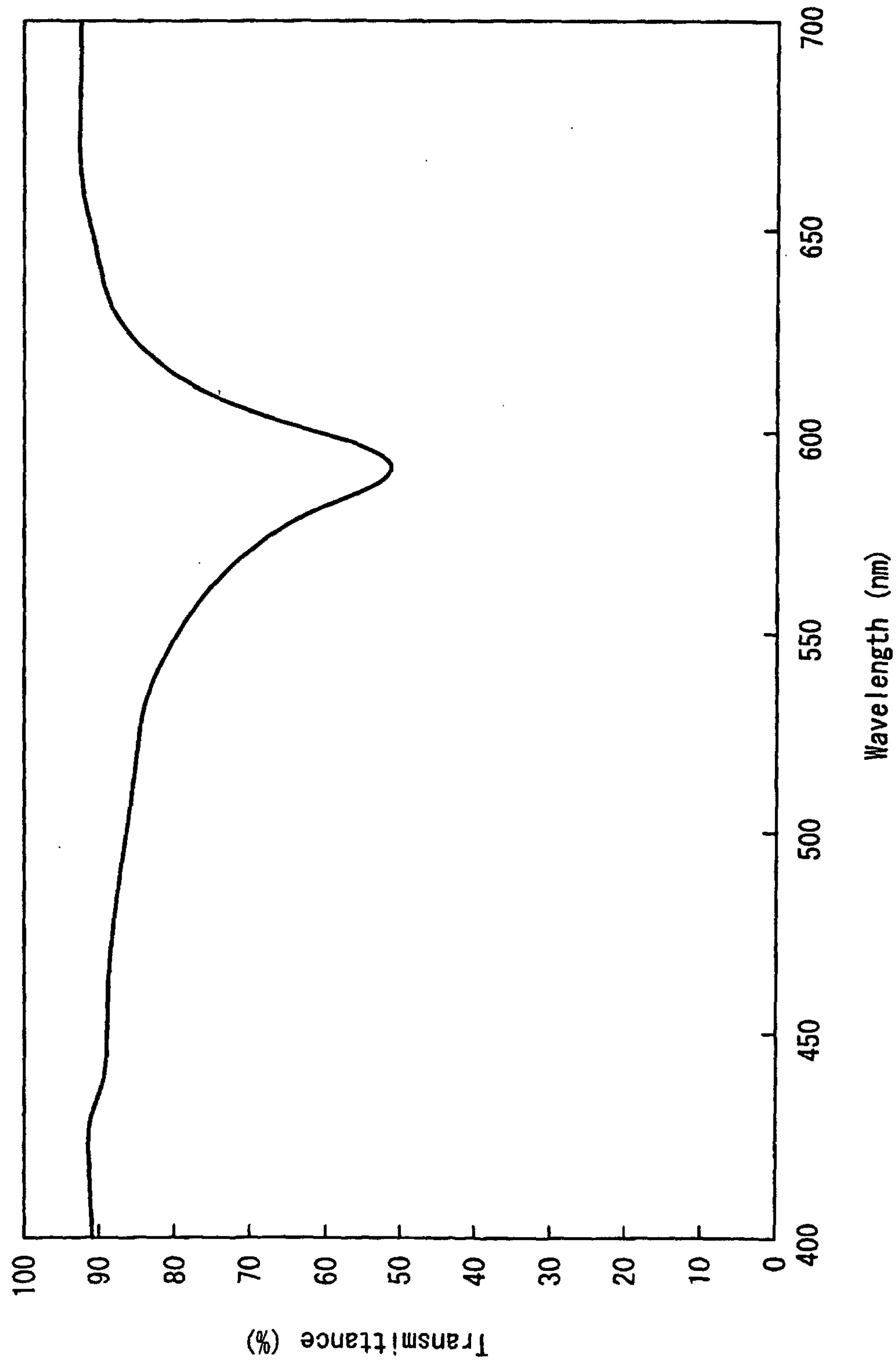
Transmittance (%)
100
90
80
70
60
50
40
30
20
10
0
400
450
500
550
600
650
700
Wavelength (nm)

Fig.40

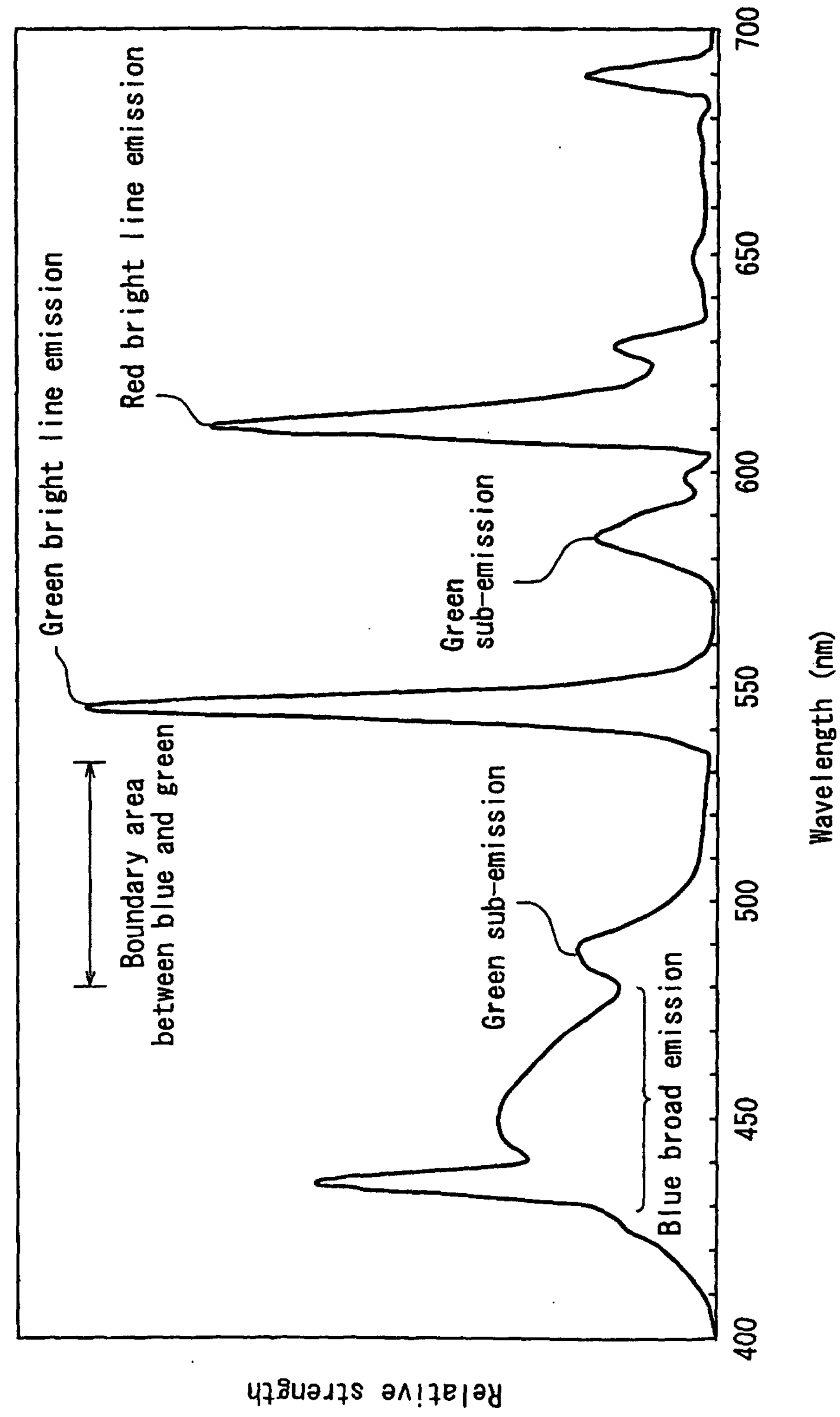
Green bright line emission
Red bright line emission
Green sub-emission
Boundary area between blue and green
Green sub-emission
Blue broad emission
400
450
500
550
600
650
700
Wavelength (nm)
Relative strength

Fig.41

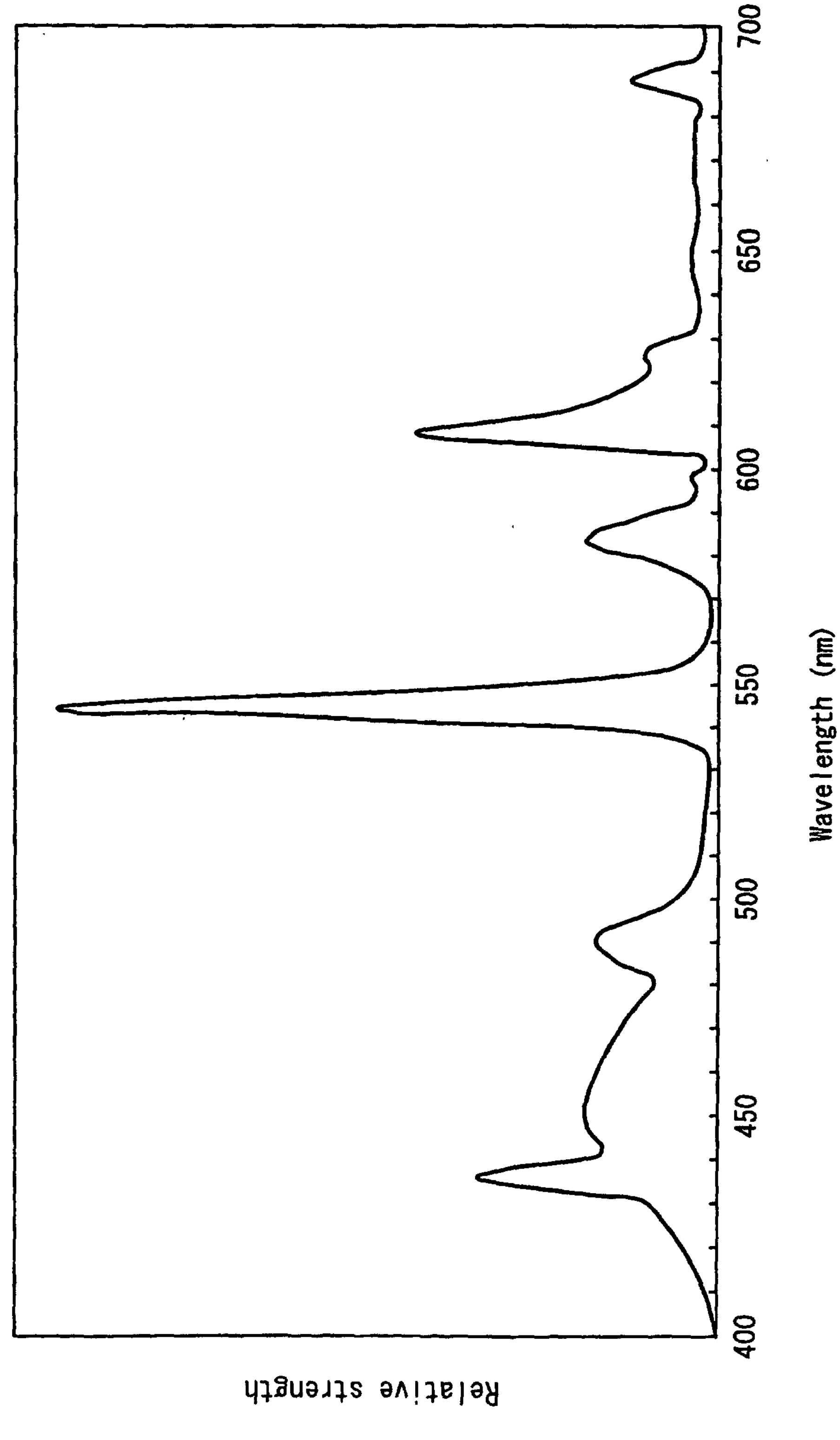

Fig.42

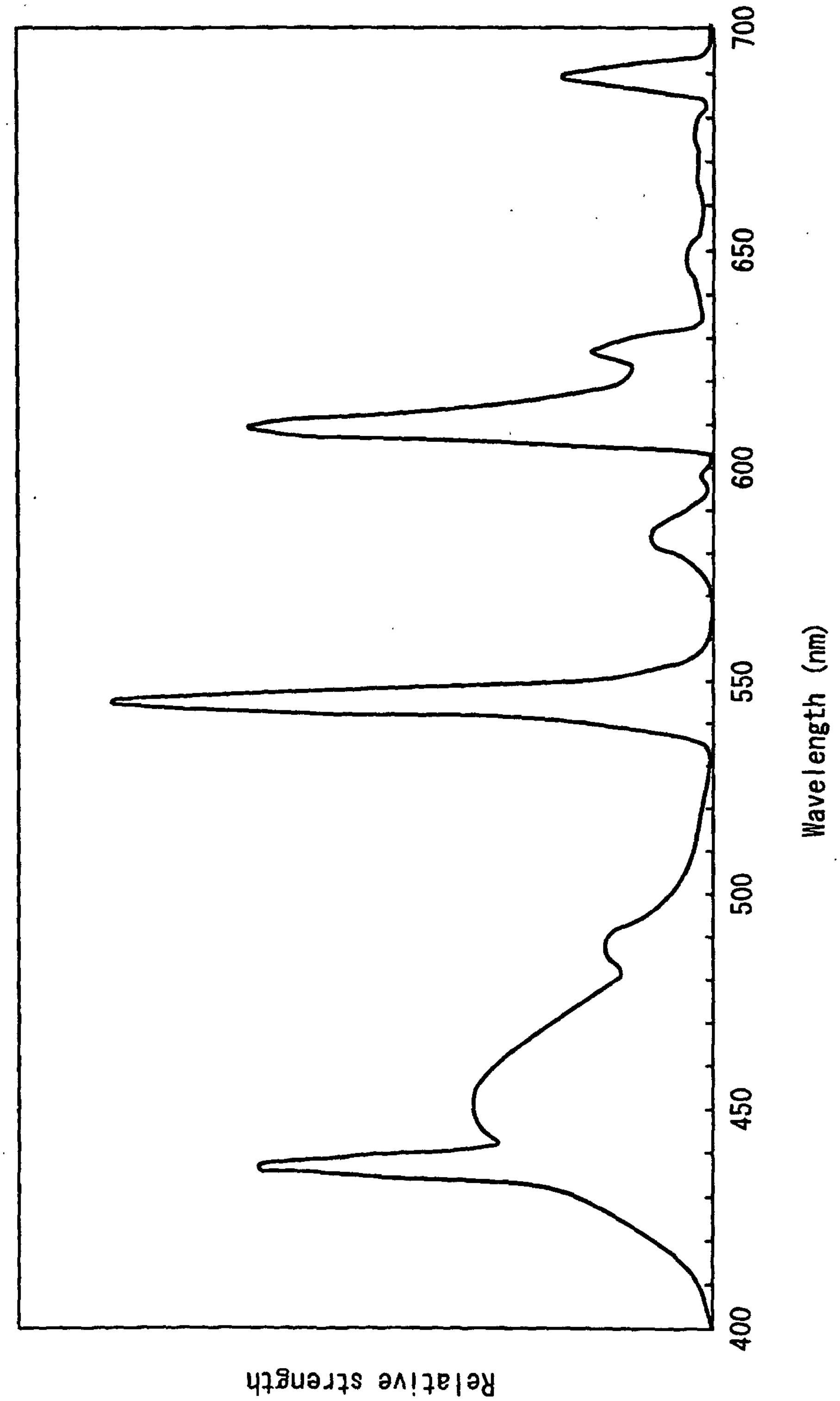

Fig.43

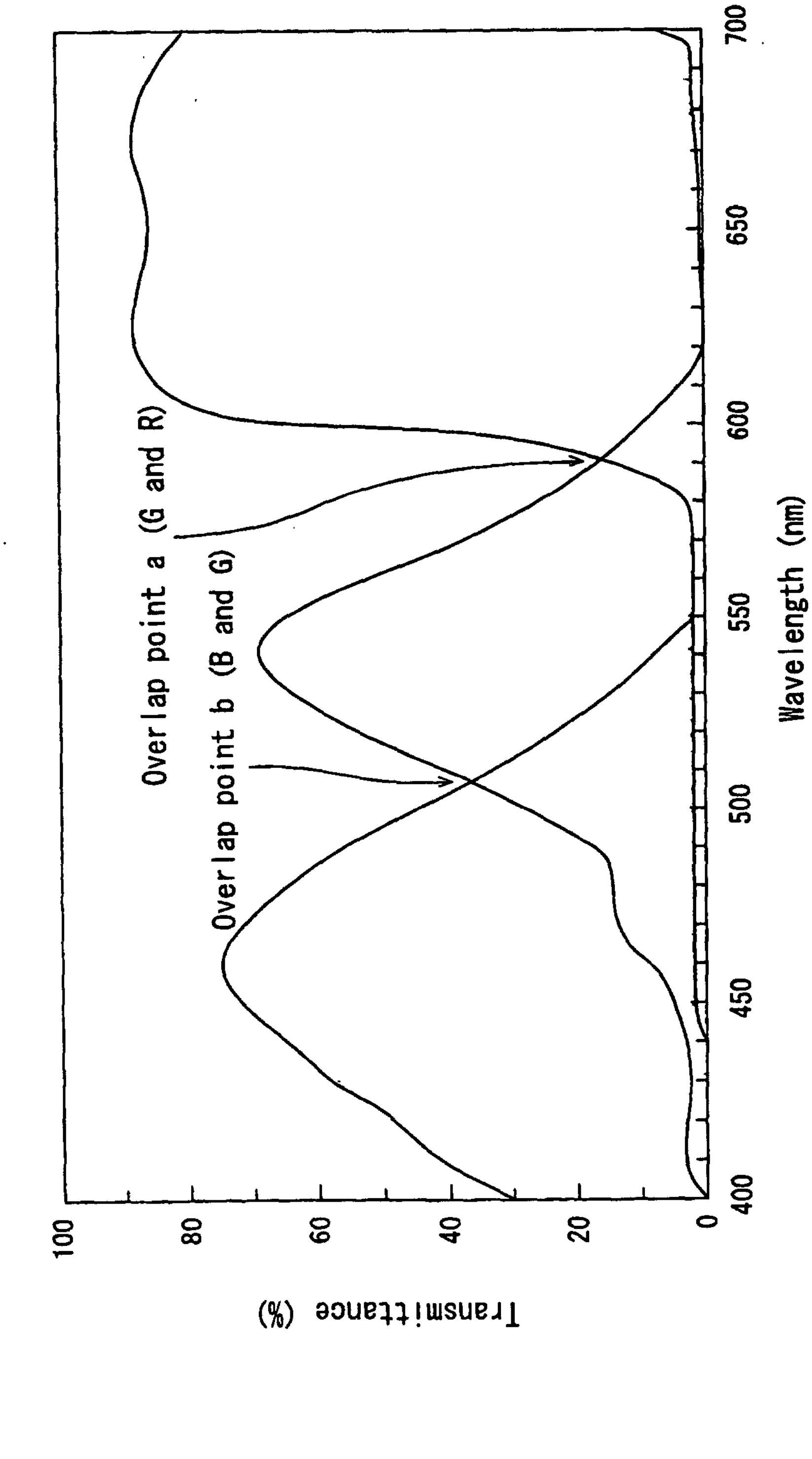


Transmittance curve of ordinary pigment distribution type color filter

Fig.44

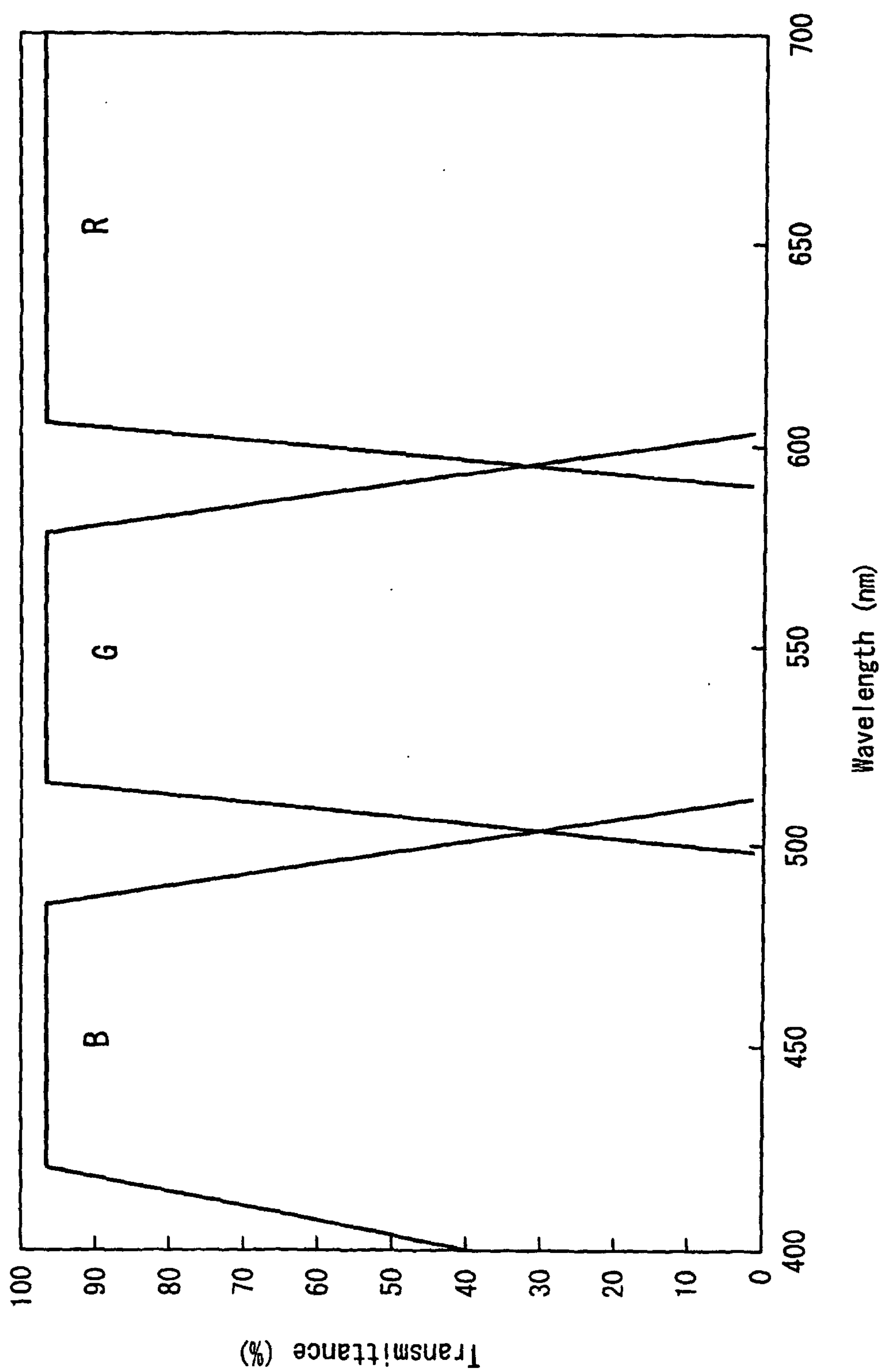
Transmittance (%)
100
90
80
70
60
50
40
30
20
10
0
400
450
500
550
600
650
700
Wavelength (nm)
B
G
R

# INTERNATIONAL SEARCH REPORT

International application No.
PCT/JP02/11323

A. CLASSIFICATION OF SUBJECT MATTER
Int.Cl$^7$ G09F9/00, G09F9/30, F21V8/00, G02F1/1335, G02B5/20, G02B5/22, G02B5/30, G02B1/11, G02B5/02, G02B3/00

According to International Patent Classification (IPC) or to both national classification and IPC

B. FIELDS SEARCHED

Minimum documentation searched (classification system followed by classification symbols)
Int.Cl$^7$ G09F9/00, G09F9/30, F21V8/00, G02F1/1335, G02B5/20, G02B5/22, G02B5/30, G02B1/11, G02B5/02, G02B3/00

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2001-124920 A (Toppan Printing Co., Ltd.), 11 May, 2001 (11.05.01), Full text; Figs. 1 to 9 (Family: none) | 1 |
| Y | JP 2000-105541 A (Sumitomo Chemical Co., Ltd.), 11 April, 2000 (11.04.00), Page 3, left column, line 36 to page 4, right column, line 9 & EP 977060 A2 | 1 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 January, 2003 (27.01.03) | 12 February, 2003 (12.02.03) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP02/11323

**Box I Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

The technical feature common to the independent claims 1, 3, 6, 9, 10, and 11 is only the use of a light absorption member in the display apparatus. This feature is not novel since it is disclosed in JP 2000-105541 A (Sumitomo Chemical Co., Ltd.), 2000.04.11 and JP2000-193820 A (Fuji Photo Film Co., Ltd.), 2000.07.14. As a result, the feature makes no contribution over the prior art and cannot be a special technical feature within the meaning of PCT Rule 13.2, second sentence.

(Continued to extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1

**Remark on Protest** ☐ The additional search fees were accompanied by the applicant's protest.
☐ No protest accompanied the payment of additional search fees.

Form PCT/ISA/210 (continuation of first sheet (1)) (July 1998)

**INTERNATIONAL SEARCH REPORT**

International application No.
PCT/JP02/11323

Continuation of Box No.II of continuation of first sheet(1)

The technical feature common to independent claims 1 and 11 is a display apparatus having a color filter in which the light absorption peak of the light absorption member in the visible light region is within a range of ± 30nm from the overlap point in the spectral transmittance characteristic (hereinafter, referred to as a common feature). However, JP2001-124920 A (Toppan Printing Co., Ltd.), 2001.05.11 (hereinafter, referred to as document 1) discloses a liquid crystal display apparatus having a color filter and a hologram film (27) for cutting off a particular wavelength with an object for solving the problem of non-rectangular transmittance characteristic of the color filter. The common feature is only replacement of the hologram film (27) disclosed in document 1 with a known light absorption member and the setting of the peak of the wavelength of the light to be cut off within a range of ± 30 nm can easily be through of for those skilled in the art judging from the object of document 1. Accordingly, the common feature has no explicit feature contributing over the prior art and cannot be a special technical feature within the meaning of PCT Rule 13.2, second sentence.

Since claims 2 and 12 refer to claim 1, the technical feature common to claims 1, 2, and 12 is the feature of claim 1. However, this feature is not a special technical feature in the same way as the aforementioned independent claims 1 and 11.

Since claims 13 and 63 refer to claim 12, the technical feature common to claims 12, 13, and 63 is the feature of claim 12. However, this feature is not a special technical feature in the same way as the aforementioned independent claims 1 and 11 (document 1 discloses that the hologram film (27) is arranged nearer to the light source than to the color filter).

Since claims 4, 5, 14-16, 18, 21, 25-29, and 32 refer to claim 3, the technical feature common to 3-5, 14-16, 18, 21, 25-29, and 32 is the feature of claim 3. However, JP 2000-193820 A (Fuji Photo Film Co., Ltd.), 2000.07.14 (especially, see Fig. 2) discloses an optical filter for a display apparatus having a peak at about 520 nm and 590 nm and in which $H_S > H_L$. The peak of about 520 nm is a wavelength substantially in the middle between G and B while the peak of about 590 nm is a wavelength substantially in the middle between R and G. Accordingly, the technical feature of claim 3 makes no contribution over the prior art and cannot be a special technical feature within the meaning of PCT Rule 13.2, second sentence.

Since claim 17 refers to claim 16, the technical feature common to claims 16 and 17 is the feature of claim 16. However, this feature is not a special technical feature in the same way as the aforementioned claims 3-5, 14-16, 18, 21, 25-29, and 32.

Since claim 36 refers to claim 9, the technical feature common to claims 9 and 36 is the feature of claim 9. However, the search has revealed that this feature is not novel since it is disclosed in JP 2001-281442 A (Fuji Photo Film Co., Ltd.), 2001.10.10 (especially see working example 1). As a result, this technical feature makes no contribution over the prior art and cannot be a special technical feature within the meaning of PCT Rule 13.2, second sentence.

(continued to extra sheet)

Form PCT/ISA/210 (extra sheet) (July 1998)

**INTERNATIONAL SEARCH REPORT**

International application No.
PCT/JP02/11323

Continuation of Box No.II of continuation of first sheet(1)

Since claim 33-35 refer to claim 10, the technical feature common to claims 10 and 33-35 is the feature of claim 10. However, the search has revealed that this feature is not novel since it is disclosed in JP 9-101413 A (Seiko Epson Corp.), 1997.034.15 (especially see Fig. 9). As a result, this technical feature makes no contribution over the prior art and cannot be a special technical feature within the meaning of PCT Rule 13.2, second sentence.

There is no special technical feature of PCT Rule 13.2, second sentence in other common features than the feature of claim 17 in claims 17, 19, 20, the feature of claim 21 in claims 21-24, the feature of claim 29 in claims 29-31, the feature of claim 6 in claims 6-8, the feature of claim 36 in claims 36-53, and the feature of claim 11 in claims 11, 54-62, 64, and 65.

The technical relationship described in PCT Rule 13.2 cannot be seen between the following 28 groups of inventions. Consequently, it is obvious that these inventions to not satisfy the requirement of unity of invention.

1. claim 1
2. claim 2
3. claim 3
4. claim 4
5. claim 5
6. claims 6-8
7. claim 9
8. claim 10
9. claims 11, 54-62, 64, and 65
10. claim 12
11. claim 13
12. claim 14
13. claim 15
14. claim 16
15. claims 17, 19, and 20
16. claim 18
17. claims 21-24
18. claim 25
19. claim 26
20. claim 27
21. claim 28
22. claims 29-31
23. claim 32
24. claim 33
25. claim 34
26. claim 35
27. claims 36-53
28. claim 63

Form PCT/ISA/210 (extra sheet) (July 1998)